# EUROPEAN PATENT APPLICATION

(11) **EP 4 761 394 A1**
(43) Date of publication of application: **17.06.2026**
(21) Application number: 24861684.9
(22) Date of filing: 15.07.2024
(51) Int. Cl.: H04W 56/00

(54) **COMMUNICATION METHOD AND APPARATUS**

(30) Priority: 04.09.2023 CN 202311134761; 30.03.2024 CN 202410385996
(71) Applicant: HUAWEI TECHNOLOGIES CO., LTD., Shenzhen 518129 (CN)
(72) Inventor: ZHANG, Yanqing, Shenzhen, Guangdong 518129 (CN); XU, Haibo, Shenzhen, Guangdong 518129 (CN)
(74) Representative: Thun, Clemens
(86) International application number: PCT/CN2024/105511
(87) International publication number: WO 2025/050839

(57) **Abstract**

This application provides a communication method and apparatus, and relates to the field of wireless communication technologies. The method includes: A first entity of a terminal device receives first information from a first data radio bearer DRB. The first information is related to first data, and the first data belongs to the first DRB. The first entity of the terminal device determines first duration based on the first information. The first duration is duration in which transmission of second data is expected to be completed, and the second data belongs to a second DRB. The first duration is used to determine delay information of a status report, and/or the first duration is used to trigger sending of the status report. The first entity is a packet data convergence protocol PDCP entity corresponding to the second DRB, or the first entity is a medium access control MAC entity that processes the second data.

## Description

This application claims priorities to Chinese Patent Application No. 202311134761.1, filed with the China National Intellectual Property Administration on September 4, 2023 and entitled "COMMUNICATION METHOD AND APPARATUS", and to Chinese Patent Application No. 202410385996.6, filed with the China National Intellectual Property Administration on March 30, 2024 and entitled "COMMUNICATION METHOD AND APPARATUS", both of which are incorporated herein by reference in their entireties.

### TECHNICAL FIELD

This application relates to the field of wireless communication technologies, and in particular, to a communication method and apparatus.

### BACKGROUND

Currently, an extended reality (eXtended Reality, XR) service may transmit a plurality of streams of data, such as video data, audio data, and tactile data. When the plurality of streams of data coexist, synchronization between the plurality of streams of data is required. For example, when a user sees a frame of image, audio corresponding to the image also needs to be played within a specific time. Otherwise, audio-to-video asynchronization occurs, affecting user experience.

In a wireless communication system, a terminal device may send a status report to a network device. The status report includes delay information of to-be-transmitted data, so that the network device allocates a transmission resource to the terminal device based on the delay information, thereby implementing uplink scheduling.

However, the status report in the current technology may affect synchronization between the plurality of streams of data.

### SUMMARY

To resolve the foregoing technical problem, this application provides a communication method and apparatus, so that delay information of a status report can trigger the status report more accurately or in a timelier manner, thereby improving a possibility of synchronization between different data.

To achieve the foregoing objective, this application uses the following technical solutions.

According to a first aspect, a communication method is provided. The method may be performed by a first entity of a terminal device, or may be performed by a module (for example, a processor, a chip, or a chip system) used in the first entity. The following uses an example in which the first entity performs the method for description. The method includes: The first entity of the terminal device receives first information from a first data radio bearer DRB. The first information is related to first data, and the first data belongs to the first DRB. The first entity of the terminal device determines first duration based on the first information. The first duration is duration in which transmission of second data is expected to be completed, and the second data belongs to a second DRB. The first duration is used to determine delay information of a status report, and/or the first duration is used to trigger sending of the status report.

For example, the first entity is a packet data convergence protocol PDCP entity corresponding to the second DRB.

For another example, the first entity is a medium access control MAC entity that processes the second data.

In this application, that the first information is related to the first data may be understood as that the first data can trigger sending of the first information.

In this application, that the first duration is the duration in which transmission of the second data is expected to be completed may be understood as that if transmission of the second data is completed in the first duration, the first data is synchronized with the second data.

That is, the first information is referred to in a process of determining, by the first entity of the terminal device, the duration (that is, the first duration) in which transmission of the second data is expected to be completed. Because the first information is related to the first data in the first DRB, the first duration determined based on the first information considers the first data, avoiding a transmission delay of considering only single data (that is, the second data), and laying a foundation for synchronization between the first data and the second data.

For example, when the first duration is used to determine the delay information of the status report, because the first duration is duration with reference to a synchronization requirement between the first data and the second data, the delay information also considers the synchronization requirement of the second data, thereby improving accuracy of the delay information, and implementing synchronization between the first data and the second data.

For another example, when the first duration is used to trigger sending of the status report, because the first duration is duration with reference to a synchronization requirement between the first data and the second data, triggering of the status report also considers the synchronization requirement of the second data, thereby improving accuracy of triggering the status report, and implementing synchronization between the first data and the second data.

In a possible design, the first information indicates second duration or a first moment. A start moment of the second duration is a moment at which the first data arrives at a packet data convergence protocol PDCP entity corresponding to the first DRB, and the first moment is an end moment of the second duration. The second duration is used to determine the first duration.

In this application, the second duration may be understood as follows: When the first data arrives at the PDCP entity corresponding to the first DRB, if the second data arrives at a PDCP entity corresponding to the second DRB, and transmission of the second data is completed in the second duration, the first data is synchronized with the second data.

In this application, the first moment may be understood as follows: When the first data arrives at the PDCP entity corresponding to the first DRB, if the second data arrives at a PDCP entity corresponding to the second DRB, and transmission of the second data is completed before the first moment, the first data is synchronized with the second data.

That is, the first information can represent a synchronization requirement of the second data.

In a possible design, that the first entity of the terminal device determines the first duration based on the first information includes: The first entity determines duration of a first timer based on the first information. A start moment of the first timer is a second moment, and the second moment is a moment at which the second data arrives at the terminal device. For example, the second moment described in this specification is a moment at which the second data arrives at a PDCP entity corresponding to the second DRB. An end moment of the first timer is the first moment. The first entity determines the first duration based on the duration of the first timer. A start moment of the first duration is the second moment, and an end moment of the first duration is the end moment of the first timer.

That is, the first entity updates the duration of the first timer based on the first information, and then determines the first duration based on the duration of the first timer. The second duration or the first moment indicated by the first information can meet a synchronization requirement of the second data. Therefore, the duration of the first timer determined based on the first information is duration that considers a synchronization requirement between the first data and the second data. When the first duration is determined based on the duration of the first timer, if transmission of the second data is completed in the first duration, synchronization between the first data and the second data can be implemented.

In a possible design, the method further includes: The first entity starts a second timer in response to receiving of the first information.

That the first entity determines the first duration based on the first information includes: determining the first duration based on a value of the second timer. An end moment of the second timer is the first moment. A start moment of the first duration is a second moment, the second moment is a moment at which the second data arrives at a PDCP entity corresponding to the second DRB, and an end moment of the first duration is the end moment of the second timer.

That is, the first entity starts the second timer in response to receiving of the first information, and then determines the first duration based on the value of the second timer. The second duration or the first moment indicated by the first information can meet a synchronization requirement of the second data. Therefore, the second timer is started based on the first information, and duration of the second timer is duration that considers the synchronization requirement between the first data and the second data. When the first duration is determined based on the value of the second timer, if transmission of the second data is completed in the first duration, synchronization between the first data and the second data can be implemented.

In a possible design, that the first entity of the terminal device determines the first duration based on the first information includes: determining the first duration based on the first information and second information, where the second information indicates a moment at which the second data is discarded.

That is, in a process of determining the first duration by the first entity, both the first information and the second information are referred to. When the first information is used to determine the first duration, the second duration or the first moment indicated by the first information can meet a synchronization requirement of the second data. Therefore, when the first duration is determined based on the first information, if transmission of the second data is completed in the first duration, synchronization between the first data and the second data can be implemented. In addition, when the second information is used to determine the first duration, the moment indicated by the second information can enable the first entity to learn of a transmission delay requirement of the second data. Therefore, when the first duration is determined based on the second information, if transmission of the second data is completed in the first duration, the transmission delay requirement of the second data can be met.

In a possible design, the second information is from a network device.

That is, the moment indicated by the second information is configured by the network device.

In a possible design, a start moment of the first duration is a second moment, and the second moment is a moment at which the second data arrives at a PDCP entity corresponding to the second DRB.

When the first moment is earlier than the discard moment, an end moment of the first duration is the first moment; or when the discard moment is earlier than or equal to the first moment, an end moment of the first duration is the discard moment. It may be understood that the end moment of the first duration is an earlier moment of the first moment and the discard moment, so as to meet a synchronization requirement and a transmission delay requirement of the second data.

In a possible design, that the first entity of the terminal device determines the first duration based on the first information and the second information includes: The first entity determines duration of a first timer based on the first information and the second information. A start moment of the first timer is a second moment, and the second moment is a moment at which the second data arrives at a PDCP entity corresponding to the second DRB; and when the first moment is earlier than the discard moment, an end moment of the first timer is the first moment; or when the discard moment is earlier than or equal to the first moment, an end moment of the first timer is the discard moment. The first entity determines the first duration based on the duration of the first timer. A start moment of the first duration is the second moment, and an end moment of the first duration is the end moment of the first timer.

That is, the first entity updates the duration of the first timer based on the first information and the second information, and then determines the first duration based on the duration of the first timer. The second duration or the first moment indicated by the first information can meet a synchronization requirement of the second data, and the moment indicated by the second information can enable the first entity to learn of a transmission delay requirement of the second data. Therefore, the duration of the first timer determined based on the first information and the second information considers both the synchronization requirement between the first data and the second data, and the transmission delay requirement of the second data. When the first duration is determined based on the duration of the first timer, if transmission of the second data is completed in the first duration, synchronization between the first data and the second data can be implemented, and a transmission delay requirement of the second data can be met.

In a possible design, the method further includes: The first entity of the terminal device starts a second timer in response to receiving of the first information.

That the first entity of the terminal device determines the first duration based on the first information and the second information includes: determining the first duration based on a value of the first timer and a value of the second timer; or determining the first duration based on an end moment of the first timer and an end moment of the second timer. A start moment of the first timer is a second moment, the second moment is a moment at which the second data arrives at a PDCP entity corresponding to the second DRB, and the end moment of the first timer is the discard moment. The end moment of the second timer is the first moment. A start moment of the first duration is the second moment; and when the first moment is earlier than the discard moment, an end moment of the first duration is the end moment of the second timer; or when the discard moment is earlier than or equal to the first moment, an end moment of the first duration is the end moment of the first timer.

That is, the first entity starts the second timer in response to receiving of the first information, and then determines the first duration based on the value of the first timer and the value of the second timer, or determines the first duration based on the end moment of the first timer and the end moment of the second timer. Because the second duration or the first moment indicated by the first information can meet a synchronization requirement of the second data, the second timer is started based on the first information, and duration of the second timer is duration that considers the synchronization requirement between the first data and the second data. In addition, the moment indicated by the second information can enable the first entity to learn of a transmission delay requirement of the second data. In this way, the first timer is started based on the second information, and duration of the first timer is duration that considers the transmission delay requirement of the second data. When the first duration is determined based on the value of the first timer and the value of the second timer, or the first duration is determined based on the end moment of the first timer and the end moment of the second timer, if transmission of the second data is completed in the first duration, synchronization between the first data and the second data can be implemented, and a transmission delay requirement of the second data can be met.

In a possible design, a start moment of the second timer is a receiving moment of the first information.

In a possible design, the first timer is a packet discarding timer.

In a possible design, when the first duration is used to determine the delay information of the status report, the method further includes: The terminal device sends the status report through a medium access control MAC entity. The MAC entity is configured to process the second data.

For example, the status report is a delay status report DSR.

Because the first duration is duration with reference to a synchronization requirement between the first data and the second data, the delay information determined based on the first duration also considers the synchronization requirement of the second data. That is, the terminal device can report "delay information considering a synchronization requirement between different data" to the network device. Correspondingly, if the network device schedules a transmission resource for the terminal device based on the delay information, so that transmission of the second data is completed in the first duration, the first data is synchronized with the second data, thereby improving user experience.

In a possible design, the delay information of the status report includes a remaining transmission delay budget, and the remaining transmission delay budget is determined based on the first duration.

In a possible design, a start moment of the remaining transmission delay budget is a sending moment of the status report. An end moment of the remaining transmission delay budget is the end moment of the first duration.

In a possible design, the method further includes: The terminal device receives a first threshold from the network device. That the first duration is used to trigger sending of the status report includes: when the remaining transmission delay budget determined based on the first duration is less than or equal to the first threshold, the first duration is used to trigger sending of the status report, where the remaining transmission delay budget determined based on the first duration is a remaining transmission delay budget of the first data.

Because the first duration is duration with reference to a synchronization requirement between the first data and the second data, the terminal device sends the status report to the network device in time when the remaining transmission delay budget determined based on the first duration is less than or equal to the first threshold. In this way, the network device can schedule a transmission resource for the terminal device in time based on the status report, so that transmission of the second data is completed in the first duration as much as possible, thereby implementing synchronization between the first data and the second data, and improving user experience.

According to a second aspect, a communication method is provided. The method may be performed by a second entity of a terminal device, or may be performed by a module (for example, a processor, a chip, or a chip system) used in the second entity. The following uses an example in which the second entity performs the method for description. The method includes: The second entity of the terminal device sends first information. The first information is related to first data, and the first data belongs to a first data radio bearer DRB. The first information is used to determine first duration, the first duration is duration in which transmission of second data is expected to be completed, and the second data belongs to a second DRB.

For example, the second entity is a packet data convergence protocol PDCP entity corresponding to the first DRB.

That is, the second entity of the terminal device sends the first information, so that a receive end entity of the first information determines the first duration, that is, the duration in which transmission of the second data is expected to be completed. Because the first information is related to the first data in the first DRB, the first duration determined based on the first information considers the first data, avoiding a transmission delay of considering only single data (that is, the second data), and laying a foundation for synchronization between the first data and the second data. For example, if transmission of the second data is expected to be completed in the first duration, the first data is synchronized with the second data, to achieve an effect of synchronization between different data.

In a possible design, the first information indicates second duration or a first moment. A start moment of the second duration is a moment at which the first data arrives at a packet data convergence protocol PDCP entity corresponding to the first DRB, and the first moment is an end moment of the second duration. The second duration is used to determine the first duration.

In a possible design, the method further includes: The second entity of the terminal device starts a third timer in response to receiving of the first data. Duration of the third timer is the second duration, or an end moment of the third timer is the first moment.

That is, receiving of the first data can trigger the third timer to start or restart, and the duration of the third timer or the end moment of the third timer can represent a synchronization requirement of the second data.

In a possible design, a start moment of the third timer is a moment at which the first data arrives at the PDCP entity corresponding to the first DRB.

In a possible design, the method further includes: The second entity of the terminal device receives first indication information. The first indication information indicates to start or restart a third timer. Duration of the third timer is the second duration, or an end moment of the third timer is the first moment.

That is, the second entity may start or restart the third timer based on the first indication information. The duration of the third timer or the end moment of the third timer can represent a synchronization requirement of the second data.

In a possible design, that the second entity of the terminal device sends the first information includes: sending the first information based on the first indication information.

That is, the first indication information can trigger sending of the first information.

In a possible design, the method further includes: The terminal device receives configuration information, where the configuration information is used to configure the duration of the third timer to the second duration.

That is, the duration of the third timer may be configured by a network device.

In a possible design, the first DRB and the second DRB are a same DRB.

According to a third aspect, a communication method is provided. The method may be performed by a sixth entity of a terminal device, or may be performed by a module (for example, a processor, a chip, or a chip system) used in the sixth entity. The sixth entity may be a packet data convergence protocol PDCP entity. The following uses an example in which the sixth entity performs the method for description. The method includes:
obtaining third information, where the third information is related to third data, and the third data belongs to a third data radio bearer DRB; and determining fourth duration based on the third information, where the fourth duration is duration in which transmission of fourth data is expected to be completed, the fourth data belongs to the third DRB, and the fourth duration is used to determine delay information of a status report, and/or the fourth duration is used to trigger sending of the status report.

That is, the third information is referred to in a process of determining the duration (that is, the fourth duration) in which transmission of the fourth data is expected to be completed. Because the third information is related to the third data in the third DRB, the fourth duration determined based on the third information considers the third data, avoiding a transmission delay of considering only single data (that is, the fourth data), and laying a foundation for synchronization between the third data and the fourth data.

For example, when the fourth duration is used to determine the delay information of the status report, because the fourth duration is duration with reference to a synchronization requirement between the third data and the fourth data, the delay information also considers the synchronization requirement of the fourth data, thereby improving accuracy of the delay information, and implementing synchronization between the third data and the fourth data.

For another example, when the fourth duration is used to trigger sending of the status report, because the fourth duration is duration with reference to a synchronization requirement between the third data and the fourth data, triggering of the status report also considers the synchronization requirement of the fourth data, thereby improving accuracy of triggering the status report, and implementing synchronization between the third data and the fourth data.

In a possible design, the third information indicates third duration or a third moment; a start moment of the third duration is a moment at which the third data arrives at a packet data convergence protocol PDCP entity corresponding to the third DRB, and the third moment is an end moment of the third duration; and the third duration is used to determine the fourth duration.

In a possible design, determining the fourth duration based on the third information includes: determining duration of a fifth timer based on the third information, where a start moment of the fifth timer is a fourth moment, the fourth moment is a moment at which the fourth data arrives at the PDCP entity corresponding to the third DRB, and an end moment of the fifth timer is the third moment; and determining the fourth duration based on the duration of the fifth timer, where a start moment of the fourth duration is the fourth moment, and an end moment of the fourth duration is the end moment of the fifth timer.

The third duration or the third moment indicated by the third information can meet a synchronization requirement of the fourth data. Therefore, the duration of the fifth timer determined based on the third information is duration that considers a synchronization requirement between the third data and the fourth data. When the fourth duration is determined based on the duration of the fifth timer, if transmission of the fourth data is completed in the fourth duration, synchronization between the third data and the fourth data can be implemented.

In a possible design, determining the fourth duration based on the third information includes: determining the fourth duration based on the third information and fourth information, where the fourth information indicates a moment at which the fourth data is discarded.

That is, in a process of determining the fourth duration by the sixth entity, both the third information and the fourth information are referred to. When the third information is used to determine the fourth duration, the third duration or the third moment indicated by the third information can meet a synchronization requirement of the fourth data. Therefore, when the fourth duration is determined based on the third information, if transmission of the fourth data is completed in the fourth duration, synchronization between the third data and the fourth data can be implemented. In addition, when the fourth information is used to determine the fourth duration, the moment indicated by the fourth information can enable the sixth entity to learn of a transmission delay requirement of the fourth data. Therefore, when the fourth duration is determined based on the fourth information, if transmission of the fourth data is completed in the fourth duration, the transmission delay requirement of the fourth data can be met.

In a possible design, a start moment of the fourth duration is a fourth moment, and the fourth moment is a moment at which the fourth data arrives at the PDCP entity corresponding to the third DRB; and when the third moment is earlier than the moment at which the fourth data is discarded, an end moment of the fourth duration is the third moment; or when the moment at which the fourth data is discarded is earlier than or equal to the third moment, an end moment of the fourth duration is the moment at which the fourth data is discarded.

In a possible design, determining the fourth duration based on the third information and the fourth information includes: determining duration of a fifth timer based on the third information and the fourth information, where a start moment of the fifth timer is the fourth moment, and the fourth moment is the moment at which the fourth data arrives at the PDCP entity corresponding to the third DRB; and when the third moment is earlier than the moment at which the fourth data is discarded, an end moment of the fifth timer is the third moment; or when the moment at which the fourth data is discarded is earlier than or equal to the third moment, an end moment of the fifth timer is the moment at which the fourth data is discarded; and determining the fourth duration based on the duration of the fifth timer, where the start moment of the fourth duration is the fourth moment, and the end moment of the fourth duration is the end moment of the fifth timer.

That is, the sixth entity updates the duration of the fifth timer based on the third information and the fourth information, and then determines the fourth duration based on the duration of the fifth timer. The third duration or the third moment indicated by the third information can meet a synchronization requirement of the fourth data, and the moment indicated by the fourth information can enable the sixth entity to learn of a transmission delay requirement of the fourth data. Therefore, the duration of the fifth timer determined based on the third information and the fourth information considers both the synchronization requirement between the third data and the fourth data, and the transmission delay requirement of the fourth data. When the fourth duration is determined based on the duration of the fifth timer, if transmission of the fourth data is completed in the fourth duration, synchronization between the third data and the fourth data can be implemented, and a transmission delay requirement of the fourth data can be met.

In a possible design, the fifth timer is a packet discarding timer.

In a possible design, obtaining the third information includes: starting a fourth timer in response to receiving of the third data; and determining the third information based on the fourth timer, where duration of the fourth timer is the third duration, or an end moment of the fourth timer is the third moment.

That is, the fourth timer may be understood as a synchronization timer, to indicate duration of a synchronization requirement between the third data and the fourth data.

In a possible design, a start moment of the fourth timer is the moment at which the third data arrives at the PDCP entity corresponding to the third DRB.

In a possible design, the third information includes fifth information, the third data includes fifth data, the fourth data includes sixth data, and the fourth duration includes sixth duration.

According to a fourth aspect, a communication method is provided. The method may be performed by a seventh entity of a terminal device, or may be performed by a module (for example, a processor, a chip, or a chip system) used in the seventh entity. The seventh entity may be a medium access control MAC entity. The following uses an example in which the seventh entity performs the method for description. The method includes:
obtaining second indication information, where the second indication information indicates fourth duration, the fourth duration is determined based on third information, the third information is related to third data, the third data belongs to a third data radio bearer DRB, and the fourth duration is duration in which transmission of fourth data is expected to be completed; and determining delay information of a status report based on the fourth duration, and/or triggering sending of the status report based on the fourth duration.

That is, the fourth duration (that is, the duration in which transmission of the fourth data is expected to be completed) is duration determined with reference to the third information. Because the third information is related to the third data in the third DRB, the fourth duration determined based on the third information considers the third data, avoiding a transmission delay of considering only single data (that is, the fourth data), and laying a foundation for synchronization between the third data and the fourth data.

For example, when the fourth duration is used to determine the delay information of the status report, because the fourth duration is duration with reference to a synchronization requirement between the third data and the fourth data, the delay information also considers the synchronization requirement of the fourth data, thereby improving accuracy of the delay information, and implementing synchronization between the third data and the fourth data.

For another example, when the fourth duration is used to trigger sending of the status report, because the fourth duration is duration with reference to a synchronization requirement between the third data and the fourth data, triggering of the status report also considers the synchronization requirement of the fourth data, thereby improving accuracy of triggering the status report, and implementing synchronization between the third data and the fourth data.

In a possible design, the delay information of the status report includes a remaining transmission delay budget, and the remaining transmission delay budget is determined based on the fourth duration.

In a possible design, a start moment of the remaining transmission delay budget is a sending moment of the status report; and an end moment of the remaining transmission delay budget is an end moment of the fourth duration.

In a possible design, the fourth data belongs to the third DRB, or a DRB to which the fourth data belongs is different from the third DRB.

In a possible design, the method further includes: receiving a first threshold from a network device; and triggering sending of the status report based on the fourth duration includes: determining the remaining transmission delay budget based on the fourth duration, and when the remaining transmission delay budget is less than or equal to the first threshold, triggering sending of the status report, where the remaining transmission delay budget is a remaining transmission delay budget of the fourth data.

Because the fourth duration is duration with reference to a synchronization requirement between the third data and the fourth data, the terminal device sends the status report to the network device in time when the remaining transmission delay budget determined based on the fourth duration is less than or equal to the first threshold. In this way, the network device can schedule a transmission resource for the terminal device in time based on the status report, so that transmission of the fourth data is completed in the fourth duration as much as possible, thereby implementing synchronization between the third data and the fourth data, and improving user experience.

In a possible design, the third information includes fifth information, the third data includes fifth data, the fourth data includes sixth data, and the fourth duration includes sixth duration.

According to a fifth aspect, a communication method is provided. The method may be performed by a seventh entity of a terminal device, or may be performed by a module (for example, a processor, a chip, or a chip system) used in the seventh entity. The seventh entity may be a medium access control MAC entity. The following uses an example in which the seventh entity performs the method for description. The method includes:
receiving third information, where the third information is related to third data, and the third data belongs to a third data radio bearer DRB; determining fourth duration based on the third information, where the fourth duration is duration in which transmission of fourth data is expected to be completed; and determining delay information of a status report based on the fourth duration, and/or triggering sending of the status report based on the fourth duration.

That is, the third information is referred to in a process of determining the duration (that is, the fourth duration) in which transmission of the fourth data is expected to be completed. Because the third information is related to the third data in the third DRB, the fourth duration determined based on the third information considers the third data, avoiding a transmission delay of considering only single data (that is, the fourth data), and laying a foundation for synchronization between the third data and the fourth data.

For example, when the fourth duration is used to determine the delay information of the status report, because the fourth duration is duration with reference to a synchronization requirement between the third data and the fourth data, the delay information also considers the synchronization requirement of the fourth data, thereby improving accuracy of the delay information, and implementing synchronization between the third data and the fourth data.

For another example, when the fourth duration is used to trigger sending of the status report, because the fourth duration is duration with reference to a synchronization requirement between the third data and the fourth data, triggering of the status report also considers the synchronization requirement of the fourth data, thereby improving accuracy of triggering the status report, and implementing synchronization between the third data and the fourth data.

In a possible design, the third information indicates third duration or a third moment; a start moment of the third duration is a moment at which the third data arrives at a packet data convergence protocol PDCP entity corresponding to the third DRB, and the third moment is an end moment of the third duration; and the third duration is used to determine the fourth duration.

In a possible design, determining the fourth duration based on the third information includes: determining the fourth duration based on the third information and fourth information, where the fourth information indicates a moment at which the fourth data is discarded.

That is, in a process of determining the fourth duration by the seventh entity, both the third information and the fourth information are referred to. When the third information is used to determine the fourth duration, the third duration or the third moment indicated by the third information can meet a synchronization requirement of the fourth data. Therefore, when the fourth duration is determined based on the third information, if transmission of the fourth data is completed in the fourth duration, synchronization between the third data and the fourth data can be implemented. In addition, when the fourth information is used to determine the fourth duration, the moment indicated by the fourth information can enable the seventh entity to learn of a transmission delay requirement of the fourth data. Therefore, when the fourth duration is determined based on the fourth information, if transmission of the fourth data is completed in the fourth duration, the transmission delay requirement of the fourth data can be met.

In a possible design, a start moment of the fourth duration is a fourth moment, and the fourth moment is a moment at which the fourth data arrives at the PDCP entity corresponding to the third DRB; and when the third moment is earlier than the moment at which the fourth data is discarded, an end moment of the fourth duration is the third moment; or when the moment at which the fourth data is discarded is earlier than or equal to the third moment, an end moment of the fourth duration is the moment at which the fourth data is discarded.

In a possible design, the third information is determined based on a fourth timer, where duration of the fourth timer is the third duration, or an end moment of the fourth timer is the third moment.

That is, the fourth timer may be understood as a synchronization timer, to indicate duration of a synchronization requirement between the third data and the fourth data.

In a possible design, a start moment of the fourth timer is the moment at which the third data arrives at the PDCP entity corresponding to the third DRB.

In a possible design, the delay information of the status report includes a remaining transmission delay budget, and the remaining transmission delay budget is determined based on the fourth duration.

In a possible design, a start moment of the remaining transmission delay budget is a sending moment of the status report; and an end moment of the remaining transmission delay budget is the end moment of the first duration.

In a possible design, the method further includes: receiving a first threshold from a network device; and triggering sending of the status report based on the fourth duration includes: determining the remaining transmission delay budget based on the fourth duration, and when the remaining transmission delay budget is less than or equal to the first threshold, triggering sending of the status report, where the remaining transmission delay budget is a remaining transmission delay budget of the fourth data.

Because the fourth duration is duration with reference to a synchronization requirement between the third data and the fourth data, the terminal device sends the status report to the network device in time when the remaining transmission delay budget determined based on the fourth duration is less than or equal to the first threshold. In this way, the network device can schedule a transmission resource for the terminal device in time based on the status report, so that transmission of the fourth data is completed in the fourth duration as much as possible, thereby implementing synchronization between the third data and the fourth data, and improving user experience.

In a possible design, the fourth data belongs to the third DRB, or a DRB to which the fourth data belongs is different from the third DRB.

In a possible design, the third information includes fifth information, the third data includes fifth data, the fourth data includes sixth data, and the fourth duration includes sixth duration.

According to a sixth aspect, a communication apparatus configured to implement the methods is provided. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver machine, a transceiver, or a communication interface.

According to a seventh aspect, a communication apparatus is provided. The apparatus includes a processor and a memory. The memory is configured to store computer instructions. When the processor executes the instructions, the communication apparatus is enabled to perform the method according to any one of the foregoing aspects.

According to an eighth aspect, a communication apparatus is provided. The apparatus includes a processor and a communication interface. The communication interface is configured to communicate with a module outside the communication apparatus. The processor is configured to execute a computer program or instructions, to enable the communication apparatus to perform the method according to any one of the foregoing aspects.

According to a ninth aspect, a communication apparatus is provided. The apparatus includes at least one processor. The processor is configured to execute a computer program or instructions stored in a memory, to enable the communication apparatus to perform the method according to any one of the foregoing aspects. The memory may be coupled to the processor, or may be independent of the processor.

According to a tenth aspect, a computer-readable storage medium is provided. The computer-readable storage medium stores a computer program or instructions. When the computer program or the instructions are run on a communication apparatus, the communication apparatus is enabled to perform the method according to any one of the foregoing aspects.

According to an eleventh aspect, a computer program product including instructions is provided. When the computer program product runs on a communication apparatus, the communication apparatus is enabled to perform the method according to any one of the foregoing aspects.

According to a twelfth aspect, a communication apparatus (for example, the communication apparatus may be a chip or a chip system) is provided. The communication apparatus includes a processor, configured to implement the function in any one of the foregoing aspects.

In some possible designs, the communication apparatus includes a memory, and the memory is configured to store necessary program instructions and data.

In some possible designs, when the apparatus is the chip system, the apparatus may include a chip, or may include a chip and another discrete component.

The communication apparatus provided in any one of the sixth aspect to the twelfth aspect may be the first entity of the terminal device in the first aspect, or the apparatus included in the first entity, such as a chip or a chip system; or the communication apparatus may be the second entity of the terminal device in the second aspect, or the apparatus included in the second entity, such as a chip or a chip system; or the communication apparatus may be the sixth entity of the terminal device in the third aspect, or the apparatus included in the sixth entity, such as a chip or a chip system; or the communication apparatus may be the seventh entity of the terminal device in the fourth aspect, or an apparatus included in the seventh entity, such as a chip or a chip system; or the communication apparatus may be the seventh entity of the terminal device in the fifth aspect, or an apparatus included in the seventh entity, such as a chip or a chip system.

It may be understood that, when the communication apparatus provided in any one of the sixth aspect to the twelfth aspect is a chip, a sending action/function of the communication apparatus may be understood as information output, and a receiving action/function of the communication apparatus may be understood as information input.

For technical effects brought by any one of the designs of the sixth aspect to the twelfth aspect, refer to technical effects brought by different designs of the first aspect to the fifth aspect. Details are not described herein again.

### BRIEF DESCRIPTION OF DRAWINGS

FIG. 1 is a diagram of an architecture of a communication system according to an embodiment of this application;
FIG. 2a is a diagram of a user plane communication protocol stack according to an embodiment of this application;
FIG. 2b is a diagram of a control plane communication protocol stack according to an embodiment of this application;
FIG. 3a is a diagram of a structure of a status report according to an embodiment of this application;
FIG. 3b is a diagram of another structure of a status report according to an embodiment of this application;
FIG. 3c is a diagram of another structure of a status report according to an embodiment of this application;
FIG. 4 is a diagram of a scenario according to an embodiment of this application;
FIG. 5a is a diagram of a principle of reporting a status report according to an embodiment of this application;
FIG. 5b is a diagram of another principle of reporting a status report according to an embodiment of this application;
FIG. 6 is a schematic flowchart of a communication method according to an embodiment of this application;
FIG. 7 is a diagram of a working principle according to an embodiment of this application;
FIG. 8 is a diagram of another scenario according to an embodiment of this application;
FIG. 9 is a schematic flowchart of another communication method according to an embodiment of this application;
FIG. 10 is a schematic flowchart of still another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13a is a schematic flowchart of still another communication method according to an embodiment of this application;
FIG. 13b is a diagram of another working principle according to an embodiment of this application;
FIG. 14 is a schematic flowchart of still another communication method according to an embodiment of this application;
FIG. 15 is a diagram of still another working principle according to an embodiment of this application;
FIG. 16 is a schematic flowchart of still another communication method according to an embodiment of this application;
FIG. 17 is a schematic flowchart of still another communication method according to an embodiment of this application;
FIG. 18 is a schematic flowchart of still another communication method according to an embodiment of this application;
FIG. 19 is a schematic flowchart of still another communication method according to an embodiment of this application;
FIG. 20 is a schematic flowchart of still another communication method according to an embodiment of this application;
FIG. 21 is a diagram of still another working principle according to an embodiment of this application;
FIG. 22 is a schematic flowchart of still another communication method according to an embodiment of this application;
FIG. 23 is a schematic flowchart of still another communication method according to an embodiment of this application;
FIG. 24 is a schematic flowchart of still another communication method according to an embodiment of this application;
FIG. 25 is a diagram of a structure of a communication apparatus according to an embodiment of this application;
FIG. 26 is a diagram of a structure of another communication apparatus according to an embodiment of this application; and
FIG. 27 is a diagram of a structure of still another communication apparatus according to an embodiment of this application.

### DESCRIPTION OF EMBODIMENTS

The following describes technical solutions of this application with reference to accompanying drawings.

In this application, terms "system" and "network" may be interchanged. All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "of (of)", "corresponding, relevant (corresponding, relevant)", and "corresponding (corresponding)" may be interchangeably used sometimes. It should be noted that meanings expressed by the terms are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of network architectures and emergence of new service scenarios, the technical solutions provided in embodiments of this application are also applicable to similar technical problems.

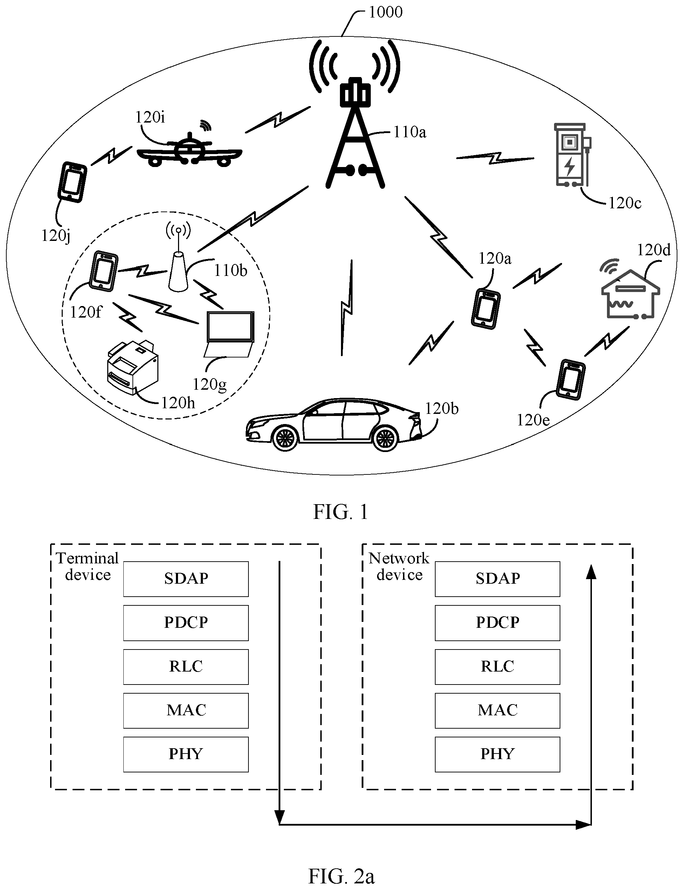

FIG. 1 is a diagram of an architecture of a communication system 1000 to which an embodiment of this application is applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. Although not shown, another network device may be further included in the communication system 1000. For example, the communication system 1000 may further include one or more of a core network (core network, CN) device, a wireless relay device, and a wireless backhaul device. This is not specifically limited herein.

The network device may be connected to the core network device in a wireless or wired manner. The core network device and the network device may be different independent physical devices, functions of the core network device and logical functions of the network device may be integrated into a same physical device, or a part of functions of the core network device and a part of functions of the network device may be integrated into one physical device. This is not specifically limited in embodiments of this application.

Optionally, the network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. The RAN may alternatively be an open radio access network (open RAN, O-RAN, or ORAN), a cloud radio access network (cloud radio access network, CRAN), or a communication network of two or more of the foregoing networks. The RAN device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, or an access node in a wireless fidelity (wireless fidelity, Wi-Fi) system, a long-range radio (long-range radio, LoRa) system, or an internet of vehicles system. The RAN device may alternatively be a module or unit that completes a part of functions of the base station, for example, a central unit (central unit, CU), a distributed unit (distributed unit, DU), or a radio unit (radio unit, RU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings of the names. For example, in an ORAN system, a CU may also be referred to as an O-CU (open CU), a DU may also be referred to as an O-DU, and an RU may also be referred to as an O-RU. Any one of the CU (or the CU-CP or the CU-UP), the DU, and the RU in this application may be implemented by a software module, a hardware module, or a combination of a software module and a hardware module. The radio access network device may be a macro base station (like 110a in FIG. 1), or may be a micro base station or an indoor base station (like 110b in FIG. 1), or may be a relay node or a donor node, or the like. A specific technology and a specific device form that are used by the radio access network device are not limited in embodiments of this application. For ease of description, the network device is used as an abbreviation of the radio access network device, and the base station is used as an example of the radio access network device.

Optionally, the terminal device accesses a core network through the network device. The terminal device includes a device that provides a voice and/or data connectivity for a user. Specifically, the terminal device includes a device that provides a voice for the user, or includes a device that provides data connectivity for the user, or includes a device that provides a voice and data connectivity for the user. For example, the terminal device may include a handheld device with a wireless connection function or a processing device connected to a wireless modem. The terminal device may communicate with the core network via the radio access network, and exchange voice or data with the RAN, or exchange voice and data with the RAN. The terminal device may include user equipment (user equipment, UE), a wireless terminal device, a mobile terminal device, a D2D terminal device, a V2X terminal device, a machine-to-machine/machine type communications (machine-to-machine/machine-type communications, M2M/MTC) terminal device, an internet of things (internet of things, IoT) terminal device, a subscription unit (subscriber unit), a subscription station (subscriber station), a mobile station (mobile station), a remote station (remote station), an access point (access point, AP), a remote terminal (remote terminal), an access terminal (access terminal), a user terminal (user terminal), a user agent (user agent), or a user device (user device). For example, the terminal device may include a mobile phone (or referred to as a "cellular" phone), a computer having a mobile terminal device, or a portable, pocket-sized, hand-held, or computer built-in mobile apparatus. For example, the terminal device may be a device, such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

If the foregoing terminal devices are located in a vehicle (for example, placed in the vehicle or installed in the vehicle), the terminal devices all may be considered as vehicle-mounted terminal devices. For example, the vehicle-mounted terminal devices are also referred to as on-board units (on-board unit, OBU).

In embodiments of this application, the terminal device may further include a relay (relay). It is also understood that any device that can perform data communication with the base station may be considered as a terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus configured to implement the function of the terminal is the terminal device is used for description.

It should be understood that the network device and the terminal device may be fixed, or may be movable. The network device and the terminal device may be deployed on land, including an indoor device, an outdoor device, a handheld device, or a vehicle-mounted device; may be deployed on the water; or may be deployed on an aircraft, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile base station. For the terminal device 120j that accesses the radio access network through 120i, the terminal device 120i is a network device. However, for the network device 110a, 120i is a terminal device. That is, 110a and 120i communicate with each other by using a radio air interface protocol. Certainly, 110a and 120i may alternatively communicate with each other by using an interface protocol between base stations. In this case, for 110a, 120i is also a network device. Therefore, the network device and the terminal device may be collectively referred to as a communication apparatus. 110a and 110b in FIG. 1 may be referred to as a communication apparatus having a function of a network device, and 120a to 120j in FIG. 1 may be referred to as a communication apparatus having a function of a terminal device.

Communication may be performed between the network device and the terminal device, between network devices, and between terminal devices by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection with a cell controlled by the network device. The cell that establishes the wireless connection with the terminal device is referred to as a serving cell of the terminal device. When the terminal device communicates with the serving cell, the terminal device is further interfered by a signal from a neighboring cell.

It should be noted that the solutions in embodiments of this application may alternatively be applied to another communication system, and a corresponding name may alternatively be replaced with a name of a corresponding function in the another communication system.

For ease of understanding embodiments of this application, the following first briefly describes terms in embodiments of this application. It should be understood that these descriptions are merely for ease of understanding of embodiments of this application, and shall not constitute any limitation on this application.

### 1. Synchronization requirement between different data

Currently, with improvement of immersive requirements, a user is no longer satisfied with visual and auditory experience, and an extended reality (eXtended Reality, XR) service gradually evolves from audio and video transmission to multi-modal content presentation, for example, additionally provides tactile experience.

However, when a plurality of transport streams (for example, video, audio, and touch) coexist, additional demands and challenges arise. For example, to avoid audio/video-to-touch asynchronization, synchronization between a plurality of streams of data is required.

Using audio-to-video synchronization as an example, when the user sees a frame of image, an audio signal corresponding to the image also needs to be played within a specific time. Therefore, transmission duration of a plurality of types of data is limited to some extent. For example, when only video data is considered, an uplink air interface transmission delay of a frame of image is 30 ms. However, when video data corresponding to one piece of audio data is transmitted, an actual transmission delay requirement may become stricter. For example, transmission of the corresponding video data needs to be completed in 20 ms since the audio data is transmitted. In this case, if transmission is still performed based on the transmission delay of 30 ms, audio-to-video asynchronization is caused.

For example, 3GPP shows a synchronization threshold between different data, as shown in Table 1.

**Table 1**

| | | |
|---|---|---|
| Hearing-Vision | Hearing is delayed compared to vision | Vision is delayed compared to hearing |
| | 20 ms | 20 ms |
| Hearing-Touch | Hearing is delayed compared to touch | Touch is delayed compared to hearing |
| | 25 ms | 12 ms |
| Vision-Touch | Vision is delayed compared to touch | Touch is delayed compared to vision |
| | 20 ms | 30 ms |

In Table 1, that hearing is delayed compared to vision by 20 ms may be understood as that, when visual data is first sent, auditory data associated with the visual data needs to be transmitted in 20 ms. When the auditory data is sent later than the threshold, the user may perceive audio-to-video asynchronization, reducing viewing experience. Other cases can be deduced similarly, and are not described.

### 2. Protocol stack on a radio access network side

The protocol stack on the radio access network side may be classified into a user plane protocol stack and a control plane protocol stack.

FIG. 2a is a diagram of an architecture of a user plane protocol stack. The user plane protocol stack may include a physical (physical, PHY) layer, a medium access control (medium access control, MAC) layer, a radio link control (radio link control, RLC) layer, a packet data convergence protocol (packet data convergence protocol, PDCP) layer, and a service data adaptation protocol (service data adaptation protocol, SDAP) layer.

In FIG. 2a, for an XR service, after service data arrives at a terminal device, the data is sequentially processed at the protocol layers from top to bottom as shown in FIG. 2a, and finally transmitted to a network device through an air interface. After receiving the data through the air interface, the network device sequentially performs corresponding processing on the data in a reverse order of the terminal device. The processing of the data at each protocol layer is implemented by a multi-functional entity corresponding to the protocol layer. For details, refer to related technical specifications of 3GPP. Details are not described herein.

It is easy to understand that the user plane protocol stack shown in FIG. 2a does not constitute any limitation on the solutions of this application. During actual application, the user plane protocol stack may include more or fewer protocol layers than those shown in the figure.

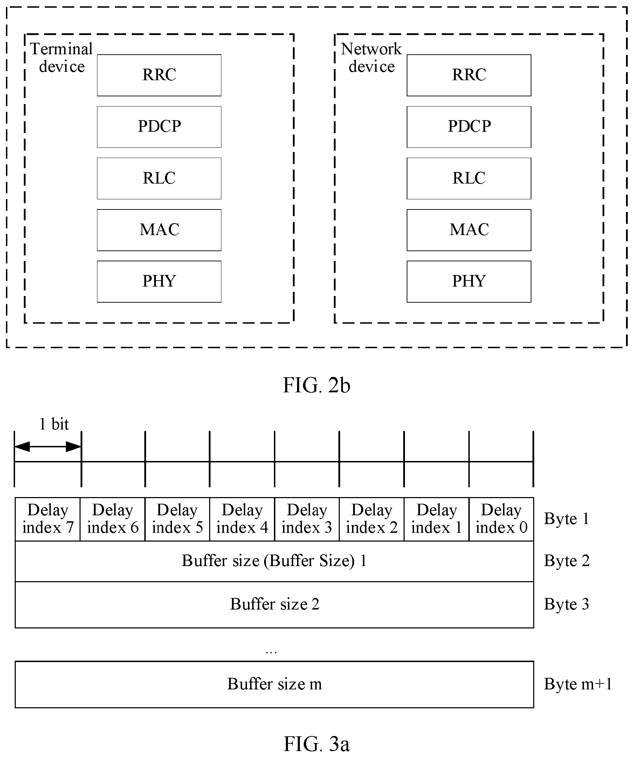

FIG. 2b is a diagram of an architecture of a control plane protocol stack. The control plane protocol stack may include a PHY layer, a MAC layer, an RLC layer, a PDCP layer, and a radio resource control (radio resource control, RRC) layer.

As shown in FIG. 2a and FIG. 2b, the MAC layer may provide a service for a higher layer (such as the RLC layer) through a logical channel (logical channel, LCH). Based on a type of information to be sent, the logical channel may be classified into a control channel used to transmit control information on a control plane and a service channel used to transmit user data on a user plane.

When configuring a logical channel for a terminal device, a network device also indicates a logical channel group (logical channel group, LCG) to which the logical channel belongs. That is, the network device knows an LCG to which each logical channel belongs.

A radio bearer (radio bearer, RB) may be a connection format set between the terminal device and the network device (for example, a base station), and may include related configurations of a physical channel, a transport channel, and a logical channel. The RB may be classified into a signaling radio bearer (signaling radio bearer, SRB) used to transmit control information on a control plane and a data radio bearer (data radio bearer, DRB) used to transmit user data on a user plane.

In this application, in a possible understanding, in a narrow sense, the LCH is a channel between the RLC layer and the MAC layer. The DRB is a channel between the PDCP layer and the RLC layer. One LCH corresponds to one DRB, and different LCHs correspond to different DRBs. That is, there is a correspondence between an LCH and a DRB. For example, one DRB corresponds to one LCH, or one DRB corresponds to a plurality of LCHs. In this application, the DRB is used as an example for description. Certainly, this application does not exclude a possibility of representing a same or similar meaning in another expression manner (for example, through the LCH). Any modification, equivalent replacement, improvement, or the like made without departing from the spirit and principle of this application to meet the features described in this application shall fall within the protection scope of this application.

In this application, in another understanding, in a broad sense, a DRB includes a DRB in a narrow sense and an LCH. Correspondingly, the DRB in this application may be understood as a DRB in a broad sense.

### 3. Buffer status report (buffer status report, BSR)

In an uplink transmission scenario, a terminal device may send a BSR to a network device to report an amount of to-be-sent uplink data. The network device may allocate a proper uplink resource to the terminal device based on the BSR, to implement uplink scheduling.

Currently, the BSR is a medium access control (medium access control, MAC) control element (control element, CE), and therefore may also be referred to as a BSR MAC CE.

### 4. Delay status report (delay status report, DSR)

A conventional BSR is used to report only a data amount. However, for some delay-sensitive services, for example, an XR service, there is a strict requirement on an air interface transmission delay. Because a base station cannot learn of delay information of data based on the conventional BSR, transmission of the data cannot be completed in a required air interface time by using a resource scheduled by the base station. This not only wastes air interface transmission resources, but also affects user experience. Therefore, a solution is proposed currently: A terminal device may report a report indicating delay information of to-be-transmitted data, to notify a base station of a transmission delay requirement of the to-be-transmitted data. The report carrying the delay information of the to-be-transmitted data may be referred to as a DSR.

It should be noted that the DSR is merely an example name currently provided, and the report carrying the delay information of the to-be-transmitted data may have another name. This is not limited in embodiments of this application.

It should be noted that how the DSR is specifically used to report the delay information (or delay information and a data amount) of the to-be-transmitted data is not specified currently. In a possible implementation, similar to a BSR MAC CE, the DSR may also be a MAC CE, and may be referred to as a DSR MAC CE.

Optionally, the DSR may alternatively indicate a data amount of the to-be-transmitted data. It may be understood that, if the DSR may indicate both the data amount of the to-be-transmitted data and the delay information of the to-be-transmitted data, the DSR may also be understood as a BSR with a new function expanded based on an original function.

The following describes some possible manners of triggering the DSR by using examples.

Manner 1: The DSR is triggered based on storage duration of the to-be-transmitted data.

It may be understood that the DSR may be triggered because the storage duration of the to-be-transmitted data is greater than or equal to a threshold. For example, the terminal device receives threshold information, and the threshold information indicates a threshold. When storage duration of a piece of data of the terminal device (for example, an XR device) reaches (greater than or equal to) the threshold, the DSR is triggered.

In this application, for uplink transmission, a start moment of the storage duration of the data may be understood as a moment at which the data arrives at the terminal device. For example, the moment may be a moment at which the data arrives at an access stratum (access stratum, AS) layer, or may be a moment at which the data arrives at a service data adaptation protocol (service data adaptation protocol, SDAP) layer, or a moment at which the data arrives at a packet data convergence protocol (packet data convergence protocol, PDCP) layer, or a moment at which the data arrives at a radio link control (radio link control, RLC) layer, or a moment at which the data arrives at a logical channel (logical channel, LCH), or a moment at which the data arrives at a medium access control (medium access control, MAC) layer. This is not limited in embodiments of this application.

It should be noted that, in this application, the data is described as follows: The data may be a protocol data unit (protocol data unit, PDU), or the data may be a protocol data unit set (PDU set), or the data may be a data burst (data burst).

The PDU set includes at least one PDU. Different PDUs in a PDU set carry information elements generated by an application (or application layer). For example, a video frame with a large data amount usually needs to be divided into a plurality of PDUs for transmission.

A data burst may be understood as at least one PDU generated and sent by the application (or application layer) in a short time. Different PDUs of a same data burst may come from one or more PDU sets.

When the data is understood as a PDU set (or data burst), the moment at which the data arrives at the terminal device may be understood as a moment at which a PDU in the PDU set (or data burst) arrives at the terminal device, and is usually a moment corresponding to a first PDU that arrives at the terminal device in the PDU set (or data burst). It should be understood that the first PDU that arrives at the terminal device may be a first PDU in the PDU set (or data burst) in an order of generation or sending, or may be a non-first PDU in the PDU set (or data burst) in an order of generation or sending, for example, a second PDU. This is not limited in embodiments of this application.

In this application, an end moment of the storage duration of the data may be understood as a current moment of a communication system, that is, the storage duration is updated (for example, increases) based on system operation. A unit of the storage duration may be any time unit, for example, a millisecond, or may be a communication-related unit, for example, one or more of a quantity of slots, a quantity of subframes, and a quantity of system frames. This is not limited in embodiments of this specification.

Manner 2: The DSR is triggered based on a remaining transmission delay budget of the to-be-transmitted data.

It may be understood that the DSR may alternatively be triggered because the remaining transmission delay budget of the to-be-transmitted data is less than or equal to a threshold. For example, the terminal device receives threshold information, and the threshold information indicates a threshold. When a remaining transmission delay budget of a piece of data of the terminal device (for example, an XR device) reaches (less than or equal to) the threshold, the DSR is triggered.

In this application, the remaining transmission delay budget may be understood as duration. A start moment of the remaining transmission delay budget is a current system moment, and an end moment of the remaining transmission delay budget is a moment at which the transmission delay budget of the data is to expire or a moment at which the data is to be discarded.

The transmission delay budget is described as follows:
For example, the transmission delay budget may be a packet delay budget (packet delay budget, PDB) corresponding to the data. The PDB may be understood as a delay requirement from the terminal device to the base station or a user plane function (user plane function, UPF) network element, that is, duration from time when a PDU arrives at the terminal device to time when the PDU is successfully received by the base station or the UPF network element. Generally, the PDB is configured by a core network (core network, CN) by using a 5G quality of service (quality of service, QoS) identifier (5G QoS identifier, 5QI).

For another example, the transmission delay budget may be that a PDU set delay budget (PDU set delay budget, PSDB) corresponding to the data expires. The PSDB may be understood as a transmission delay requirement of a PDU set, for example, duration from time when a first PDU in the PDU set arrives at the terminal device to time when all PDUs in the PDU set are successfully received by the base station or the UPF network element.

The moment at which the data is to be discarded is described as follows:
The moment at which the data is to be discarded may be understood as a moment at which a packet discarding timer corresponding to the data expires.

For example, a PDCP layer configures a packet discarding timer for each service data unit (service data unit, SDU). When an SDU from a higher layer arrives at the PDCP layer, the packet discarding timer is started for the PDCP SDU. When the packet discarding timer expires, the corresponding SDU or PDU is discarded.

Manner 3: The DSR is triggered based on a data amount of the to-be-transmitted data.

For example, when a data amount of an LCH or an LCG exceeds (greater than or equal to) a threshold, the DSR is triggered.

It should be understood that, because a terminal device may have a plurality of LCHs and LCGs simultaneously, a DSR triggered by any LCH or LCG may include delay information of another LCG or LCH, or delay information and a related data amount.

The following describes some structures of the DSR by using examples.

For example, a structure of the DSR may be shown in FIG. 3a. In FIG. 3a, a delay index (delay index) represents a time interval (for example, a remaining transmission delay budget interval). The time interval may be shown in Table 2.

**Table 2**

| Delay index (delay index) | Remaining transmission delay budget interval (remaining time interval X) |
|---|---|
| 0 | X≤5 ms |
| 1 | X≤10 ms |
| 2 | X≤15 ms |
| 3 | X≤20 ms |
| 4 | X≤25 ms |
| 5 | X≤30 ms |
| 6 | X≤35 ms |
| 7 | 35 ms<X |

In Table 2, each value of the delay index may represent whether the MAC CE includes a data amount in the time interval. When a delay index field indicates that there is a data amount in a corresponding time interval, the MAC CE has a corresponding buffer size field, which is used to carry a data amount of data that meets the time interval of the delay index.

For example, when a bit corresponding to a delay index i (for example, i=0) is "1", the MAC CE includes a data amount of data whose remaining transmission delay budget is in the interval of "X≤5 ms". In this case, the MAC CE includes a field, which carries specific information to indicate the data amount of the data whose remaining transmission delay budget is in the interval of "X≤5 ms". When the bit corresponding to the delay index i (for example, i=0) is "0", the MAC CE does not include the data amount of the data whose remaining transmission delay budget is in the interval of "X≤5 ms". In this case, the MAC CE does not include the field indicating that the data amount of the data whose remaining packet delay budget is in the interval of "X≤5 ms", reducing overheads.

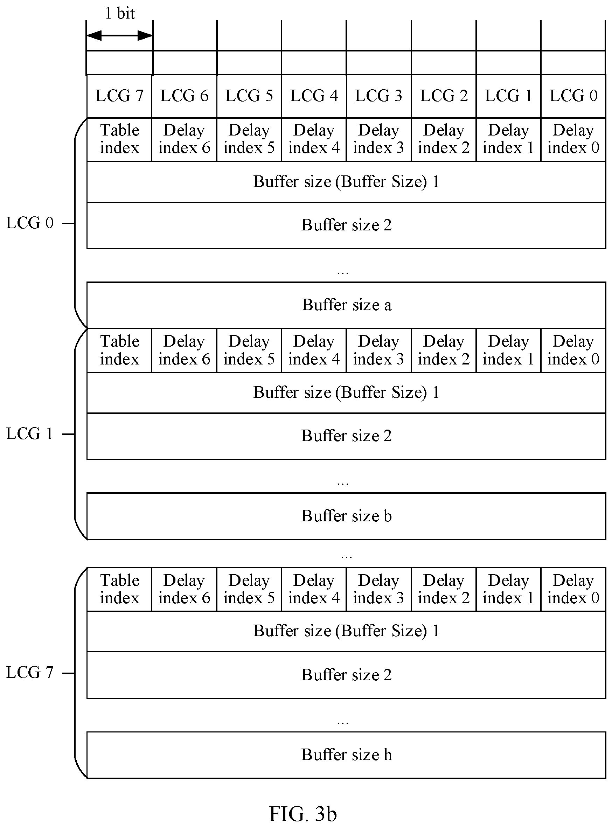

For example, another structure of the DSR may be shown in FIG. 3b. In FIG. 3b, data amounts of a plurality of LCGs may be transmitted by using one MAC CE. One byte (for example, a byte in which an LCG 0 to an LCG 7 are located) of the MAC CE indicates an LCG whose data amount is transmitted in the MAC CE.

For example, when a bit corresponding to an LCG i (for example, i=0) is "1", the MAC CE includes a data amount of data in the LCG 0. In this case, the MAC CE includes related information indicating the data amount and a delay of the LCG 0. For an indication manner, refer to FIG. 3a. Specifically, each LCG in the MAC CE corresponds to several delay indexes, and each delay index indicates whether there is a data amount of data of the LCG in a corresponding time interval. For example, when the bit corresponding to the LCG i (for example, i=0) is "1", and a bit corresponding to a delay index i (for example, i=0) is "1", the MAC CE includes a data amount of data whose remaining transmission delay budget is in the interval of "X≤5 ms" in the LCG 0. In this case, the MAC CE includes a field, which carries specific information to indicate the data amount of the data whose remaining transmission delay budget is in the interval of "X≤5 ms" in the LCG 0. Therefore, FIG. 3b may be understood as that each LCG corresponds to a piece of content in FIG. 3a. If the MAC CE indicates that there is a data amount to be reported in an LCG, the MAC CE includes delay information and a data amount corresponding to the LCG shown in FIG. 3a.

In addition, when LCG i="0", it means that no data amount in the LCG i is reported in the MAC CE. In this case, a data amount and a delay information indication field corresponding to the LCG i do not appear in the MAC CE, reducing overheads of the MAC CE.

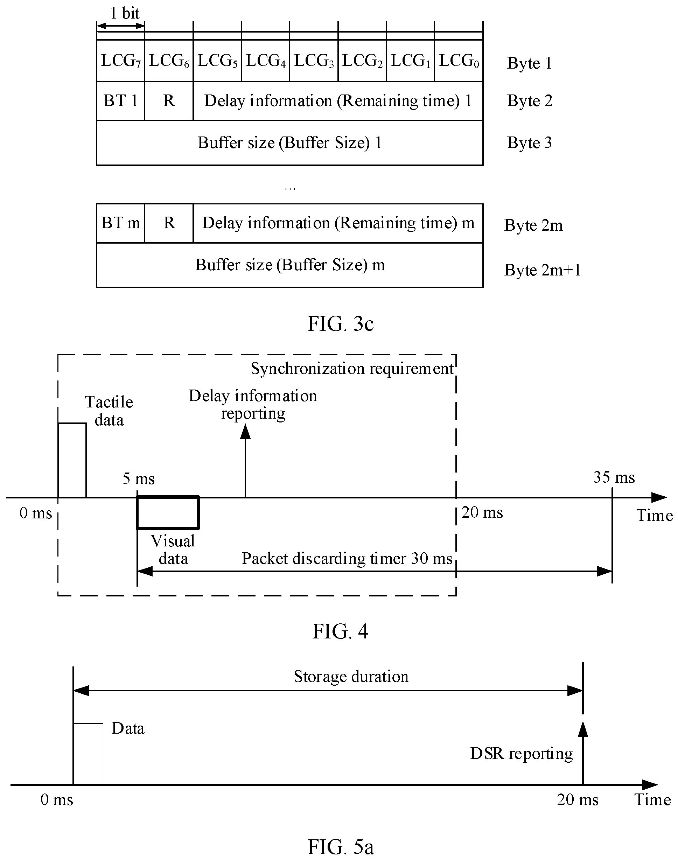

For example, another structure of the DSR may be shown in FIG. 3c. In FIG. 3c, data amounts of a plurality of LCGs may be transmitted by using one MAC CE. One byte (for example, a byte in which an LCG₀ to an LCG₇ are located) of the MAC CE indicates an LCG whose data amount is transmitted in the MAC CE.

For example, when a bit corresponding to an LCGᵢ (for example, i=0) is "1", the MAC CE includes a data amount of data in the LCG₀. In this case, the MAC CE includes related information indicating the data amount and a delay of the LCG₀. Specifically, each LCG in the MAC CE corresponds to a table index field, a delay information indication field, and a buffer size field. When the bit corresponding to the LCGᵢ (for example, i=0) is "1", the MAC CE includes a table index field, a delay information indication field, and a buffer size field in the LCG₀. The delay information indication field indicates a remaining transmission delay budget. Specifically, the remaining transmission delay budget may be a remaining transmission delay budget corresponding to data with a shortest remaining transmission delay budget in all to-be-transmitted data corresponding to the LCGᵢ. The buffer size field indicates a data amount of all data with a remaining transmission delay budget less than a delay threshold in all the to-be-transmitted data corresponding to the LCGᵢ. The delay threshold may be obtained by using a semi-static message, for example, RRC signaling. In addition, the table index field may indicate a buffer status list referenced by the data amount indicated by the buffer size field corresponding to the LCGᵢ. For example, when the terminal device or the LCGᵢ is configured with a plurality of buffer status lists (for example, long buffer status lists), the buffer status list corresponding to the buffer size field needs to be determined by using the table index field. When the LCGᵢ or the terminal device is not configured with a plurality of buffer status lists, the table index field may not appear, for example, may be considered as a reserved field, or the table index field may be ignored.

In addition, when LCGᵢ="0", it means that no data amount in the LCGᵢ is reported in the MAC CE. In this case, a data amount, a delay information indication field, and a table index field corresponding to the LCGᵢ do not appear in the MAC CE, reducing overheads of the MAC CE.

In some embodiments, for the MAC CE in FIG. 3a, FIG. 3b, or FIG. 3c, the delay information of the MAC CE is determined based on a packet discarding timer. The packet discarding timer is configured and obtained by using RRC signaling. For example, when a PDCP SDU arrives at a PDCP layer, a packet discarding timer is started (or restarted) for the SDU. Delay information of the SDU may be determined based on a real-time value of the packet discarding timer.

In some other embodiments, for the MAC CE in FIG. 3a or FIG. 3b, the delay information of the MAC CE is usually determined based on a transmission delay budget. For example, for a PDCP SDU that arrives at a PDCP layer, a transmission delay budget of the SDU may be determined based on a 5QI, and delay information of the SDU may be determined based on the transmission delay budget and storage duration.

Because the packet discarding timer or the transmission delay budget considers only a transmission requirement of single data (for example, one of video data, audio data, or tactile data), reported delay information may be greater than an actual delay requirement that considers synchronization between a plurality of types of data transmission. When a network device performs scheduling based on incorrect delay information, scheduled data may exceed a synchronization requirement of an application end, affecting user experience.

Using FIG. 4 as an example, at the 0^{th} ms, the tactile data arrives at the PDCP layer of the terminal device, and at the 5^{th} ms, the visual data arrives at the PDCP layer of the terminal device. The tactile data is associated with the visual data. It can be learned from Table 1 that, when the tactile data first arrives at the terminal device, transmission of the visual data associated with the tactile data needs to be completed in 20 ms, as shown in a dashed box in FIG. 4. However, when the single data is considered, a transmission delay budget of the visual data is 30 ms, for example, duration shown by a packet discarding timer in FIG. 4. However, in a related technology, when the terminal device reports a DSR at a moment (for example, at the 12^{th} ms), delay information of the visual data is determined based on the packet discarding timer, without considering a synchronization requirement between a plurality of types of data. When a transmission resource of the visual data is after the 20^{th} ms, that is, transmission of the visual data is not completed in 20 ms, the tactile data is not synchronized with the visual data, affecting user experience.

In addition, in the related technology, a manner is further provided, that is, the transmission delay budget of data is reduced. For example, when the single data is considered, the transmission delay budget of the visual data is reduced from 30 ms to 20 ms (or another value less than 30 ms). Because a moment at which each type of data in a plurality of streams of data arrives at the terminal device is not fixed, there is still a phenomenon that "a transmission delay budget of single data is greater than a delay requirement for synchronization between a plurality of types of data transmission". Therefore, even if the transmission delay budget of the data is reduced, delay information in the DSR may be inaccurate, and synchronization between different data cannot be ensured.

In some other embodiments, for the MAC CE in FIG. 3a or FIG. 3b, the delay information of the MAC CE is determined based on storage duration. A start moment of the storage duration of the data may be determined based on a moment at which the data arrives at the terminal device. An end moment of the storage duration of the data may be determined based on a reporting moment of the DSR.

Using FIG. 5a as an example, the start moment of the storage duration of the data is the moment at which the data arrives at the terminal device, that is, the 0^{th} ms, and the end moment of the storage duration of the data is the reporting moment of the DSR, that is, the 20^{th} ms. Correspondingly, the storage duration is 20 ms.

In some other embodiments, for the MAC CE in FIG. 3a or FIG. 3b, the delay information of the MAC CE is determined based on a remaining transmission delay budget. When the remaining transmission delay budget is determined based on a packet discarding timer, an end moment of the remaining transmission delay budget is an end moment of the packet discarding timer, and a start moment of the remaining transmission delay budget is a reporting moment of the DSR. A start moment of the packet discarding timer is a moment at which data arrives at the PDCP layer.

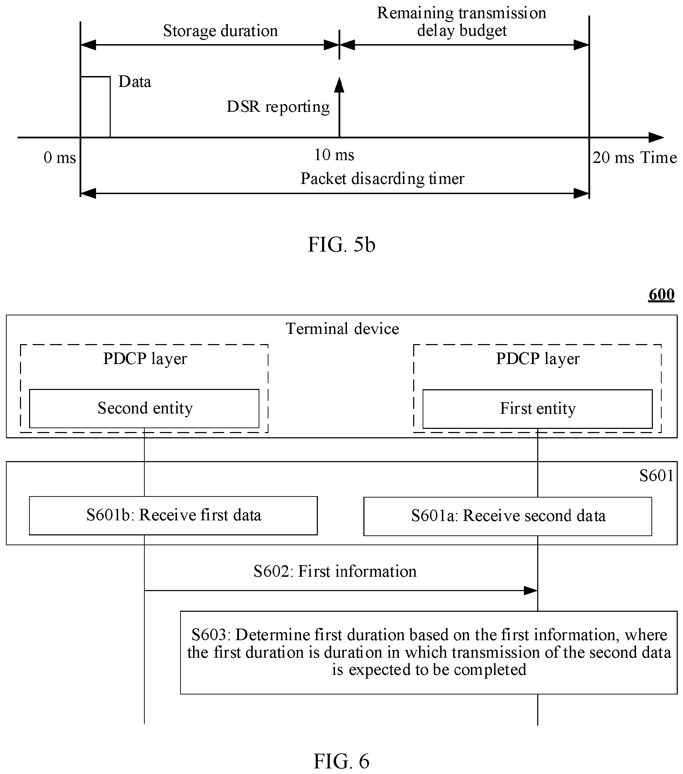

Using FIG. 5b as an example, the start moment of the storage duration of the data is the moment at which the data arrives at the terminal device, that is, the 0^{th} ms. Correspondingly, the start moment of the packet discarding timer is the 0^{th} ms. The end moment of the storage duration of the data is the reporting moment of the DSR, that is, the 10^{th} ms. Correspondingly, the start moment of the remaining transmission delay budget of the data is the reporting moment of the DSR, that is, the 10^{th} ms. The end moment of the remaining transmission delay budget of the data is the end moment of the packet discarding timer, that is, the 20^{th} ms.

It should be noted that, in FIG. 5a or FIG. 5b, the reported delay information in the DSR considers only a transmission requirement of single data (for example, one of video data, audio data, or tactile data), without considering a delay requirement for synchronization between a plurality of types of data transmission. Therefore, scheduled data may still exceed a synchronization requirement of an application end, affecting user experience.

In conclusion, the DSR in the related technology affects synchronization between a plurality of streams of data. For example, the DSR in the related technology does not consider a requirement affecting synchronization between the plurality of streams of data. As a result, the delay information in the DSR is inaccurate, or the DSR is not triggered in time, affecting synchronization between different streams of data.

In view of this, embodiments of this application provide a communication method. The method may be applied to the communication system shown in FIG. 1. In the communication method provided in embodiments of this application, a first entity of a terminal device receives first information from a first DRB. The first information is related to first data, and the first data belongs to the first DRB. The first entity of the terminal device determines first duration based on the first information. The first duration is duration in which transmission of second data is expected to be completed. The second data belongs to a second DRB. The first entity may be a PDCP entity corresponding to the second DRB, or the first entity is a MAC entity that processes the second data. The first duration is used to determine delay information of a status report (for example, the delay information of the status report includes delay information of the second data, and the first duration is used to determine the delay information of the second data), and/or the first duration is used to trigger sending of the status report.

That is, the first information is referred to in a process of determining, by the first entity of the terminal device, the duration (that is, the first duration) in which transmission of the second data is expected to be completed. Because the first information is related to the first data in the first DRB, the first duration determined based on the first information considers the first data, avoiding a transmission delay of considering only single data (that is, the second data), and laying a foundation for synchronization between the first data and the second data.

For example, when the first duration is used to determine the delay information of the status report (for example, the delay information of the status report includes the delay information of the second data, and the first duration is used to determine the delay information of the second data), because the first duration is duration with reference to a synchronization requirement between the first data and the second data, the delay information also considers the synchronization requirement of the second data, thereby improving accuracy of the delay information, and implementing synchronization between the first data and the second data.

For another example, when the first duration is used to trigger sending of the status report, because the first duration is duration with reference to a synchronization requirement between the first data and the second data, triggering of the status report also considers the synchronization requirement of the second data, thereby improving accuracy of triggering the status report, and implementing synchronization between the first data and the second data.

It should be understood that names of messages between devices, names of parameters in the messages, or the like in the following embodiments of this application are merely examples, and may have other names during specific implementation. This is not specifically limited in embodiments of this application.

### Embodiment 1

An example in which a first entity is a PDCP entity corresponding to a second DRB is used for description.

The following describes in detail a communication method provided in an embodiment of this application with reference to FIG. 6 to FIG. 13b. The communication method 600 provided in this embodiment of this application includes the following operations.

S601: A terminal device obtains first data and second data.

For example, the terminal device is described as follows:
The terminal device may be the terminal device in FIG. 1, or may be a component used in the terminal device, for example, a processor, a chip, or a chip system, or may be a logical module or software that can implement all or some functions of the terminal device. This is not limited in this application.

For example, S601 includes S601a and S601b:
S601a: A first entity of the terminal device receives second data.

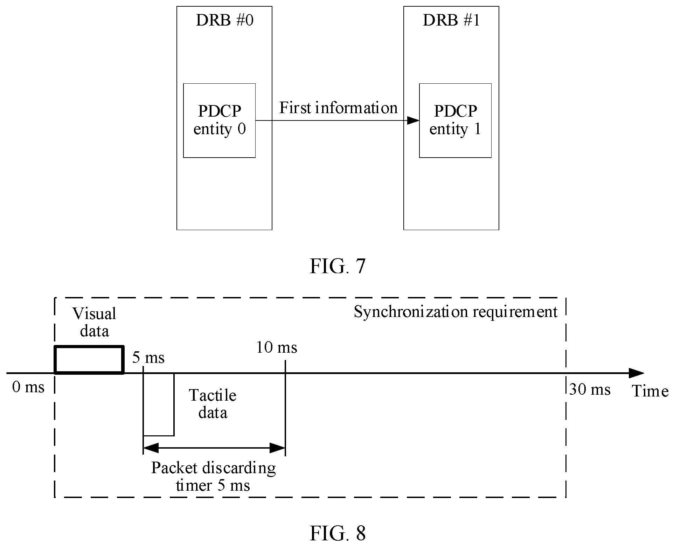

The first entity is described as follows:
For example, the first entity may be a PDCP entity corresponding to a second DRB. Using FIG. 7 as an example, the second DRB is a DRB #1, and the first entity is a PDCP entity 1.

It should be understood that the first entity may alternatively be another entity corresponding to the second DRB, for example, an SDAP entity or an RLC entity. In the communication method 600 in this application, the PDCP entity is used as an example to describe the first entity.

The second data is described as follows:
In this application, the second data belongs to the second DRB. It may be understood that the second data is transmitted through the second DRB. For example, the second data is transmitted to an RLC entity corresponding to the second DRB through the PDCP entity corresponding to the second DRB.

For example, the second data may be a PDU, a PDU set, or a data burst. For details, refer to the descriptions in the term explanation part. Details are not described again.

For example, the second data may be visual data, tactile data, or audio data.

Using FIG. 4 as an example, the second data may be visual data. Using FIG. 8 as an example, the second data may be tactile data. FIG. 4 and FIG. 8 show a synchronization requirement between the visual data and the tactile data.

When the first entity is the PDCP entity, in an example in which the second data is an SDU, S601a includes: The PDCP entity corresponding to the second DRB receives an SDU.

S601b: A second entity of the terminal device receives the first data.

The second entity is described as follows:
For example, the second entity may be a PDCP entity corresponding to a first DRB. Using FIG. 7 as an example, the first DRB is a DRB #0, and the second entity is a PDCP entity 0.

It should be understood that the second entity may alternatively be another entity corresponding to the first DRB, for example, an SDAP entity or an RLC entity. In the communication method 600 in this application, the PDCP entity is used as an example to describe the second entity.

The first data is described as follows:
In this application, the first data belongs to the first DRB. It may be understood that the first data is transmitted through the first DRB. For example, the first data is transmitted to an RLC entity corresponding to the first DRB through the PDCP entity corresponding to the first DRB.

For example, the first data may be a PDU, a PDU set, or a data burst. For details, refer to the descriptions in the term explanation part. Details are not described again.

In some embodiments, the first data may be at a granularity of an SDU. That is, each SDU that arrives at the PDCP entity (that is, the PDCP entity corresponding to the first DRB) may be considered as one piece of first data. Alternatively, the first data may not be at a granularity of an SDU. For example, every SDU separated by several SDUs is considered as one piece of first data. The several SDUs may be a fixed quantity of SDUs. For example, a third SDU in every three SDUs is considered as one piece of first data. For example, the first data is a third SDU, or the first data is a sixth SDU, or the first data is a ninth SDU. That is, the first data appears periodically, and a periodicity value is determined based on a quantity of SDUs. Alternatively, the several SDUs may be an uneven quantity of SDUs, and a fourth SDU after three SDUs are received at a time is considered as the first data. A fifth SDU after four SDUs are received at another time is considered as the first data.

In some other embodiments, the first data may be determined based on indication information X. The indication information X may be obtained from the terminal device. Alternatively, the first DRB carries an SDU of the indication information X. For example, a general packet radio service (general packet radio service, GPRS) tunneling protocol-user plane (GPRS tunnelling protocol for the user plane, GTP-U) packet header of the SDU carries the indication information X. The indication information X in the GTP-U packet header may indicate that the SDU is the first data. Alternatively, when a third timer is started, the indication information X in the GTP-U packet header may indicate to restart the third timer. For details, refer to descriptions of S621. Details are not described herein.

For example, the first data may be visual data, tactile data, or audio data.

Using FIG. 4 as an example, the first data may be tactile data. Using FIG. 8 as an example, the first data may be visual data.

For example, in an example in which the first data is an SDU, S601 includes: The PDCP entity corresponding to the first DRB receives an SDU.

It is easy to understand that the terminal device may first perform S601b, and then perform S601a. That is, the first data first arrives at the terminal device, and then the second data arrives at the terminal device.

It is easy to understand that the first data and the second data may be different data in a same service, for example, audio data and tactile data of a same service, or audio data and video data of a same service. For example, a same service may be understood as that data comes from a same server or a same group of servers. In some examples, the server may send indication information to determine whether different data belongs to a same service.

It is easy to understand that, in this application, the first DRB is associated with the second DRB. That is, for data of the second DRB, for example, the second data, in a process of determining duration (that is, the following first duration) in which transmission of the second data is expected to be completed, first information provided by the first DRB needs to be referred to. For details, refer to descriptions of S602 and S603. Details are not described herein.

It is easy to understand that, in this application, the association relationship between the first DRB and the second DRB may be configured by using higher layer signaling. For example, the first DRB is associated with the second DRB by using RRC signaling. Alternatively, the terminal device determines that the first DRB is associated with the second DRB. Alternatively, the first DRB is preconfigured to be associated with the second DRB. Alternatively, a network device dynamically indicates an association relationship between different DRBs. For example, the network device sends indication information. The indication information indicates that the first DRB is associated with the second DRB. How the terminal device determines the association relationship between the first DRB and the second DRB is not limited in this application.

For the second entity of the terminal device, after receiving the first data, the second entity performs S602:
S602: The second entity of the terminal device sends the first information to the first entity. Correspondingly, the first entity receives the first information from the second entity.

In this application, because the second entity is an entity corresponding to the first DRB, for example, the PDCP entity, it may also be understood that the first entity receives the first information from the first DRB.

The first information is described as follows:
For example, the first information indicates second duration or a first moment. A start moment of the second duration is a moment at which the first data arrives at the PDCP entity corresponding to the first DRB, or a start moment of the second duration is a moment at which the first information is received, or a start moment of the second duration is indicated by the first information. The first moment is an end moment of the second duration.

Using FIG. 4 as an example, the second duration may be duration from the 0^{th} ms to the 20^{th} ms, as shown in a dashed box in which "synchronization requirement" is located. The first moment is the 20^{th} ms, that is, an end moment of the dashed box in which "synchronization requirement" is located.

In this application, the second duration may be understood as follows: When the first data first arrives at the terminal device, a moment at which the first data arrives at the terminal device is used as a start moment, and transmission of the second data is completed in the second duration, so that the first data is synchronized with the second data. On the contrary, if transmission of the second data is not completed in the second duration, the first data is not synchronized with the second data, affecting user experience. The moment at which the first data arrives at the terminal device may be understood as a moment at which the first data arrives at the PDCP entity corresponding to the first DRB.

It is easy to understand that, in an example, the second duration may be semi-statically configured or preconfigured, for example, indicated to the first DRB (or the second entity) by using higher layer signaling or core network signaling. For example, a value of the second duration may be determined according to Table 1. For example, when the first data is tactile data, the second data is visual data, and the first data first arrives at the terminal device, it can be learned from Table 1 that the second duration is 20 ms. When the moment at which the first data arrives at the terminal device is known, the first moment may be determined based on the second duration.

It is easy to understand that, on a second entity side, in an example, when the second entity receives the first data, the second entity sends the first information to the first entity based on the first data. That is, that the first information is related to the first data may be understood as that the first data can trigger sending of the first information.

In another example, when the second entity receives indication information X, the second entity sends the first information to the first entity. The indication information X may be control plane signaling, or may be user plane information, for example, the indication information X carried in the first data. For the indication information X, refer to descriptions of S621. Details are not described herein. Alternatively, the indication information X may be signaling from the terminal device, for example, from an application layer of the terminal device. For example, for the second entity of the terminal device, after receiving the first data or the indication information X, the second entity performs S602.

For the first entity of the terminal device, after receiving the first information, the first entity performs S603:
S603: The first entity of the terminal device determines the first duration based on the first information.

The first duration is described as follows:
In this application, the first duration is the duration in which transmission of the second data is expected to be completed. It may be understood that the first duration is duration determined with reference to a synchronization requirement between the first data and the second data.

Using FIG. 4 as an example, the second data is visual data. A start moment of the first duration is the 5^{th} ms, that is, a moment at which the visual data arrives at the terminal device or the second data arrives at the PDCP entity corresponding to the second DRB. An end moment of the first duration is the end moment of the second duration, that is, the 20^{th} ms. If transmission of the second data is completed in the first duration, the first data can be synchronized with the second data.

It should be understood that the first duration may have another name, for example, valid transmission duration of the second data or a transmission delay budget of the second data. In this embodiment of this application, the first duration is used as an example for description.

The following describes a process of determining the first duration on a first entity side.

Solution 1: The first duration is determined based on the first information.

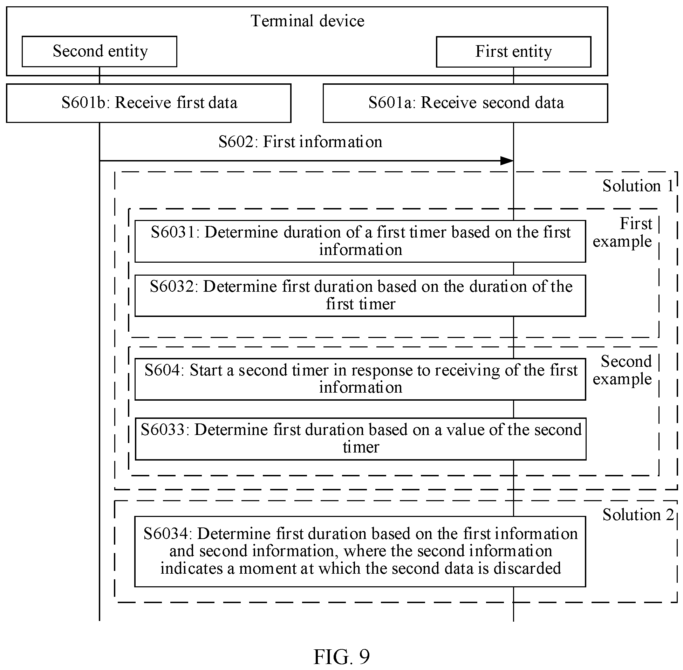

In the solution 1, in a first example, as shown in FIG. 9, S603 includes S6031 and S6032:
S6031: The first entity of the terminal device determines duration of a first timer based on the first information.

The first timer is described as follows:
For example, when the first timer expires, the terminal device discards the second data. That is, a moment at which the first timer expires is a moment at which the second data is discarded. The first timer may be a packet discarding timer. It should be understood that, with evolution of communication technologies, the packet discarding timer may have another name. In this application, the packet discarding timer is used as an example for description, and should not be construed as a limitation on this application.

For example, a start moment of the first timer (or the packet discarding timer) is a second moment. The second moment is a moment at which the second data arrives at the PDCP entity corresponding to the second DRB. Using FIG. 4 as an example, the second data is visual data, and the second moment is the 5^{th} ms.

For example, an end moment of the first timer (or the packet discarding timer) is the first moment. For the first moment, refer to the descriptions of S602. Details are not described again. It may be understood that, in a related technology, the duration or the end moment of the first timer (or the packet discarding timer) is configured and obtained by using RRC signaling. However, in this application, the end moment of the first timer (or the packet discarding timer) is obtained by using the first information.

S6032: The first entity of the terminal device determines the first duration based on the duration of the first timer.

The first duration is described as follows:
For example, a start moment of the first duration is the second moment. The second moment is the moment at which the second data arrives at the PDCP entity corresponding to the second DRB. For details, refer to the descriptions of S6031. Details are not described again.

For example, an end moment of the first duration is the end moment of the first timer (or the packet discarding timer). For the end moment of the first timer (or the packet discarding timer), refer to the descriptions of S6031. Details are not described again.

That is, the terminal device updates the duration of the first timer (or the packet discarding timer) based on the first information, and then determines the first duration based on the duration of the first timer (or the packet discarding timer). Because the second duration or the first moment indicated by the first information can meet a synchronization requirement between the first data and the second data, the duration of the first timer (or the packet discarding timer) determined based on the first information is duration that considers the synchronization requirement between the first data and the second data. When the first duration is determined based on the duration of the first timer (or the packet discarding timer), if transmission of the second data is completed in the first duration, synchronization between the first data and the second data can be implemented. In this case, when there is a synchronization requirement between a plurality of types of data, a remaining transmission delay budget of the second data in a DSR MAC CE may be determined based on an updated first timer (or packet discarding timer).

In the solution 1, in a second example, as shown in FIG. 9, this embodiment of this application further includes S604:
S604: The first entity starts a second timer in response to receiving of the first information.

For example, when the first entity receives the first information, the first entity of the terminal device starts the second timer.

In this application, starting the second timer may be understood as starting or restarting the second timer.

The second timer is described as follows:
For example, the second timer may be a synchronization timer. For example, the synchronization timer corresponding to the first entity side is denoted as a synchronization timer 1 or RX_SYNC_TIMER. Certainly, the second timer may have another name. In this application, the second timer is used as an example for description, and should not be construed as a limitation on this application.

For example, a start moment of the second timer is a receiving moment of the first information.

For example, when the first entity is the PDCP entity corresponding to the second DRB, the start moment of the second timer is a moment at which the PDCP entity (for example, the PDCP entity 1 in FIG. 7) corresponding to the second DRB receives the first information. It may be understood that the PDCP entity corresponding to the second DRB has a second timer. Each time one piece of first information is received, the second timer is started or restarted.

Alternatively, the start moment of the second timer may be indicated by the first information. It may be understood that the PDCP entity corresponding to the second DRB has a second timer. Each time one piece of first information is received, the second timer is started or restarted.

Alternatively, the start moment of the second timer may be a second moment. The second moment is a moment at which the second data arrives at the first entity. In this case, it may be understood that each piece of second data corresponds to one second timer, and is used to determine first duration corresponding to the corresponding second data. There may be one or more second timers.

It is easy to understand that, in this application, it may be considered that a moment at which the first entity receives the first information is the same as or close to a moment at which the first data arrives at the PDCP entity corresponding to the first DRB. Using FIG. 4 as an example, the start moment of the second timer may be the 0^{th} ms.

For example, an end moment of the second timer is the first moment. For the first moment, refer to the descriptions of S602. Details are not described again.

Alternatively, the description may be as follows: Duration of the second timer is the second duration. For the second duration, refer to the descriptions of S602. Details are not described again.

When the terminal device performs S604, as shown in FIG. 9, S603 includes S6033:
S6033: The first entity of the terminal device determines the first duration based on a value of the second timer.

For example, the first entity determines the first duration based on a real-time value of the second timer.

In a possible alternative description, the first entity of the terminal device determines the first duration based on an end moment of the second timer.

The first duration is described as follows:
For example, a start moment of the first duration is a second moment. The second moment is a moment at which the second data arrives at the PDCP entity corresponding to the second DRB. For details, refer to the descriptions of S6031. Details are not described again.

For example, an end moment of the first duration is the end moment of the second timer. For the end moment of the second timer, refer to the descriptions of S604. Details are not described again.

That is, the first entity starts the second timer in response to receiving of the first information, and then determines the first duration based on the value of the second timer (or the end moment of the second timer). Because the second duration or the first moment indicated by the first information can meet a synchronization requirement between the first data and the second data, the second timer is started based on the first information, and the duration of the second timer is duration that considers the synchronization requirement between the first data and the second data. When the first duration is determined based on the value of the second timer (or the end moment of the second timer), if transmission of the second data is completed in the first duration, synchronization between the first data and the second data can be implemented. In this case, when there is a synchronization requirement between a plurality of types of data, a remaining transmission delay budget of the second data in a DSR MAC CE may be determined based on the second timer.

Solution 2: The first duration is determined based on the first information and second information.

In the solution 2, as shown in FIG. 9, S603 includes S6034:
S6034: The first entity of the terminal device determines the first duration based on the first information and the second information.

The second information is described as follows:
In this application, the second information indicates a moment at which the second data is discarded.

For example, the second information may be RRC signaling. For details, refer to the descriptions in the term explanation part. Details are not described again.

For example, the second information is from a network device, that is, the second information is information sent by the network device to the terminal device.

It should be understood that, for the first entity of the terminal device, the first entity may first receive the first information and then receive the second information, or may first receive the second information and then receive the first information, or may receive the first information and the second information simultaneously. This is not limited in this embodiment of this application.

It should be noted that, in this application, the network device may be the network device in FIG. 1, or may be a component used in the network device, for example, a processor, a chip, or a chip system, or may be a logical module or software that can implement all or some functions of the network device. This is described uniformly herein, and is not repeated below.

The first duration is described as follows:
For example, a start moment of the first duration is a second moment. The second moment is a moment at which the second data arrives at the PDCP entity corresponding to the second DRB. For details, refer to the descriptions of S6031. Details are not described again.

For example, an end moment of the first duration is an earlier moment of the first moment and the discard moment (that is, the moment indicated by the second information).

For example, when the first moment is earlier than the discard moment (that is, the moment indicated by the second information), the end moment of the first duration is the first moment.

Using FIG. 4 as an example, the first moment is the 20^{th} ms, and the discard moment (that is, the moment indicated by the second information) is the 35^{th} ms. The end moment of the first duration is the first moment, that is, the 20^{th} ms.

For another example, when the discard moment (that is, the moment indicated by the second information) is earlier than or equal to the first moment, the end moment of the first duration is the discard moment (that is, the moment indicated by the second information).

Using FIG. 8 as an example, the first moment is the 30^{th} ms, and the discard moment (that is, the moment indicated by the second information) is the 10^{th} ms. The end moment of the first duration is the discard moment (that is, the moment indicated by the second information), that is, the 10^{th} ms.

That is, in a process of determining the first duration by the terminal device, both the first information and the second information are referred to. When the first duration is determined with reference to the first information, the second duration or the first moment indicated by the first information can meet a synchronization requirement between the first data and the second data. Therefore, when the first duration is determined based on the first information, if transmission of the second data is completed in the first duration, synchronization between the first data and the second data can be implemented. In addition, when the first duration is determined with reference to the second information, the moment indicated by the second information can enable the terminal device to learn of a transmission delay requirement of the second data. Therefore, when the first duration is determined based on the second information, if transmission of the second data is completed in the first duration, the transmission delay requirement of the second data can be met.

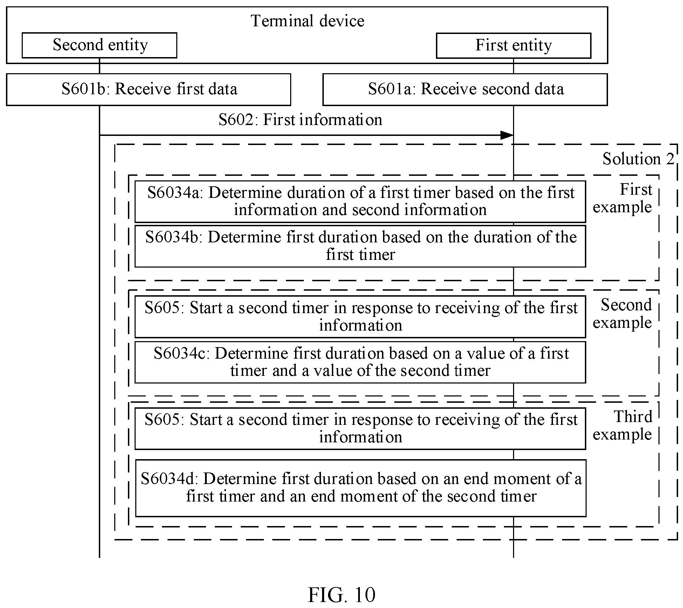

In the solution 2, in a first example, as shown in FIG. 10, S6034 includes S6034a and S6034b:
S6034a: The first entity of the terminal device determines duration of a first timer based on the first information and the second information.

The first timer is described as follows:
For example, the first timer may be a packet discarding timer. For details, refer to the descriptions of S6031. Details are not described again.

For example, a start moment of the first timer (or the packet discarding timer) is a second moment. The second moment is a moment at which the second data arrives at the PDCP entity corresponding to the second DRB. For details, refer to the descriptions of S6031. Details are not described again.

For example, an end moment of the first timer (or the packet discarding timer) is an earlier moment of the first moment and the discard moment (that is, the moment indicated by the second information).

For example, when the first moment is earlier than (or equal to) the discard moment (that is, the moment indicated by the second information), the end moment of the first timer (or the packet discarding timer) is the first moment.

For another example, when the discard moment (that is, the moment indicated by the second information) is earlier than or equal to the first moment, the end moment of the first timer (or the packet discarding timer) is the discard moment (that is, the moment indicated by the second information).

It may be understood that, in a related technology, the end moment of the first timer (or the packet discarding timer) is configured and obtained by using RRC signaling. However, in this application, the end moment of the first timer (or the packet discarding timer) is obtained by using the first information and the second information. The second information may be information in the RRC signaling, for example, indication information of the moment at which the second data is discarded.

S6034b: The first entity of the terminal device determines the first duration based on the duration of the first timer.

The first duration is described as follows:
For example, a start moment of the first duration is the second moment. The second moment is the moment at which the second data arrives at the PDCP entity corresponding to the second DRB. For details, refer to the descriptions of S6031. Details are not described again.

For example, an end moment of the first duration is the end moment of the first timer (or the packet discarding timer). For the end moment of the first timer (or the packet discarding timer), refer to the descriptions of S6034a. Details are not described again.

That is, the terminal device updates the duration of the first timer (or the packet discarding timer) based on the first information and the second information, and then determines the first duration based on the duration of the first timer (or the packet discarding timer). The second duration or the first moment indicated by the first information can meet a synchronization requirement between the first data and the second data, and the moment indicated by the second information can enable the terminal device to learn of a transmission delay requirement of the second data. Therefore, the duration of the first timer (or the packet discarding timer) determined based on the first information and the second information considers both the synchronization requirement between the first data and the second data, and the transmission delay requirement of the second data. When the first duration is determined based on the duration of the first timer (or the packet discarding timer), if transmission of the second data is completed in the first duration, synchronization between the first data and the second data can be implemented, and the transmission delay requirement of the second data can be met. In this case, when there is a synchronization requirement between a plurality of types of data, a remaining transmission delay budget of the second data in a DSR MAC CE may be determined based on an updated first timer (or packet discarding timer).

In the solution 2, in a second example, as shown in FIG. 10, this embodiment of this application further includes S605:
S605: The first entity starts a second timer in response to receiving of the first information.

For an implementation process of S605, refer to the descriptions of S604. Details are not described again.

When the terminal device performs S605, as shown in FIG. 10, S6034 includes S6034c:
S6034c: The first entity of the terminal device determines the first duration based on a value of the first timer and a value of the second timer.

For example, the first entity determines the first duration based on a real-time value of the first timer and a real-time value of the second timer.

The first timer is described as follows:
For example, the first timer may be a packet discarding timer. For details, refer to the descriptions of S6031. Details are not described again.

For example, a start moment of the first timer (or the packet discarding timer) is a second moment. The second moment is a moment at which the second data arrives at the PDCP entity corresponding to the second DRB. For details, refer to the descriptions of S6031. Details are not described again.

For example, an end moment of the first timer (or the packet discarding timer) is the discard moment (that is, the moment indicated by the second information). It may be understood that duration or the end moment of the first timer (or the packet discarding timer) is configured and obtained based on RRC signaling.

For the second timer, refer to the descriptions of S604. Details are not described again.

The first duration is described as follows:
For example, a start moment of the first duration is the second moment. The second moment is the moment at which the second data arrives at the PDCP entity corresponding to the second DRB. For details, refer to the descriptions of S6031. Details are not described again.

For example, an end moment of the first duration is an earlier moment of the end moment of the first timer (or the packet discarding timer) and the end moment of the second timer.

For example, when the first moment is earlier than (or equal to) the discard moment (that is, the moment indicated by the second information), the end moment of the first duration is the end moment of the second timer.

For another example, when the discard moment (that is, the moment indicated by the second information) is earlier than or equal to the first moment, the end moment of the first duration is the end moment of the first timer (or the packet discarding timer).

That is, the first entity starts the second timer in response to receiving of the first information, and then determines the first duration based on the value of the first timer and the value of the second timer. Because the second duration or the first moment indicated by the first information can meet a synchronization requirement between the first data and the second data, the second timer is started based on the first information, and duration of the second timer is duration that considers the synchronization requirement between the first data and the second data. In addition, the moment indicated by the second information can enable the terminal device to learn of a transmission delay requirement of the second data. In this way, the first timer is started based on the second information, and the duration of the first timer is duration that considers the transmission delay requirement of the second data. When the first duration is determined based on the value of the first timer (or the packet discarding timer) and the value of the second timer, if transmission of the second data is completed in the first duration, synchronization between the first data and the second data can be implemented, and the transmission delay requirement of the second data can be met. In this case, when there is a synchronization requirement between a plurality of types of data, a remaining transmission delay budget of the second data in a DSR MAC CE may be determined based on the first timer and the second timer. For example, a MAC entity determines the remaining transmission delay budget of the second data in the DSR MAC CE based on the first timer and the second timer.

In the solution 2, in a third example, as shown in FIG. 10, this embodiment of this application further includes S605:
S605: The first entity starts a second timer in response to receiving of the first information.

For an implementation process of S605, refer to the descriptions of S604. Details are not described again.

When the terminal device performs S605, as shown in FIG. 10, S6034 includes S6034d:
S6034d: The first entity of the terminal device determines the first duration based on an end moment of the first timer and an end moment of the second timer.

For example, the end moment of the first timer (or the packet discarding timer) is the discard moment (that is, the moment indicated by the second information). It may be understood that duration or the end moment of the first timer (or the packet discarding timer) is configured and obtained based on RRC signaling. For details, refer to the descriptions of S6034c. Details are not described again.

For example, the end moment of the second timer is the first moment. For details, refer to the descriptions of S604. Details are not described again.

The first duration is described as follows:
For example, a start moment of the first duration is the second moment. The second moment is the moment at which the second data arrives at the PDCP entity corresponding to the second DRB. For details, refer to the descriptions of S6034d. Details are not described again.

For example, an end moment of the first duration is an earlier moment of the end moment of the first timer (or the packet discarding timer) and the end moment of the second timer. For details, refer to the descriptions of S6034c. Details are not described again.

That is, the first entity starts the second timer in response to receiving of the first information, and then determines the first duration based on the end moment of the first timer and the end moment of the second timer. Because the second duration or the first moment indicated by the first information can meet a synchronization requirement between the first data and the second data, the second timer is started based on the first information, and duration of the second timer is a duration that considers the synchronization requirement between the first data and the second data. In addition, the moment indicated by the second information can enable the terminal device to learn of a transmission delay requirement of the second data. In this way, the first timer is started based on the second information, and the duration of the first timer is duration that considers the transmission delay requirement of the second data. When the first duration is determined based on the end moment of the first timer (or the packet discarding timer) and the end moment of the second timer, if transmission of the second data is completed in the first duration, synchronization between the first data and the second data can be implemented, and the transmission delay requirement of the second data can be met. In this case, when there is a synchronization requirement between a plurality of types of data, a remaining transmission delay budget of the second data in a DSR MAC CE may be determined based on the first timer and the second timer.

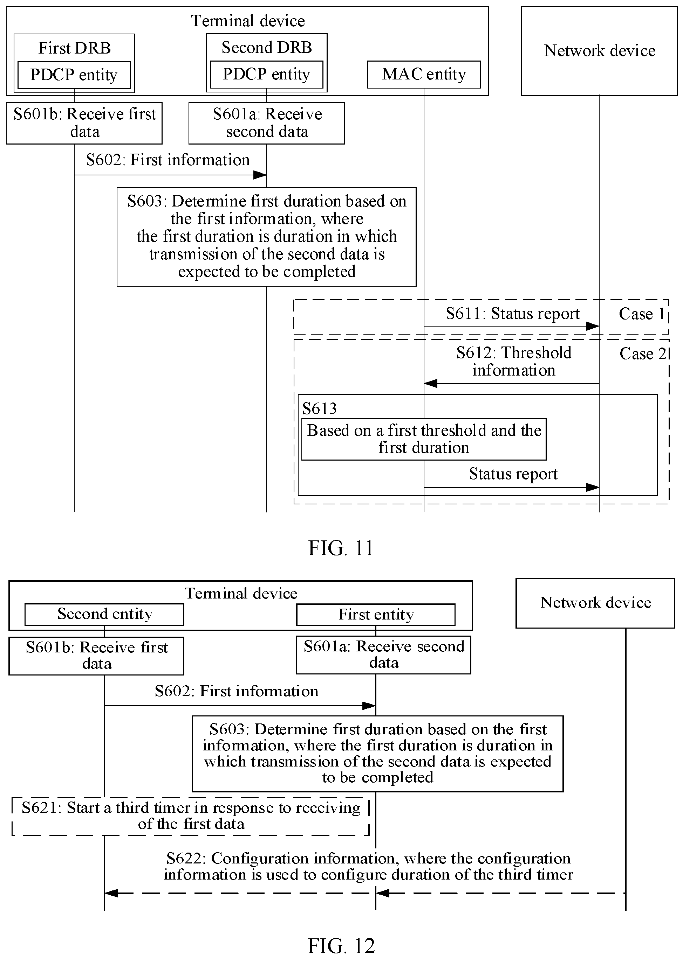

In some embodiments, as shown in a dashed box in which "case 1" in FIG. 11 is located, the communication method in this embodiment of this application further includes S611:
S611: A MAC entity of the terminal device sends a status report.

For example, the MAC entity of the terminal device sends the status report to the network device, where the status report includes delay information of the second data. Correspondingly, the network device receives the status report from the terminal device.

The MAC entity of the terminal device is configured to process the second data.

Using FIG. 7 an example, when the first entity of the terminal device is the PDCP entity (for example, the PDCP entity 1 in FIG. 7) corresponding to the first DRB, the first entity provides the first duration for the MAC entity.

The status report is described as follows:
For example, the status report may be a DSR. For details, refer to the descriptions in the term explanation part. Details are not described again.

For example, the delay information of the status report is determined based on the first duration. It may be understood that the status report includes the delay information of the second data, and the delay information of the second data is determined based on the first duration.

For example, the delay information of the second data is a remaining transmission delay budget, and the remaining transmission delay budget is determined based on the first duration. For example, a start moment of the remaining transmission delay budget is a sending moment of the status report, for example, a sending moment of initial transmission. An end moment of the remaining transmission delay budget is the end moment of the first duration.

For another example, the delay information of the second data is determined based on storage duration. The storage duration is determined based on the first duration. For example, a start moment of the storage duration is the start moment of the first duration. An end moment of the storage duration is a sending moment of the status report.

That is, when the terminal device reports the status report, the delay information of the second data carried in the status report is determined based on the first duration. Because the first duration is duration with reference to a synchronization requirement between the first data and the second data, the delay information determined based on the first duration also considers the synchronization requirement of the second data. That is, the terminal device can report "delay information considering a synchronization requirement between different data" to the network device. Correspondingly, if the network device schedules a transmission resource for the terminal device based on the delay information, so that transmission of the second data is completed in the first duration, the first data is synchronized with the second data, thereby improving user experience.

In some embodiments, as shown in a dashed box in which "case 2" in FIG. 11 is located, the communication method in this embodiment of this application further includes S612 and S613:
S612: The network device sends threshold information to the terminal device. Correspondingly, the terminal device receives the threshold information from the network device.

The threshold information indicates a first threshold.

S613: The MAC entity of the terminal device determines, based on the first threshold and the first duration, to trigger a status report.

For example, the status report includes delay information of the second data, and the delay information of the second data is determined based on the first duration.

For example, the delay information of the second data is a remaining transmission delay budget, and a start moment of the remaining transmission delay budget is a current system moment. It should be understood that the current system moment changes with time. A unit of the current system moment may be one of the following: a second, a millisecond, a slot, a subframe, a frame, and the like. This is not limited in this application.

An end moment of the remaining transmission delay budget is the end moment of the first duration. When the remaining transmission delay budget is less than or equal to the first threshold, the MAC entity triggers the status report. When the remaining transmission delay budget is greater than the first threshold, the MAC entity does not trigger the status report.

After the MAC entity of the terminal device triggers the status report, when there is an available uplink resource, if triggering of the status report is not canceled, or the uplink resource cannot carry a data amount of all data indicated by the status report, the status report is sent on the uplink resource. Correspondingly, the network device receives the status report from the terminal device.

For example, for the MAC entity and the status report, refer to the descriptions of S611. Details are not described again.

It may be understood that triggering of the status report is determined based on the first duration. Because the first duration is duration with reference to a synchronization requirement between the first data and the second data, when the terminal device determines, with reference to the first duration, whether to trigger the status report, the network device can schedule a transmission resource for the terminal device in time based on the status report, so that transmission of the second data is completed in the first duration as much as possible, thereby implementing synchronization between the first data and the second data, and improving user experience.

The following describes some operations of the second entity on the second entity side.

In some embodiments, as shown in FIG. 12, the communication method 600 in this embodiment of this application further includes S621:
S621: The second entity starts a third timer in response to receiving of the first data. For example, when the second entity of the terminal device receives the first data, the second entity starts the third timer.

In this application, starting the third timer may be understood as starting or restarting the third timer.

The third timer is described as follows:
For example, the third timer may be a synchronization timer. For example, the synchronization timer corresponding to the second entity side is denoted as a synchronization timer 0 or TX_SYNC_TIMER. Certainly, the third timer may have another name. In this application, the third timer is used as an example for description, and should not be construed as a limitation on this application.

For example, a start moment of the third timer is a receiving moment of the first data.

For example, when the second entity is the PDCP entity (for example, the PDCP entity 0 in FIG. 7) corresponding to the first DRB, the start moment of the third timer is a moment at which the PDCP entity corresponding to the first DRB receives the first data.

In a possible alternative manner, S621 may be replaced with that the second entity starts the third timer in response to receiving of indication information X.

The indication information X indicates to start or restart the third timer.

For example, the indication information X may be control plane signaling, for example, RRC layer signaling received by the terminal device from a network device. Alternatively, the indication information X may be user plane information, for example, the indication information X carried in the first data. For example, the first data is an SDU, and a GTP-U packet header of the SDU carries the indication information X. Alternatively, the indication information X may be signaling from the terminal device, for example, from an application layer of the terminal device. That is, for example, a start moment of the third timer may be a receiving moment of the first data or a receiving moment of the indication information X.

For example, the first data carries the indication information X, and the indication information X may be distinguished by using different values. For example, when the indication information X is a first value, the second entity starts or restarts the third timer. Alternatively, when the indication information X is a second value, the second entity does not need to start (or does not start or restart) the third timer.

For example, the indication information X may further indicate a moment at which the third timer is started or restarted. The moment indicated by the indication information X may be earlier than, equal to, or later than the receiving moment of the first data. This is not limited in this application.

It is easy to understand that, in the foregoing two manners of starting the third timer, an end moment of the third timer is the first moment. For the first moment, refer to the descriptions of S602. Details are not described again. Alternatively, the description may be as follows: Duration of the third timer is the second duration. For the second duration, refer to the descriptions of S602. Details are not described again.

It is easy to understand that, in this application, the duration or the end moment of the third timer may represent a synchronization requirement of the second data. In addition, the duration (that is, the foregoing second duration) or the end moment (that is, the foregoing first moment) of the third timer may be indicated by the first information, and provided for the PDCP entity corresponding to the second DRB, so that the PDCP entity corresponding to the second DRB determines the duration in which transmission of the second data is expected to be completed. For details, refer to the descriptions of S602 and S603. Details are not described again.

In some embodiments, as shown in FIG. 12, the communication method 600 in this embodiment of this application further includes S622:
S622: The network device sends configuration information to the terminal device. Correspondingly, the terminal device receives the configuration information from the network device.

The configuration information is used to configure the duration of the third timer to the second duration. For the second duration, refer to the descriptions of S602. Details are not described again. That is, the network device configures the second duration for the terminal device.

For the terminal device, after obtaining the configuration information, the second entity of the terminal device sets the second duration configured by using the configuration information to the duration of the third timer.

### Embodiment 2

An example in which a first entity is a MAC entity that processes second data is used for description.

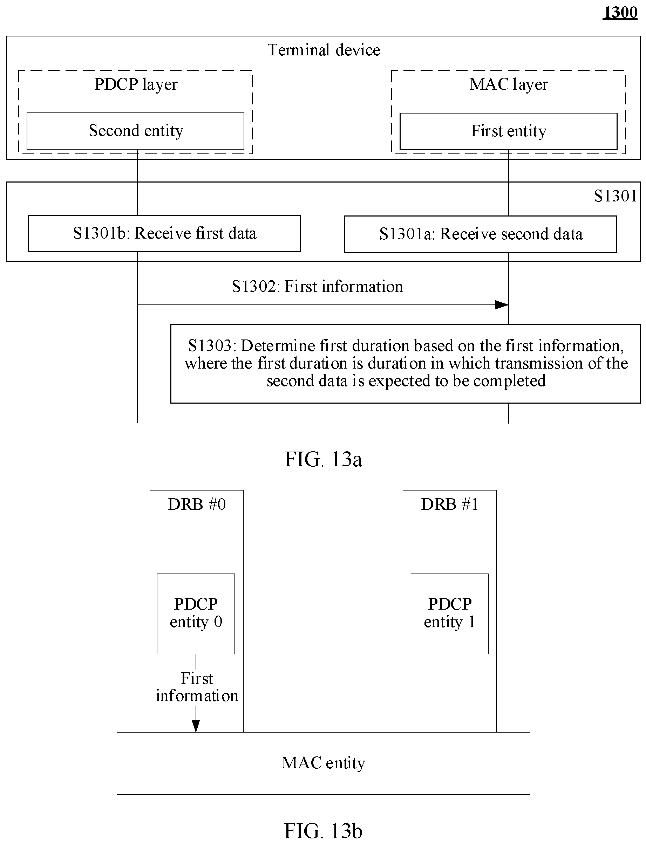

The following describes in detail a communication method provided in an embodiment of this application with reference to FIG. 13a and FIG. 13b. The communication method 1300 provided in this embodiment of this application includes the following operations.

S1301: A terminal device obtains first data and second data.

For example, for the terminal device, refer to the descriptions of S601. Details are not described again.

For example, S1301 includes S1301a and S1301b:
S1301a: A first entity of the terminal device receives the second data.

The first entity is described as follows:
The first entity may be the MAC entity that processes the second data, for example, a MAC entity in FIG. 13b.

For the second data, refer to the descriptions of S601a. Details are not described again.

When the first entity is the MAC entity, in an example in which a second DRB is a DRB #1, data of different DRBs is aggregated on the MAC entity. Correspondingly, the MAC entity receives the second data of the DRB #1.

S1301b: A second entity of the terminal device receives the first data.

For S1301b, refer to the descriptions of S601b. Details are not described again.

For the second entity of the terminal device, after receiving the first data, the second entity performs S1302:
S1302: The second entity of the terminal device sends first information to the first entity. Correspondingly, the first entity receives the first information from the second entity.

In this application, the first entity in S602 is a PDCP entity corresponding to the second DRB. However, in S1302, the first entity is the MAC entity that processes the second data. That is, execution bodies are different. Correspondingly, when the first entity is the MAC entity, the second entity sends the first information to the MAC entity. Correspondingly, the MAC entity receives the first information from the second entity.

For the first information, refer to the descriptions of S602. Details are not described again.

For the first entity of the terminal device, after receiving the first information, the first entity performs S1303:
S1303: The first entity of the terminal device determines first duration based on the first information.

For the first duration, refer to the descriptions of S603. Details are not described again.

In this application, the first entity in S603 is a PDCP entity corresponding to the second DRB. However, in S1303, the first entity is the MAC entity that processes the second data. That is, execution bodies are different. Correspondingly, when the first entity is the MAC entity, the MAC entity determines the first duration based on the first information.

For example, an implementation process of S1303 is described with reference to two solutions (the following solution 3 and solution 4):
Solution 3: The first duration is determined based on the first information.

In the solution 3, in a first example, S1303 includes the following operations.

First, the MAC entity of the terminal device determines duration of a first timer based on the first information.

For the first timer, refer to the descriptions of S6031. Details are not described again. For example, a start moment of the first timer is a second moment, that is, a moment at which the second data arrives at the PDCP entity corresponding to the second DRB, and an end moment of the first timer is a first moment.

Then, the MAC entity of the terminal device determines the first duration based on the duration of the first timer.

A start moment of the first duration is the second moment, and an end moment of the first duration is the end moment of the first timer. For details, refer to the descriptions of S6032. Details are not described again.

In the solution 3, in a second example, this embodiment of this application further includes the following operations.

First, the MAC entity of the terminal device starts or restarts a second timer in response to receiving of the first information.

For the second timer, refer to the descriptions of S604. Details are not described again. Then, S1303 includes the following operation: The MAC entity of the terminal device determines the first duration based on a value of the second timer.

An end moment of the second timer is a first moment. For details, refer to the descriptions of S6033. Details are not described again.

A start moment of the first duration is a second moment, that is, a moment at which the second data arrives at the PDCP entity corresponding to the second DRB. For details, refer to the descriptions of S6033. Details are not described again.

An end moment of the first duration is the end moment of the second timer.

Solution 4: The first duration is determined based on the first information and second information.

In the solution 4, S1303 includes the following operation.

The MAC entity of the terminal device determines the first duration based on the first information and the second information.

The second information indicates a moment at which the second data is discarded. For details, refer to the descriptions of S6034. Details are not described again.

It should be understood that, for the MAC entity of the terminal device, the MAC entity may first receive the first information and then receive the second information, or may first receive the second information and then receive the first information, or may receive the first information and the second information simultaneously. This is not limited in this embodiment of this application.

A start moment of the first duration is a second moment, that is, a moment at which the second data arrives at the PDCP entity corresponding to the second DRB. For details, refer to the descriptions of S6034. Details are not described again.

An end moment of the first duration is an earlier moment of the first moment and the discard moment (that is, the moment indicated by the second information). For details, refer to the descriptions of S6034. Details are not described again.

In the solution 4, in a first example, S1303 includes the following operations.

First, the MAC entity of the terminal device determines duration of a first timer based on the first information and the second information.

A start moment of the first timer (or the packet discarding timer) is a second moment, that is, a moment at which the second data arrives at the PDCP entity corresponding to the second DRB. For details, refer to the descriptions of S6031. Details are not described again.

An end moment of the first timer (or the packet discarding timer) is an earlier moment of the first moment and the discard moment (that is, the moment indicated by the second information). For details, refer to the descriptions of S6034a. Details are not described again.

Then, the MAC entity of the terminal device determines the first duration based on the duration of the first timer.

A start moment of the first duration is the second moment, that is, the second moment is the moment at which the second data arrives at the PDCP entity corresponding to the second DRB. For details, refer to the descriptions of S6031. Details are not described again.

An end moment of the first duration is the end moment of the first timer (or the packet discarding timer). For details, refer to the descriptions of S6034b. Details are not described again.

In the solution 4, in a second example, this embodiment of this application further includes the following operations.

First, the MAC entity starts a second timer in response to receiving of the first information.

For the second timer, refer to the descriptions of S604. Details are not described again.

Then, S1303 includes the following operation:
The MAC entity of the terminal device determines the first duration based on a value of the first timer and a value of the second timer.

A start moment of the first timer (or the packet discarding timer) is a second moment, that is, a moment at which the second data arrives at the PDCP entity corresponding to the second DRB. For details, refer to the descriptions of S6031. Details are not described again.

An end moment of the first timer (or the packet discarding timer) is the discard moment (that is, the moment indicated by the second information). For details, refer to the descriptions of S6034c. Details are not described again.

A start moment of the first duration is a second moment, that is, a moment at which the second data arrives at the PDCP entity corresponding to the second DRB. For details, refer to the descriptions of S6031. Details are not described again.

An end moment of the first duration is an earlier moment of the end moment of the first timer (or the packet discarding timer) and the end moment of the second timer. For details, refer to the descriptions of S6034c. Details are not described again.

In the solution 4, in a third example, this embodiment of this application further includes the following operations.

First, the MAC entity starts a second timer in response to receiving of the first information.

For the second timer, refer to the descriptions of S605. Details are not described again.

Then, S1303 includes the following operation: The MAC entity of the terminal device determines the first duration based on an end moment of the first timer and an end moment of the second timer.

For the first timer and the second timer, refer to the descriptions of the second example in the solution 4. Details are not described again.

A start moment of the first duration is a second moment, that is, a moment at which the second data arrives at the PDCP entity corresponding to the second DRB. For details, refer to the descriptions of S6034d. Details are not described again.

An end moment of the first duration is an earlier moment of the end moment of the first timer (or the packet discarding timer) and the end moment of the second timer. For details, refer to the descriptions of S6034c. Details are not described again.

In the solution 4, in a fourth example, this embodiment of this application further includes the following operations.

First, the PDCP entity starts a third timer in response to receiving of the first data.

For the third timer, refer to the descriptions of S621. Details are not described again. For example, the second entity starts the third timer in response to receiving of the first data.

Then, S1303 includes the following operation: The MAC entity of the terminal device determines the first duration based on an end moment of the first timer and an end moment of the third timer.

For the first timer, refer to the descriptions of the first example in the solution 4. Details are not described again.

A start moment of the third timer is a receiving moment of the first data or a moment at which the first data arrives at a first DRB. The end moment of the third timer is a first moment.

A start moment of the first duration is a second moment, that is, a moment at which the second data arrives at the PDCP entity corresponding to the second DRB. For details, refer to the descriptions of S6034d. Details are not described again.

An end moment of the first duration is an earlier moment of the end moment of the first timer (or the packet discarding timer) and the end moment of the third timer.

In some embodiments, the MAC entity sends a status report after determining the first duration. For details, refer to the descriptions of S611. Details are not described again.

In some embodiments, after the MAC entity determines the first duration, the MAC entity of the terminal device triggers the status report based on the first duration, for example, triggers the status report based on the first duration and a first threshold. For details, refer to descriptions of S612 and S613. Details are not described again.

In some embodiments, on a second entity side, the second entity starts the third timer in response to receiving of the first data. For details, refer to the descriptions of S621. Details are not described again.

### Embodiment 3

An example in which a third entity is a PDCP entity corresponding to a third DRB is used for description.

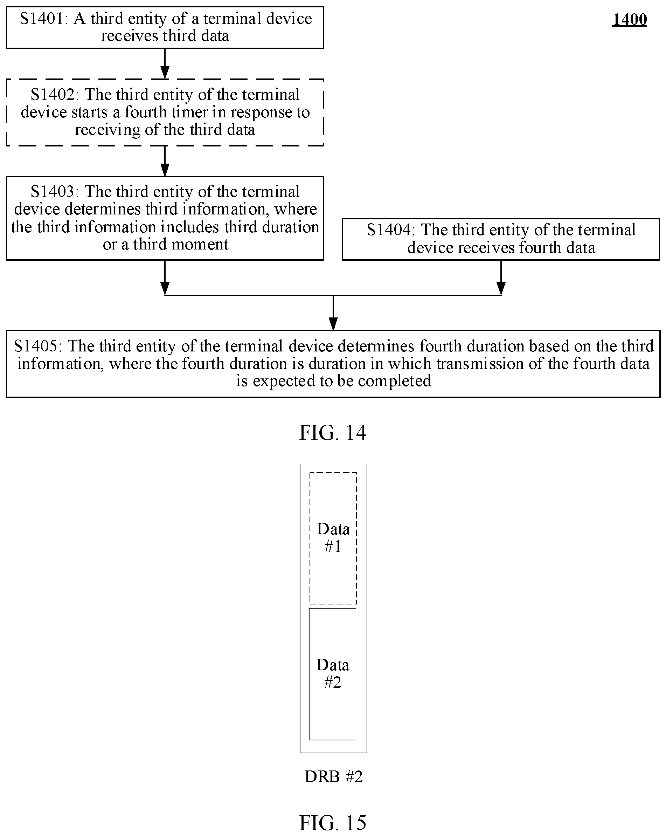

As shown in FIG. 14, the communication method 1400 provided in this embodiment of this application includes the following operations.

S1401: A third entity of a terminal device receives third data.

The third entity is described as follows:
For example, the third entity may be a PDCP entity corresponding to a third DRB. Using FIG. 15 as an example, the third DRB is a DRB #2.

It should be understood that the third entity may alternatively be another entity corresponding to the third DRB, for example, an SDAP entity or an RLC entity. In the communication method 1400 in this application, the PDCP entity is used as an example to describe the third entity.

The third data is described as follows:
In this application, the third data belongs to the third DRB. It may be understood that the third data is transmitted through the third DRB. For example, the third data is transmitted to an RLC entity corresponding to the third DRB through the PDCP entity corresponding to the third DRB.

For example, the third data may be a PDU, a PDU set, or a data burst. For details, refer to the descriptions in the term explanation part. Details are not described again.

For example, the third data may be visual data, tactile data, or audio data.

Using FIG. 4 as an example, the third data may be tactile data. Using FIG. 8 as an example, the third data may be visual data. Using FIG. 15 as an example, the third data may be data #2. FIG. 4 and FIG. 8 show a synchronization requirement between the visual data and the tactile data.

When the third entity is the PDCP entity, in an example in which the third data is an SDU, S1401 includes: The PDCP entity (that is, the third entity) corresponding to the third DRB receives an SDU.

Optionally, in response to receiving of the third data, some related operations of the third entity are described:
In some embodiments, as shown in FIG. 14, the communication method 1400 in this embodiment of this application further includes S1402:
(Optionally) S1402: The third entity of the terminal device starts a fourth timer in response to receiving of the third data.

For example, when the third entity receives the third data, the third entity of the terminal device starts the fourth timer.

In this application, starting the fourth timer may be understood as starting or restarting the fourth timer.

The fourth timer is described as follows:
For example, the fourth timer may be a synchronization timer. Certainly, the fourth timer may have another name. In this application, the fourth timer is used as an example for description, and should not be construed as a limitation on this application.

A start moment of the fourth timer is described as follows:
For example, the start moment of the fourth timer is a receiving moment of the third data.

For example, when the third entity is the PDCP entity corresponding to the third DRB, the start moment of the fourth timer is a moment at which the PDCP entity corresponding to the third DRB receives the third data. It may be understood that the PDCP entity corresponding to the third DRB has a fourth timer. Each time one piece of third data is received, the fourth timer is started or restarted.

Using FIG. 4 as an example, the start moment of the fourth timer may be the 0^{th} ms.

Duration or an end moment of the fourth timer is described as follows:
For example, the duration of the fourth timer is third duration, or the end moment of the fourth timer is a third moment. A start moment of the third duration is a moment at which the third data arrives at the PDCP entity corresponding to the third DRB. The third moment is an end moment of the third duration.

Using FIG. 4 as an example, the third duration may be duration from the 0^{th} ms to the 20^{th} ms, as shown in a dashed box in which "synchronization requirement" is located. The third moment is the 20^{th} ms, that is, an end moment of the dashed box in which "synchronization requirement" is located.

In this application, the third duration may be understood as follows: When the third data first arrives at the terminal device, a moment at which the third data arrives at the terminal device is used as a start moment, and transmission of fourth data is completed in the third duration, so that the third data is synchronized with the fourth data. On the contrary, if transmission of the fourth data is not completed in the third duration, the third data is not synchronized with the fourth data, affecting user experience. The moment at which the third data arrives at the terminal device may be understood as a moment at which the third data arrives at the PDCP entity corresponding to the third DRB.

It is easy to understand that, in an example, the third duration may be semi-statically configured or preconfigured, for example, indicated to the third DRB (or the third entity) by using higher layer signaling or core network signaling. For example, a value of the third duration may be determined according to Table 1. For details, refer to the descriptions of a process of determining the second duration. Details are not described again.

In a possible alternative manner, S1402 may be replaced with that the third entity starts the fourth timer in response to receiving of indication information Y. The indication information Y indicates to start or restart the fourth timer.

For example, the indication information Y may be control plane signaling, for example, RRC layer signaling received by the terminal device from a network device. Alternatively, the indication information Y may be user plane information, for example, indication information Y carried in the third data. For example, the third data is an SDU, and a GTP-U packet header of the SDU carries the indication information Y. Alternatively, the indication information Y may be signaling from the terminal device, for example, from an application layer of the terminal device. That is, for example, a start moment of the fourth timer may be a receiving moment of the third data or a receiving moment of the indication information Y.

For example, the third data carries the indication information Y, and the indication information Y may be distinguished by using different values. For example, when the indication information Y is a first value, the third entity starts or restarts the fourth timer. On the contrary, when the indication information Y is a second value, the third entity does not need to start (or does not start or restart) the fourth timer.

For example, the indication information Y may further indicate a moment at which the fourth timer is started or restarted. The moment indicated by the indication information Y may be earlier than, equal to, or later than the receiving moment of the third data. This is not limited in this application.

It should be added that, when the third entity starts the fourth timer in response to receiving of the indication information Y, the duration of the fourth timer is the third duration, or the end moment of the fourth timer is the third moment.

Optionally, the duration of the fourth timer may be configured on a network device side. For example, the network device sends configuration information to the terminal device. Correspondingly, the terminal device receives the configuration information from the network device. The configuration information is used to configure the duration of the fourth timer to the third duration. That is, the network device configures the third duration for the terminal device. For the terminal device, after obtaining the configuration information, the third entity of the terminal device sets the third duration configured by using the configuration information to the duration of the fourth timer.

S 1403: The third entity of the terminal device determines third information.

The third information is described as follows:
The third information includes the third duration or the third moment. The start moment of the third duration is the moment at which the third data arrives at the PDCP entity corresponding to the third DRB, and the third moment is the end moment of the third duration. For details, refer to the descriptions of S1402.

For example, when S1402 is performed, the third entity determines the third information based on the fourth timer.

It is easy to understand that, on a third entity side, in an example, when the third entity receives the third data, the third entity determines the third information based on the third data. That is, that the third information is related to the third data may be understood as that the third data can trigger determining of the third information.

In another example, when the third entity receives the indication information Y, the third entity determines the third information. That is, that the third information is related to the information Y may be understood as that the information Y can trigger determining of the third information. For the indication information Y, refer to the descriptions of S1402. Details are not described again.

S1404: The third entity of the terminal device receives the fourth data.

The fourth data is described as follows:
In this application, the fourth data also belongs to the third DRB.

For example, the fourth data may be a PDU, a PDU set, or a data burst. For details, refer to the descriptions in the term explanation part. Details are not described again.

In some embodiments, the fourth data may be at a granularity of an SDU. That is, each SDU that arrives at the third PDCP entity (that is, the PDCP entity corresponding to the third DRB) may be considered as one piece of fourth data. Alternatively, the fourth data may not be at a granularity of an SDU. For example, every SDU separated by several SDUs is considered as one piece of fourth data. For details, refer to the descriptions of S601b. Details are not described again.

For example, the fourth data may be visual data, tactile data, or audio data.

Using FIG. 4 as an example, the fourth data may be visual data. Using FIG. 8 as an example, the fourth data may be tactile data. Using FIG. 15 as an example, the fourth data may be data #1.

For example, in an example in which the fourth data is an SDU, S1404 includes: The PDCP entity corresponding to the third DRB receives an SDU.

It is easy to understand that the terminal device may first perform S1401, and then perform S1404. That is, the third data first arrives at the terminal device, and then the fourth data arrives at the terminal device.

It is easy to understand that, when S1402 is performed, the terminal device may perform S1402 and S1404 simultaneously, or may perform S1402 before S1404, or may perform S1404 before S1402. This is not limited in this application.

It is easy to understand that the terminal device may perform S1403 and S1404 simultaneously, or may perform S1403 before S1404, or may perform S1404 before S1403. This is not limited in this application.

It is easy to understand that the first data, the third data, and the fourth data may be data of different types. For example, the third data is video data, and the fourth data is audio data. For another example, the third data is video data, and the fourth data is tactile data. For still another example, the third data is audio data, and the fourth data is tactile data. Second, there is a synchronization requirement between the third data and the fourth data. For example, in a process of determining duration (for example, the following fourth duration) in which transmission of the fourth data is expected to be completed, refer to the third data. For details, refer to the descriptions of S1405.

S1405: The third entity of the terminal device determines the fourth duration based on the third information.

The fourth duration is described as follows:
In this application, the fourth duration is the duration in which transmission of fourth data is expected to be completed. It may be understood that the fourth duration is duration determined with reference to a synchronization requirement between the third data and the fourth data.

Using FIG. 4 as an example, the fourth data is visual data. A start moment of the fourth duration is the 5^{th} ms, that is, a moment at which the visual data arrives at the terminal device or the fourth data arrives at the PDCP entity corresponding to the third DRB. An end moment of the fourth duration is the end moment of the third duration, that is, the 20^{th} ms. If transmission of the fourth data is completed in the fourth duration, the third data can be synchronized with the fourth data.

It should be understood that the fourth duration may have another name, for example, valid transmission duration of the fourth data or a transmission delay budget of the fourth data. In this embodiment of this application, the fourth duration is used as an example for description.

The following describes a process of determining the fourth duration.

Solution 1: The fourth duration is determined based on the third information.

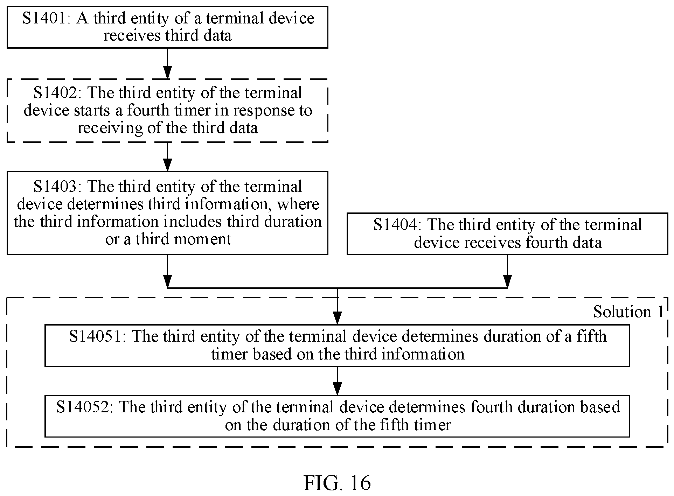

In the solution 1, as shown in FIG. 16, S1405 includes S14051 and S14052:
S14051: The third entity of the terminal device determines duration of a fifth timer based on the third information.

The fifth timer is described as follows:
For example, when the fifth timer expires, the terminal device discards the fourth data. That is, a moment at which the fifth timer expires is a moment at which the fourth data is discarded. The fifth timer may be a packet discarding timer. It should be understood that, with evolution of communication technologies, the packet discarding timer may have another name. In this application, the packet discarding timer is used as an example for description, and should not be construed as a limitation on this application.

For example, a start moment of the fifth timer (or the packet discarding timer) is a fourth moment. The fourth moment is a moment at which the fourth data arrives at the PDCP entity corresponding to the third DRB. Using FIG. 4 as an example, the fourth data is visual data, and the fourth moment is the 5^{th} ms.

For example, an end moment of the fifth timer (or the packet discarding timer) is the third moment. For the third moment, refer to the descriptions of S1402. Details are not described again. It may be understood that, in a related technology, the duration or the end moment of the fifth timer (or the packet discarding timer) is configured and obtained by using higher layer signaling (for example, RRC signaling). However, in this application, the end moment of the fifth timer (or the packet discarding timer) is obtained by using the third information.

That is, using execution of S1402 as an example, it may be understood that for a value of the fifth timer (or the packet discarding timer), refer to a real-time value of the fourth timer (or the synchronization timer). For example, the real-time value of the fourth timer (or the synchronization timer) is assigned to the fifth timer (or the packet discarding timer). That is, the value of the fifth timer (or the packet discarding timer) is not configured and obtained by using higher layer signaling (for example, RRC signaling), but is determined based on the fourth timer (or the synchronization timer).

The real-time value of the fourth timer (or the synchronization timer) may be understood as a current value of the fourth timer (or the synchronization timer) when the fifth timer (or the packet discarding timer) is started, or a current value of the fourth timer (or the synchronization timer) when the fourth data arrives at the terminal device.

S14052: The third entity of the terminal device determines the fourth duration based on the duration of the fifth timer.
The fourth duration is described as follows:
For example, a start moment of the fourth duration is the fourth moment. The fourth moment is the moment at which the fourth data arrives at the PDCP entity corresponding to the third DRB. For details, refer to the descriptions of S14051. Details are not described again.

For example, an end moment of the fourth duration is the end moment of the fifth timer (or the packet discarding timer). For the end moment of the fifth timer (or the packet discarding timer), refer to the descriptions of S14051. Details are not described again.

That is, the terminal device updates the duration of the fifth timer (or the packet discarding timer) based on the third information, and then determines the fourth duration based on the duration of the fifth timer (or the packet discarding timer). Because the third duration or the third moment indicated by the third information can meet a synchronization requirement between the third data and the fourth data, the duration of the fifth timer (or the packet discarding timer) determined based on the third information is duration that considers the synchronization requirement between the third data and the fourth data. When the fourth duration is determined based on the duration of the fifth timer (or the packet discarding timer), if transmission of the fourth data is completed in the fourth duration, synchronization between the third data and the fourth data can be implemented. In this case, when there is a synchronization requirement between a plurality of types of data, a remaining transmission delay budget of the fourth data in a DSR MAC CE may be determined based on an updated fifth timer (or packet discarding timer).

Solution 2: The fourth duration is determined based on the third information and fourth information.

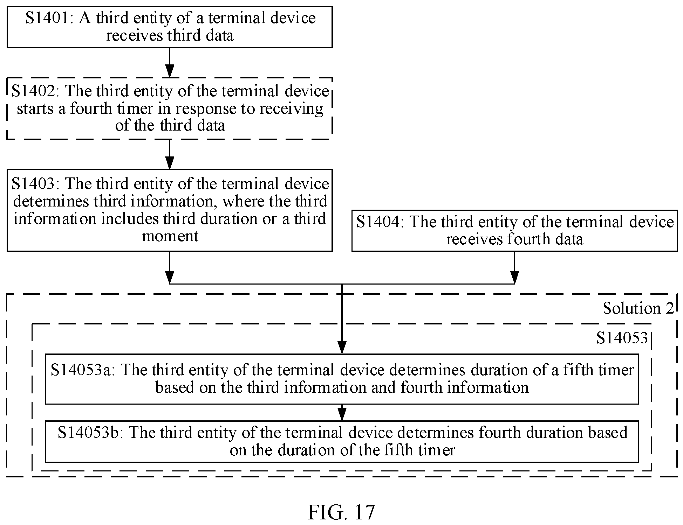

In the solution 2, as shown in FIG. 17, S1405 includes S14053:
S14053: The third entity of the terminal device determines the fourth duration based on the third information and the fourth information.

The fourth information is described as follows:
In this application, the fourth information indicates a moment at which the fourth data is discarded.

For example, the fourth information may be RRC signaling. For details, refer to the descriptions in the term explanation part. Details are not described again.

For example, the fourth information is from a network device, that is, the fourth information is information sent by the network device to the terminal device.

It should be understood that, for the third entity of the terminal device, the third entity may first receive the fourth information, and then determine the third information.

The fourth duration is described as follows:
For example, a start moment of the fourth duration is a fourth moment. The fourth moment is a moment at which the fourth data arrives at the PDCP entity corresponding to the third DRB. For details, refer to the descriptions of S14051. Details are not described again.

For example, an end moment of the fourth duration is an earlier moment of the third moment and the discard moment (that is, the moment indicated by the fourth information).

For example, when the third moment is earlier than the discard moment (that is, the moment indicated by the fourth information), the end moment of the fourth duration is the third moment.

Using FIG. 4 as an example, the third moment is the 20^{th} ms, and the discard moment (that is, the moment indicated by the fourth information) is the 35^{th} ms. The end moment of the fourth duration is the third moment, that is, the 20^{th} ms.

For another example, when the discard moment (that is, the moment indicated by the fourth information) is earlier than or equal to the third moment, the end moment of the fourth duration is the discard moment (that is, the moment indicated by the fourth information).

Using FIG. 8 as an example, the third moment is the 30^{th} ms, and the discard moment (that is, the moment indicated by the fourth information) is the 10^{th} ms. The end moment of the fourth duration is the discard moment (that is, the moment indicated by the fourth information), that is, the 10^{th} ms.

That is, in a process of determining the fourth duration by the terminal device, both the third information and the fourth information are referred to. When the fourth duration is determined with reference to the third information, the third duration or the third moment indicated by the third information can meet a synchronization requirement between the third data and the fourth data. Therefore, when the fourth duration is determined based on the third information, if transmission of the fourth data is completed in the fourth duration, synchronization between the third data and the fourth data can be implemented. In addition, when the fourth duration is determined with reference to the fourth information, the moment indicated by the fourth information can enable the terminal device to learn of a transmission delay requirement of the fourth data. Therefore, when the fourth duration is determined based on the fourth information, if transmission of the fourth data is completed in the fourth duration, the transmission delay requirement of the fourth data can be met.

In the solution 2, in a possible example, as shown in FIG. 17, S14053 includes S14053a and S14053b:
S14053a: The third entity of the terminal device determines duration of a fifth timer based on the third information and the fourth information.

The fifth timer is described as follows:
For example, the fifth timer may be a packet discarding timer. For details, refer to the descriptions of S14051. Details are not described again.

For example, a start moment of the fifth timer (or the packet discarding timer) is the fourth moment. The fourth moment is the moment at which the fourth data arrives at the PDCP entity corresponding to the third DRB. For details, refer to the descriptions of S14051. Details are not described again.

For example, an end moment of the fifth timer (or the packet discarding timer) is an earlier moment of the third moment and the discard moment (that is, the moment indicated by the fourth information).

For example, when the third moment is earlier than (or equal to) the discard moment (that is, the moment indicated by the fourth information), the end moment of the fifth timer (or the packet discarding timer) is the third moment.

For another example, when the discard moment (that is, the moment indicated by the fourth information) is earlier than or equal to the third moment, the end moment of the fifth timer (or the packet discarding timer) is the discard moment (that is, the moment indicated by the fourth information).

It may be understood that, in a related technology, the end moment of the fifth timer (or the packet discarding timer) is configured and obtained by using RRC signaling. However, in this application, the end moment of the fifth timer (or the packet discarding timer) is obtained by using the third information and the fourth information. The fourth information may be information in the foregoing higher layer signaling (for example, the RRC signaling), for example, indication information of the moment at which the fourth data is discarded.

That is, using execution of S1402 as an example, it may be understood that whether the fifth timer (or the packet discarding timer) is updated depends on a smaller value of a real-time value of the fourth timer (or the synchronization timer) and a real-time value of the fifth timer (or the packet discarding timer).

Specifically, for example, the end moment of the fifth timer (or the packet discarding timer) is configured by using the RRC signaling, and the value when the fifth timer (or the packet discarding timer) is started is configured by using the RRC signaling. When the real-time value of the fourth timer (or the synchronization timer) is less than the real-time value of the fifth timer (or the packet discarding timer), the fifth timer (or the packet discarding timer) is updated, for example, the real-time value of the fourth timer (or the synchronization timer) is assigned to the fifth timer (or the packet discarding timer). On the contrary, when the real-time value of the fourth timer (or the synchronization timer) is greater than or equal to the real-time value of the fifth timer (or the packet discarding timer), the fifth timer (or the packet discarding timer) does not need to be updated, and the real-time value of the fifth timer (or the packet discarding timer) remains unchanged.

S14053b: The third entity of the terminal device determines the fourth duration based on the duration of the fifth timer.

The fourth duration is described as follows:
For example, the start moment of the fourth duration is the fourth moment. The fourth moment is the moment at which the fourth data arrives at the PDCP entity corresponding to the third DRB. For details, refer to the descriptions of S14051. Details are not described again.

For example, the end moment of the fourth duration is the end moment of the fifth timer (or the packet discarding timer). For the end moment of the fifth timer (or the packet discarding timer), refer to the descriptions of S14053a. Details are not described again.

That is, the terminal device updates the duration of the fifth timer (or the packet discarding timer) based on the third information and the fourth information, and then determines the fourth duration based on the duration of the fifth timer (or the packet discarding timer). The third duration or the third moment indicated by the third information can meet a synchronization requirement between the third data and the fourth data, and the moment indicated by the fourth information can enable the terminal device to learn of a transmission delay requirement of the fourth data. Therefore, the duration of the fifth timer (or the packet discarding timer) determined based on the third information and the fourth information considers both the synchronization requirement between the third data and the fourth data, and the transmission delay requirement of the fourth data. When the fourth duration is determined based on the duration of the fifth timer (or the packet discarding timer), if transmission of the fourth data is completed in the fourth duration, synchronization between the third data and the fourth data can be implemented, and the transmission delay requirement of the fourth data can be met. In this case, when there is a synchronization requirement between a plurality of types of data, a remaining transmission delay budget of the fourth data in a DSR MAC CE may be determined based on an updated fifth timer (or packet discarding timer).

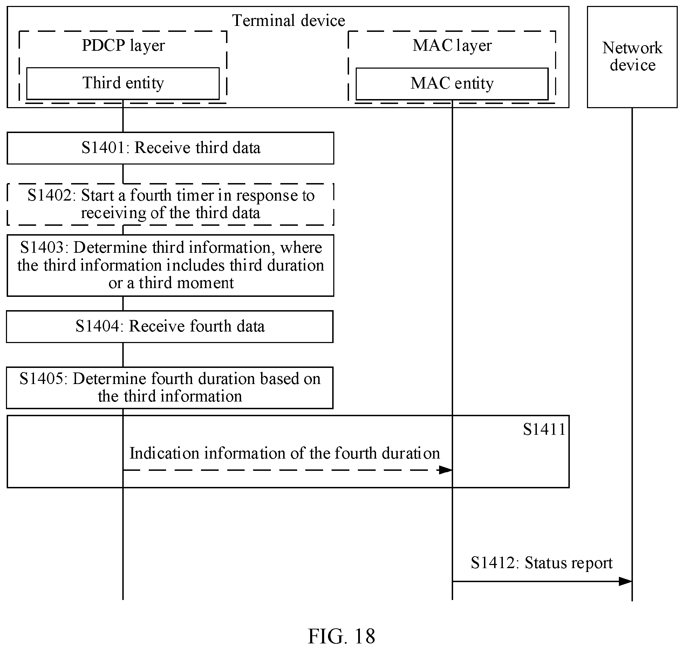

In some embodiments, a MAC entity of the terminal device further sends a status report. Delay information included in the status report is determined based on the fourth duration. For details, refer to the descriptions of S1411 and S1412 in FIG. 18.

S1411: The MAC entity of the terminal device obtains the fourth duration.

For example, after the third entity of the terminal device performs S1405, the third entity sends indication information of the fourth duration to the MAC entity. Correspondingly, the MAC entity receives the indication information of the fourth duration from the third entity. The indication information of the fourth duration may indicate the end moment of the fourth duration. Alternatively, the indication information of the fourth duration may indicate the start moment of the fourth duration and a time length of the fourth duration.

For another example, after the third entity of the terminal device performs S1403, the third entity sends the third information to the MAC entity. Correspondingly, the MAC entity receives the third information from the third entity. The MAC entity determines the fourth duration based on the third information. For example, the fourth duration is determined based on the third information, or the fourth duration is determined based on the third information and the fourth information. For details, refer to the descriptions of S1405. Details are not described again. In addition, in this case, it may be understood that the third entity does not perform S1405.

S1412: The MAC entity of the terminal device sends the status report.

For example, in one aspect, content of the status report is described as follows:
In a possible description, the status report includes delay information of the fourth data, and the delay information of the fourth data is determined based on the fourth duration.

For example, the delay information of the fourth data is a remaining transmission delay budget, and the remaining transmission delay budget is determined based on the fourth duration. For example, a start moment of the remaining transmission delay budget is a sending moment of the status report, for example, a sending moment of initial transmission. An end moment of the remaining transmission delay budget is the end moment of the fourth duration.

For another example, the delay information of the fourth data is determined based on storage duration. The storage duration is determined based on the fourth duration. For example, a start moment of the storage duration is the start moment of the fourth duration. An end moment of the storage duration is a sending moment of the status report.

In another possible description, using the fifth timer (for example, the packet discarding timer) as an example, the status report includes delay information of the fourth data, and the delay information of the fourth data is determined based on the fifth timer (for example, the packet discarding timer). For the fifth timer (for example, the packet discarding timer), refer to the descriptions of S14051 or S14053a. Details are not described again.

For example, the delay information of the fourth data is a remaining transmission delay budget, and a start moment of the remaining transmission delay budget is a sending moment of the status report, for example, a sending moment of initial transmission. An end moment of the remaining transmission delay budget is the end moment of the fifth timer (for example, the packet discarding timer).

For another example, the delay information of the fourth data is determined based on storage duration, and the storage duration is determined based on the fourth duration. For example, a start moment of the storage duration is the start moment of the fifth timer (for example, the packet discarding timer). An end moment of the storage duration is a sending moment of the status report.

That is, when the terminal device reports the status report, the delay information of the fourth data carried in the status report is determined based on the fourth duration. Because the fourth duration is duration with reference to a synchronization requirement between the third data and the fourth data, the delay information (for example, the delay information of the fourth data) determined based on the fourth duration also considers the synchronization requirement of the fourth data. That is, the terminal device can report "delay information considering a synchronization requirement between different data" to the network device. Correspondingly, if the network device schedules a transmission resource for the terminal device based on the delay information, so that transmission of the fourth data is completed in the fourth duration, the third data is synchronized with the fourth data, thereby improving user experience.

For example, in another aspect, triggering of the status report is described as follows:
In a possible description, the MAC entity of the terminal device triggers the status report based on the fourth duration.

For example, the MAC entity triggers the status report based on delay information of the fourth data. The delay information of the fourth data is determined based on the fourth duration.

For example, the delay information of the fourth data is a remaining transmission delay budget, and a start moment of the remaining transmission delay budget is a current system moment. It should be understood that the current system moment changes with time. A unit of the current system moment may be one of the following: a second, a millisecond, a slot, a subframe, a frame, and the like. This is not limited in this application.

An end moment of the remaining transmission delay budget is the end moment of the fourth duration. When the remaining transmission delay budget is less than or equal to a first threshold, the MAC entity triggers the status report. When the remaining transmission delay budget is greater than the first threshold, the MAC entity does not trigger the status report. For the first threshold, refer to the descriptions of S612 and S613. Details are not described again.

In another possible description, using the fifth timer (for example, the packet discarding timer) as an example, triggering of the status report is determined based on the fifth timer (for example, the packet discarding timer). For example, triggering of the status report is determined based on the real-time value of the fifth timer (for example, the packet discarding timer). For the fifth timer (for example, the packet discarding timer), refer to the descriptions of S14051 or S14053a. Details are not described again.

That is, triggering of the status report is determined based on the fourth duration. Because the fourth duration is duration with reference to a synchronization requirement between the third data and the fourth data, when the terminal device determines, with reference to the fourth duration, whether to trigger the status report, the network device can schedule a transmission resource for the terminal device in time based on the status report, so that transmission of the fourth data is completed in the fourth duration as much as possible, thereby implementing synchronization between the third data and the fourth data, and improving user experience.

### Embodiment 4

An example in which a third entity is a PDCP entity corresponding to a third DRB is used for description.

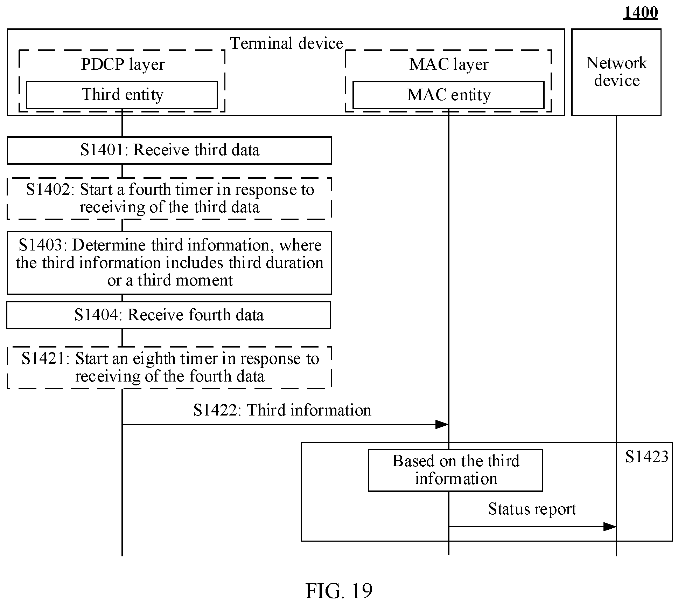

As shown in FIG. 19, the communication method 1400 provided in this embodiment of this application includes the following operations.

S1401: A third entity of a terminal device receives third data.

(Optionally) S1402: The third entity of the terminal device starts a fourth timer in response to receiving of the third data.

S1403: The third entity of the terminal device determines third information. The third information includes third duration or a third moment.

S1404: The third entity of the terminal device receives fourth data.

(Optionally) S1421: The third entity of the terminal device starts an eighth timer in response to receiving of the fourth data.

For example, when the third entity receives the fourth data, the third entity of the terminal device starts the eighth timer.

In this application, starting the eighth timer may be understood as starting or restarting the eighth timer.

The eighth timer is described as follows:
For example, the eighth timer may be a packet discarding timer. Certainly, the eighth timer may have another name. In this application, the eighth timer is used as an example for description, and should not be construed as a limitation on this application.

A start moment of the eighth timer is described as follows:
For example, the start moment of the eighth timer is a receiving moment of the fourth data.

For example, when the third entity is the PDCP entity corresponding to the third DRB, the start moment of the eighth timer is a moment at which the PDCP entity corresponding to the third DRB receives the fourth data. It may be understood that the PDCP entity corresponding to the third DRB has an eighth timer. Each time one piece of fourth data is received, the eighth timer is started or restarted.

Using FIG. 4 as an example, the start moment of the eighth timer may be the 5^{th} ms.

An end moment of the eighth timer is described as follows:
For example, the end moment of the eighth timer is indicated by higher layer signaling (for example, RRC signaling).

For the third entity, after determining the third information, the third entity performs S1422:
S1422: The third entity of the terminal device sends the third information to a MAC entity. Correspondingly, the MAC entity receives the third information from the third entity.

S1423: The MAC entity of the terminal device sends a status report based on the third information.

For example, the MAC entity determines fourth duration based on the third information, and sends the status report based on the fourth duration. The fourth duration is duration in which transmission of the fourth data is expected to be completed. For example, an end moment of the fourth duration is the third moment.

Alternatively, for example, the fourth duration (for example, a transmission delay budget of the fourth data) is determined based on the fourth timer (for example, a synchronization timer) and the eighth timer (for example, the packet discarding timer). For example, the fourth duration (for example, the transmission delay budget of the fourth data) depends on a smaller value of a real-time value of the eighth timer (for example, the packet discarding timer) and a real-time value of the fourth timer (for example, the synchronization timer). Specifically, when the real-time value of the eighth timer (for example, the packet discarding timer) is less than (or equal to) the real-time value of the fourth timer (for example, the synchronization timer), the fourth duration (for example, the transmission delay budget of the fourth data) may be determined based on the real-time value of the eighth timer (for example, the packet discarding timer). On the contrary, when the real-time value of the fourth timer (for example, the synchronization timer) is less than (or equal to) the real-time value of the eighth timer (for example, the packet discarding timer), the fourth duration (for example, the transmission delay budget of the fourth data) may be determined based on the real-time value of the fourth timer (for example, the synchronization timer). For the fourth timer (for example, the synchronization timer), refer to the descriptions of S1402. For the eighth timer (for example, the packet discarding timer), refer to the descriptions of S1421. Details are not described again.

For example, in one aspect, content of the status report is described as follows:
In a possible description, the status report includes delay information of the fourth data, and the delay information of the fourth data is determined based on the third information, or the delay information of the fourth data is determined based on the fourth duration.

For example, the delay information of the fourth data is a remaining transmission delay budget, and the remaining transmission delay budget is determined based on the fourth duration. For example, a start moment of the remaining transmission delay budget is a sending moment of the status report, for example, a sending moment of initial transmission. An end moment of the remaining transmission delay budget is the end moment of the fourth duration.

Alternatively, it may be understood that the remaining transmission delay budget is determined based on the third information. For example, a start moment of the remaining transmission delay budget is a sending moment of the status report, for example, a sending moment of initial transmission. An end moment of the remaining transmission delay budget is determined based on the third information. For example, the end moment of the remaining transmission delay budget is the third moment indicated by the third information.

For another example, the delay information of the fourth data is storage duration, and the storage duration is determined based on the fourth duration. For example, a start moment of the storage duration is the start moment of the fourth duration. An end moment of the storage duration is a sending moment of the status report.

In another possible description, using the fourth timer (for example, the synchronization timer) as an example, the status report includes delay information of the fourth data, and the delay information of the fourth data is determined based on the fourth timer (for example, the synchronization timer).

For example, the delay information of the fourth data is a remaining transmission delay budget, and the remaining transmission delay budget is determined based on the fourth timer (for example, the synchronization timer). For example, a start moment of the remaining transmission delay budget is a sending moment of the status report, for example, a sending moment of initial transmission. An end moment of the remaining transmission delay budget is the end moment of the fourth timer (for example, the synchronization timer).

That is, when the terminal device reports the status report, the delay information of the fourth data carried in the status report is determined based on the third information. Because the third information can represent a synchronization requirement between the third data and the fourth data, the delay information determined based on the third information also considers the synchronization requirement of the fourth data. That is, the terminal device can report "delay information considering a synchronization requirement between different data" to the network device. Correspondingly, if the network device schedules a transmission resource for the terminal device based on the delay information, so that the third data is synchronized with the fourth data, user experience is improved.

For example, in another aspect, triggering of the status report is described as follows:
In a possible description, the MAC entity of the terminal device triggers the status report based on the fourth duration.

For example, the status report includes delay information of the fourth data, and the delay information of the fourth data is determined based on the fourth duration. For example, the delay information of the fourth data is a remaining transmission delay budget, and a start moment of the remaining transmission delay budget is a current system moment. It should be understood that the current system moment changes with time. A unit of the current system moment may be one of the following: a second, a millisecond, a slot, a subframe, a frame, and the like. This is not limited in this application. An end moment of the remaining transmission delay budget is the end moment of the fourth duration. When the remaining transmission delay budget is less than or equal to a first threshold, the MAC entity triggers the status report. When the remaining transmission delay budget is greater than the first threshold, the MAC entity does not trigger the status report.

That the fourth duration is determined based on the third information may also be understood as that the MAC entity of the terminal device triggers the status report based on the third information.

In another possible description, using the fourth timer (for example, the synchronization timer) as an example, triggering of the status report is determined based on the fourth timer (for example, the synchronization timer). For example, triggering of the status report is determined based on the real-time value of the fourth timer (for example, the synchronization timer).

That is, triggering of the status report is determined based on the third information. Because the third information can represent a synchronization requirement between the third data and the fourth data, when the terminal device triggers sending of the status report based on the third information, the network device can schedule a transmission resource for the terminal device in time based on the status report, so that the third data and the fourth data are synchronized, thereby improving user experience.

### Embodiment 5

An example in which a fourth entity determines synchronization information (the following fifth information) is used for description.

First, a data transmission process is described as follows:
In Embodiment 5, data enters an access stratum of a terminal device in a form of a QoS flow. For example, the data first passes through a non-access stratum (non-access stratum, NAS), and then enters different DRBs through an SDAP layer. The SDAP layer is used to map data of different QoS flows to different DRBs.

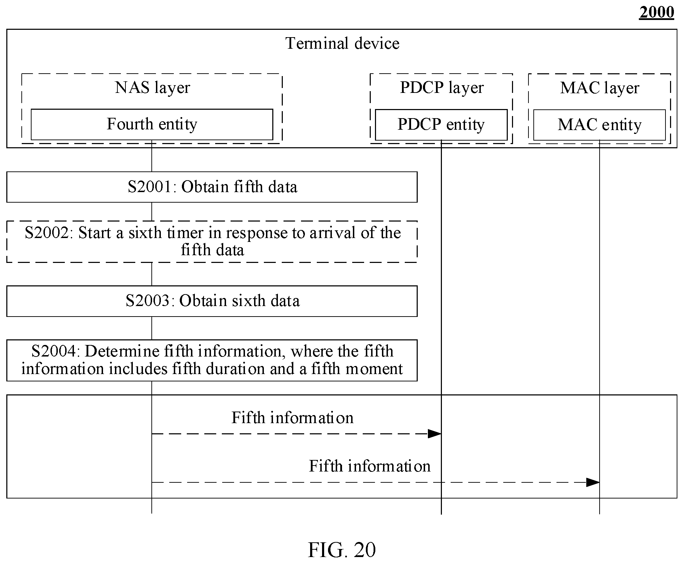

Then, with reference to FIG. 20, a communication method 2000 provided in an embodiment of this application is described as follows:
S2001: The fourth entity of the terminal device obtains fifth data.

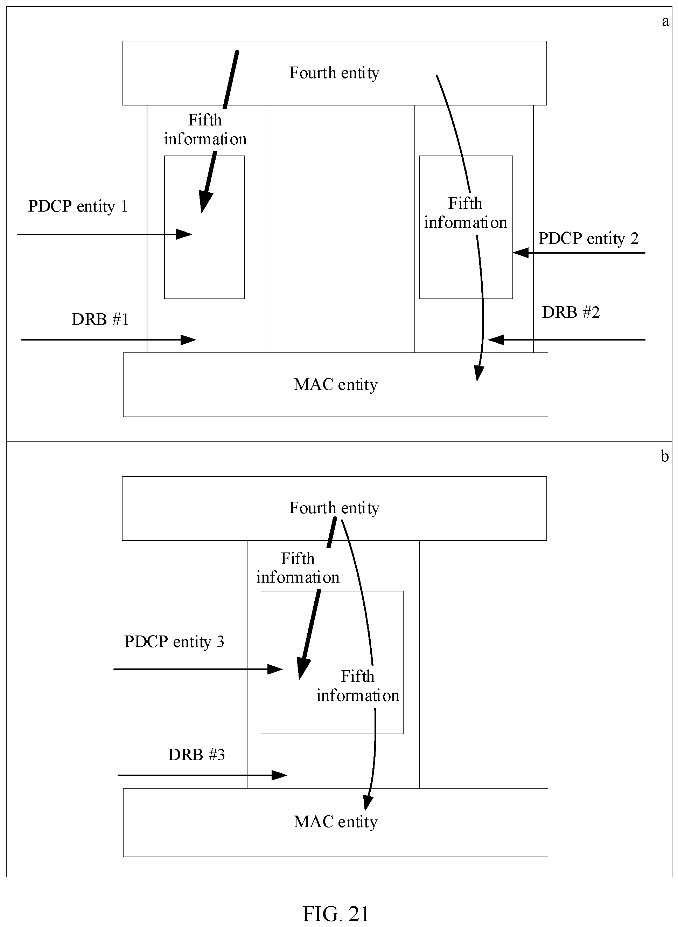

The fourth entity is an entity at the NAS layer, as shown in FIG. 21.

For example, the fifth data may be visual data, tactile data, or audio data.

For example, that the fourth entity obtains the fifth data may be understood as that the fifth data arrives at the fourth entity.

Optionally, in response to receiving of the fifth data, some related operations of the fourth entity are described:
In some embodiments, as shown in FIG. 20, the communication method 2000 in this embodiment of this application further includes S2002:
(Optionally) S2002: The fourth entity of the terminal device starts a sixth timer in response to arrival of the fifth data.

For example, when the fifth data arrives at the fourth entity, the fourth entity of the terminal device starts the sixth timer.

In this application, starting the sixth timer may be understood as starting or restarting the sixth timer.

For example, the sixth timer may be a synchronization timer. Certainly, the sixth timer may have another name. In this application, the sixth timer is used as an example for description, and should not be construed as a limitation on this application.

For example, a start moment of the sixth timer is an arrival moment of the fifth data.

It may be understood that the fourth entity has a sixth timer. Each time one piece of fifth data is received, the sixth timer is started or restarted.

Using FIG. 4 as an example, the start moment of the sixth timer may be the 0^{th} ms.

For example, duration of the sixth timer is fifth duration, or an end moment of the sixth timer is a fifth moment. A start moment of the fifth duration is a moment at which the fifth data arrives at the fourth entity. The fifth moment is an end moment of the fifth duration.

Using FIG. 4 as an example, the fifth duration may be duration from 0th ms to the 20^{th} ms, as shown in a dashed box in which "synchronization requirement" is located. The fifth moment is the 20^{th} ms, that is, an end moment of the dashed box in which "synchronization requirement" is located.

In this application, the fifth duration may be understood as follows: When the fifth data first arrives at the terminal device, a moment at which the fifth data arrives at the terminal device is used as a start moment, and transmission of sixth data is completed in the fifth duration, so that the fifth data is synchronized with the sixth data. On the contrary, if transmission of the sixth data is not completed in the fifth duration, the fifth data is not synchronized with the sixth data, affecting user experience. The moment at which the fifth data arrives at the terminal device may be understood as a moment at which the fifth data arrives at the fourth entity.

It is easy to understand that, in an example, the fifth duration may be semi-statically configured or preconfigured, for example, indicated to the fourth entity by using higher layer signaling or core network signaling, or may be determined by the terminal device. For example, a value of the fifth duration may be determined according to Table 1. For details, refer to the descriptions of a process of determining the second duration. Details are not described again.

Optionally, the duration of the sixth timer may be configured by a network device side. For details, refer to the descriptions of S1401. Details are not described again.

S2003: The fourth entity of the terminal device obtains the sixth data.

For example, the sixth data may be visual data, tactile data, or audio data.

For example, that the fourth entity obtains the sixth data may be understood as that the sixth data arrives at the fourth entity.

Using FIG. 4 as an example, the sixth data may be visual data.

It is easy to understand that the terminal device may first perform S2001, and then perform S2003. That is, the fifth data first arrives at the terminal device, and then the sixth data arrives at the terminal device.

It is easy to understand that, when S2002 is performed, the terminal device may perform S2002 and S2003 simultaneously, or may perform S2002 before S2003, or may perform S2003 before S2002. This is not limited in this application.

It is easy to understand that the first data, the fifth data, and the sixth data may be data of different types. For example, the fifth data is video data, and the sixth data is audio data. For another example, the fifth data is video data, and the sixth data is tactile data. For still another example, the fifth data is audio data, and the sixth data is tactile data. Second, there is a synchronization requirement between the fifth data and the sixth data. Based on this, the fourth entity of the terminal device further performs S2004:
S2004: The fourth entity of the terminal device determines fifth information.

For example, the fourth entity determines the fifth information based on a data type of the fifth data and a data type of the sixth data.

The fifth information is described as follows:
The fifth information includes the fifth duration or the fifth moment. The start moment of the fifth duration is the moment at which the fifth data arrives at the fourth entity, and the fifth moment is the end moment of the fifth duration. For details, refer to the descriptions of S2002.

For example, when S2002 is performed, the fourth entity determines the fifth information based on the sixth timer.

It is easy to understand that, on a fourth entity side, in an example, when the fourth entity receives the fifth data, the fourth entity determines the fifth information based on the fifth data. That is, that the fifth information is related to the fifth data may be understood as that the fifth data can trigger determining of the fifth information.

It is easy to understand that, in Embodiment 5, the fifth information may be used to determine sixth duration. For example, the fifth information is used to determine a transmission delay budget of the sixth data. For details, refer to the descriptions of S2012 or S2032. Details are not described herein.

It is easy to understand that, in Embodiment 5, the fourth entity may transfer the fifth information to a lower layer, for example, a PDCP entity at a PDCP layer or a MAC entity at a MAC layer. The following describes two cases:
Case 1: The fourth entity transfers the fifth information to the PDCP entity.

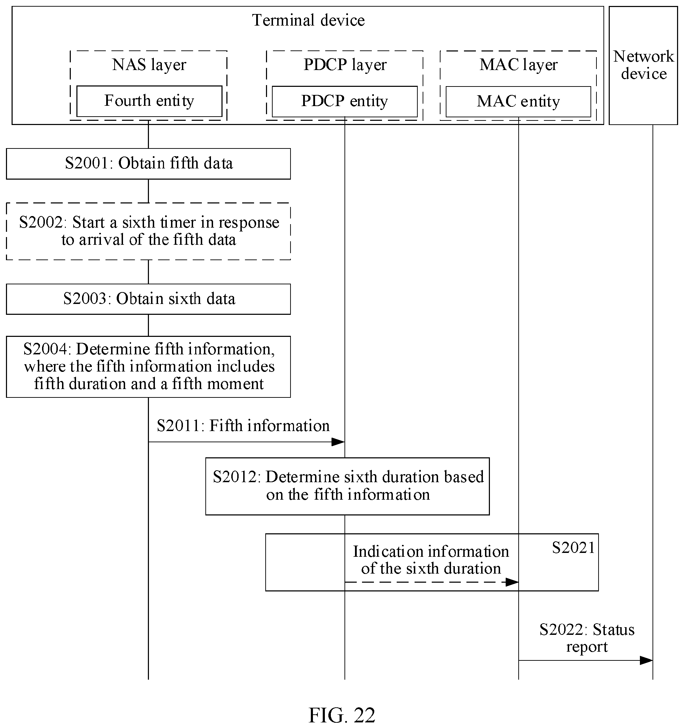

As shown in FIG. 22, the communication method 2000 provided in this embodiment of this application includes the following operations.

S2011: The fourth entity of the terminal device sends the fifth information to a fifth entity. Correspondingly, the fifth entity receives the fifth information from the fourth entity.

The fifth entity is a PDCP entity corresponding to the sixth data.

For example, in a possible implementation, the fifth data and the sixth data may belong to a same DRB. For example, the fifth data and the sixth data belong to a fourth DRB. For example, the fifth entity may be a PDCP entity corresponding to the fourth the DRB. Using FIG. 21 as an example, the fourth DRB is a DRB #3, and the fifth entity is a PDCP entity 3.

It should be understood that the fifth entity may alternatively be another entity corresponding to the fourth DRB, for example, an SDAP entity or an RLC entity. In the communication method 2000 in this application, the PDCP entity is used as an example to describe the fifth entity.

For another example, in another possible implementation, the fifth data and the sixth data may belong to different DRBs. For example, the fifth data belongs to a fifth DRB, and the sixth data belongs to a sixth DRB. For example, the fifth entity may be a PDCP entity corresponding to the fifth the DRB. Using FIG. 21 as an example, the fifth entity is a PDCP entity 1, the fifth DRB is a DRB #1, and the sixth DRB is a DRB #2.

It should be understood that the fifth entity may alternatively be another entity corresponding to the fifth DRB, for example, an SDAP entity or an RLC entity. In the communication method 2000 in this application, the PDCP entity is used as an example to describe the fifth entity.

S2012: The fifth entity of the terminal device determines the sixth duration based on the fifth information.

The sixth duration is described as follows:
In this application, the sixth duration is duration in which transmission of the sixth data is expected to be completed. It may be understood that the sixth duration is duration determined with reference to a synchronization requirement between the fifth data and the sixth data.

Using FIG. 4 as an example, the sixth data is visual data. A start moment of the sixth duration is the 5^{th} ms, that is, a moment at which the visual data arrives at the terminal device, or the sixth data arrives at the fourth entity (for example, the entity at the NAS layer) or the fifth entity (for example, the PDCP entity corresponding to the sixth data). An end moment of the sixth duration is the end moment of the fifth duration, that is, the 20^{th} ms. If transmission of the sixth data is completed in the sixth duration, the fifth data can be synchronized with the sixth data.

It should be understood that the sixth duration may have another name, for example, valid transmission duration of the sixth data or a transmission delay budget of the sixth data. In this embodiment of this application, the sixth duration is used as an example for description.

The following describes a process of determining the sixth duration in the case 1 (for details, refer to the following solution 1 and solution 2).

Solution 1: The sixth duration is determined based on the fifth information.

In the solution 1, S2012 includes the following step 1 and step 2:
Step 1: The fifth entity of the terminal device determines duration of a seventh timer based on the fifth information.

For example, when the seventh timer expires, the terminal device discards the sixth data. That is, a moment at which the seventh timer expires is a moment at which the sixth data is discarded. The seventh timer may be a packet discarding timer. It should be understood that, with evolution of communication technologies, the packet discarding timer may have another name. In this application, the packet discarding timer is used as an example for description, and should not be construed as a limitation on this application.

For example, a start moment of the seventh timer (or the packet discarding timer) is a sixth moment. The sixth moment is a moment at which the sixth data arrives at the fifth entity (for example, the PDCP entity corresponding to the sixth data).

For example, an end moment of the seventh timer (or the packet discarding timer) is the fifth moment. For the fifth moment, refer to the descriptions of S2002. Details are not described again. It may be understood that, in a related technology, the duration or the end moment of the seventh timer (or the packet discarding timer) is configured and obtained by using higher layer signaling (for example, RRC signaling). However, in this application, the end moment of the seventh timer (or the packet discarding timer) is obtained by using the fifth information.

That is, using execution of S2002 as an example, it may be understood that for a value of the seventh timer (or the packet discarding timer), refer to a real-time value of the sixth timer (or the synchronization timer). For example, the real-time value of the sixth timer (or the synchronization timer) is assigned to the seventh timer (or the packet discarding timer). That is, the value of the seventh timer (or the packet discarding timer) is not configured and obtained by using higher layer signaling (for example, RRC signaling), but is determined based on the real-time value of the sixth timer (or the synchronization timer).

Step 2: The fifth entity of the terminal device determines the sixth duration based on the duration of the seventh timer.

For example, the start moment of the sixth duration is the sixth moment. The sixth moment is the moment at which the sixth data arrives at the fifth entity (for example, the PDCP entity corresponding to the sixth data).

For example, the end moment of the sixth duration is the end moment of the seventh timer (or the packet discarding timer).

That is, the terminal device updates the duration of the seventh timer (or the packet discarding timer) based on the fifth information, and then determines the sixth duration based on the duration of the seventh timer (or the packet discarding timer). Because the fifth duration or the fifth moment indicated by the fifth information can meet a synchronization requirement between the fifth data and the sixth data, the duration of the seventh timer (or the packet discarding timer) determined based on the fifth information is duration that considers the synchronization requirement between the fifth data and the sixth data. When the sixth duration is determined based on the duration of the seventh timer (or the packet discarding timer), if transmission of the sixth data is completed in the sixth duration, synchronization between the fifth data and the sixth data can be implemented. In this case, when there is a synchronization requirement between a plurality of types of data, a remaining transmission delay budget of the sixth data in a DSR MAC CE may be determined based on an updated seventh timer (or packet discarding timer).

Solution 2: The sixth duration is determined based on the fifth information and the sixth information.

In the solution 2, S2012 includes: The fifth entity of the terminal device determines the sixth duration based on the fifth information and the sixth information.

The sixth information is described as follows:
In this application, the sixth information indicates a moment at which the sixth data is discarded.

For example, the sixth information may be RRC signaling. For details, refer to the descriptions in the term explanation part. Details are not described again.

For example, the sixth information is from a network device, that is, the sixth information is information sent by the network device to the terminal device.

It should be understood that, for the fifth entity of the terminal device, the fifth entity may first receive the fifth information and then receive the sixth information, or may first receive the sixth information and then receive the fifth information, or may receive the fifth information and the sixth information simultaneously. This is not limited in this embodiment of this application.

The sixth duration is described as follows:
For example, the start moment of the sixth duration is the sixth moment. The sixth moment is a moment at which the sixth data arrives at the fifth entity (for example, the PDCP entity corresponding to the sixth data).

For example, the start moment of the sixth duration may alternatively a moment at which the fifth data arrives at the fourth entity.

For example, the end moment of the sixth duration is an earlier moment of the fifth moment and the discard moment (that is, the moment indicated by the sixth information).

For example, when the fifth moment is earlier than the discard moment (that is, the moment indicated by the sixth information), the end moment of the sixth duration is the fifth moment.

For another example, when the discard moment (that is, the moment indicated by the sixth information) is earlier than or equal to the fifth moment, the end moment of the sixth duration is the discard moment (that is, the moment indicated by the sixth information).

That is, in a process of determining the sixth duration by the terminal device, both the fifth information and the sixth information are referred to. When the sixth duration is determined with reference to the fifth information, the fifth duration or the fifth moment indicated by the fifth information can meet a synchronization requirement between the fifth data and the sixth data. Therefore, when the sixth duration is determined based on the fifth information, if transmission of the sixth data is completed in the sixth duration, synchronization between the fifth data and the sixth data can be implemented. In addition, when the sixth duration is determined with reference to the sixth information, the moment indicated by the sixth information can enable the terminal device to learn of a transmission delay requirement of the sixth data. Therefore, when the sixth duration is determined based on the sixth information, if transmission of the sixth data is completed in the sixth duration, the transmission delay requirement of the sixth data can be met.

In the solution 2, in a possible example, that the fifth entity of the terminal device determines the sixth duration based on the fifth information and the sixth information may specifically include:
Step 3: The fifth entity of the terminal device determines duration of a seventh timer based on the fifth information and the sixth information.

The seventh timer is described as follows:
For example, the seventh timer may be a packet discarding timer.

For example, a start moment of the seventh timer (or the packet discarding timer) is a sixth moment. The sixth moment is a moment at which the sixth data arrives at the fifth entity (for example, the PDCP entity corresponding to the sixth data).

For example, an end moment of the seventh timer (or the packet discarding timer) is an earlier moment of the fifth moment and the discard moment (that is, the moment indicated by the sixth information).

For example, when the fifth moment is earlier than (or equal to) the discard moment (that is, the moment indicated by the sixth information), the end moment of the seventh timer (or the packet discarding timer) is the fifth moment.

For another example, when the discard moment (that is, the moment indicated by the sixth information) is earlier than or equal to the fifth moment, the end moment of the seventh timer (or the packet discarding timer) is the discard moment (that is, the moment indicated by the sixth information).

It may be understood that, in a related technology, the end moment of the seventh timer (or the packet discarding timer) is configured and obtained by using RRC signaling. However, in this application, the end moment of the seventh timer (or the packet discarding timer) is obtained by using the fifth information and the sixth information. The sixth information may be information in the foregoing higher layer signaling (for example, the RRC signaling), for example, indication information of the moment at which the sixth data is discarded.

That is, using execution of S2002 as an example, it may be understood that whether the seventh timer (or the packet discarding timer) is updated depends on a smaller value of a real-time value of the sixth timer (or the synchronization timer) and a real-time value of the seventh timer (or the packet discarding timer).

Specifically, for example, the end moment of the seventh timer (or the packet discarding timer) is configured by using the RRC signaling, and the value when the seventh timer (or the packet discarding timer) is started is configured by using the RRC signaling. When the real-time value of the sixth timer (or the synchronization timer) is less than the real-time value of the seventh timer (or the packet discarding timer), the seventh timer (or the packet discarding timer) is updated, for example, the real-time value of the sixth timer (or the synchronization timer) is assigned to the seventh timer (or the packet discarding timer). On the contrary, when the real-time value of the sixth timer (or the synchronization timer) is greater than or equal to the real-time value of the seventh timer (or the packet discarding timer), the seventh timer (or the packet discarding timer) does not need to be updated, and the real-time value of the seventh timer (or the packet discarding timer) remains unchanged.

Step 4: The fifth entity of the terminal device determines the sixth duration based on the duration of the seventh timer.

The sixth duration is described as follows:
For example, the start moment of the sixth duration is the sixth moment. The sixth moment is a moment at which the sixth data arrives at the fifth entity (for example, the PDCP entity corresponding to the sixth data).

For example, the start moment of the sixth duration may alternatively a moment at which the fifth data arrives at the fourth entity.

For example, the end moment of the sixth duration is the end moment of the seventh timer (or the packet discarding timer).

That is, the terminal device updates the duration of the seventh timer (or the packet discarding timer) based on the fifth information and the sixth information, and then determines the sixth duration based on the duration of the seventh timer (or the packet discarding timer). The fifth duration or the fifth moment indicated by the fifth information can meet a synchronization requirement between the fifth data and the sixth data, and the moment indicated by the sixth information can enable the terminal device to learn of a transmission delay requirement of the sixth data. Therefore, the duration of the seventh timer (or the packet discarding timer) determined based on the fifth information and the sixth information considers both the synchronization requirement between the fifth data and the sixth data, and the transmission delay requirement of the sixth data. When the sixth duration is determined based on the duration of the seventh timer (or the packet discarding timer), if transmission of the sixth data is completed in the sixth duration, synchronization between the fifth data and the sixth data can be implemented, and the transmission delay requirement of the sixth data can be met. In this case, when there is a synchronization requirement between a plurality of types of data, a remaining transmission delay budget of the sixth data in a DSR MAC CE may be determined based on an updated seventh timer (or packet discarding timer).

Further, in the case 1, the MAC entity of the terminal device may further send a status report. Delay information included in the status report is determined based on the sixth duration, and/or whether to trigger the status report is determined based on the sixth duration, as shown in FIG. 22. Details are described as follows:
S2021: The MAC entity of the terminal device obtains the sixth duration.

For example, after the fifth entity of the terminal device performs S2012, the fifth entity sends indication information of the sixth duration to the MAC entity. Correspondingly, the MAC entity receives the indication information of the sixth duration from the fifth entity. The indication information of the sixth duration may indicate the end moment of the sixth duration. Alternatively, the indication information of the sixth duration may indicate the start moment of the sixth duration and a time length of the sixth duration.

For another example, using the seventh timer (for example, the packet discarding timer) as an example, the MAC entity of the terminal device obtains the sixth duration based on the seventh timer (for example, the packet discarding timer). For example, the end moment of the seventh timer (for example, the packet discarding timer) is the end moment of the sixth duration. For the seventh timer (for example, the packet discarding timer), refer to the descriptions of step 1 or step 3 in S2012. Details are not described again.

S2022: The MAC entity of the terminal device sends the status report.

For example, in one aspect, content of the status report is described as follows:
In a possible description, the status report includes delay information of the sixth data, and the delay information of the sixth data is determined based on the sixth duration.

For example, the delay information of the sixth data is a remaining transmission delay budget, and the remaining transmission delay budget is determined based on the sixth duration. For example, a start moment of the remaining transmission delay budget is a sending moment of the status report, for example, a sending moment of initial transmission. An end moment of the remaining transmission delay budget is the end moment of the sixth duration.

For another example, the delay information of the sixth data is determined based on storage duration. The storage duration is determined based on the sixth duration. For example, a start moment of the storage duration is the start moment of the sixth duration. An end moment of the storage duration is a sending moment of the status report.

In another possible description, using the seventh timer (for example, the packet discarding timer) as an example, the status report includes delay information of the sixth data, and the delay information of the sixth data is determined based on the seventh timer (for example, the packet discarding timer). For the seventh timer (for example, the packet discarding timer), refer to the descriptions of step 1 or step 3 in S2012. Details are not described again.

For example, the delay information of the sixth data is a remaining transmission delay budget, and a start moment of the remaining transmission delay budget is a sending moment of the status report, for example, a sending moment of initial transmission. An end moment of the remaining transmission delay budget is the end moment of the seventh timer (for example, the packet discarding timer).

For another example, the delay information of the sixth data is determined based on storage duration. The storage duration is determined based on the seventh timer (for example, the packet discarding timer). For example, a start moment of the storage duration is the start moment of the seventh timer (for example, the packet discarding timer). An end moment of the storage duration is a sending moment of the status report.

That is, when the terminal device reports the status report, the delay information of the sixth data carried in the status report is determined based on the sixth duration. Because the sixth duration is duration with reference to a synchronization requirement between the fifth data and the sixth data, the delay information determined based on the sixth duration also considers the synchronization requirement of the sixth data. That is, the terminal device can report "delay information considering a synchronization requirement between different data" to the network device. Correspondingly, if the network device schedules a transmission resource for the terminal device based on the delay information, so that transmission of the sixth data is completed in the sixth duration, the fifth data is synchronized with the sixth data, thereby improving user experience.

For example, in another aspect, triggering of the status report is described as follows:
In a possible description, the MAC entity of the terminal device triggers the status report based on the sixth duration.

For example, the status report includes delay information of the sixth data, and the delay information of the sixth data is determined based on the sixth duration. For example, the delay information of the sixth data is a remaining transmission delay budget, and a start moment of the remaining transmission delay budget is a current system moment. It should be understood that the current system moment changes with time. A unit of the current system moment may be one of the following: a second, a millisecond, a slot, a subframe, a frame, and the like. This is not limited in this application. An end moment of the remaining transmission delay budget is the end moment of the sixth duration. When the remaining transmission delay budget is less than or equal to a first threshold, the MAC entity triggers the status report. When the remaining transmission delay budget is greater than the first threshold, the MAC entity does not trigger the status report. For the first threshold, refer to the descriptions of S612 and S613. For the remaining transmission delay budget, refer to the descriptions in the foregoing paragraphs. Details are not described again.

In another possible description, using the seventh timer (for example, the packet discarding timer) as an example, the MAC entity of the terminal device triggers the status report based on the seventh timer (for example, the packet discarding timer). For the seventh timer (for example, the packet discarding timer), refer to the descriptions of step 1 or step 3 in S2012. Details are not described again.

After the status report is triggered, when there is an available uplink resource, if triggering of the status report is not canceled, or the uplink resource cannot carry a data amount of all data indicated by the status report, the status report is sent on the uplink resource.

Case 2: The fourth entity transfers the fifth information to the MAC entity.

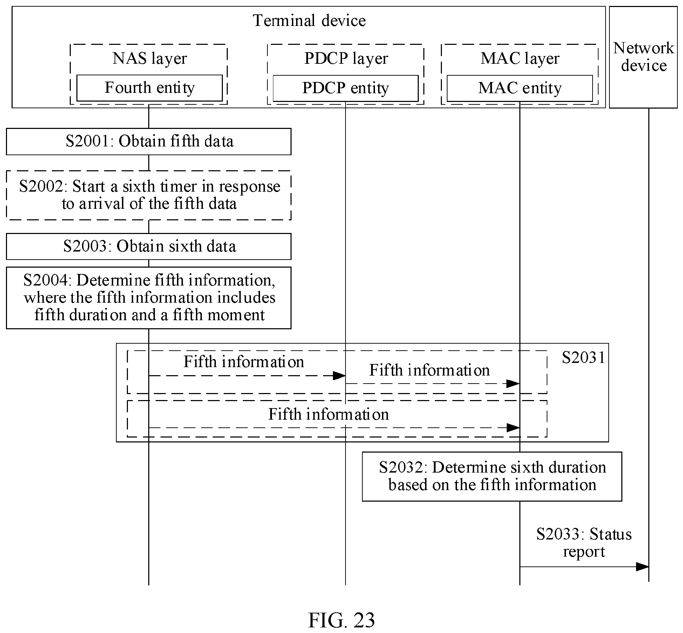

As shown in FIG. 23, the communication method 2000 provided in this embodiment of this application includes the following operations.

S2031: The fourth entity of the terminal device sends the fifth information to the MAC entity. Correspondingly, the MAC entity receives the fifth information from the fourth entity.

For example, the fourth entity sends the fifth information to the MAC entity by using a DRB. Correspondingly, the MAC entity receives the fifth information from the fourth entity by using the DRB. The DRB for transmitting the fifth information is described as follows: If the fifth data and the sixth data belong to a same DRB, for example, a fourth DRB, the DRB may be the fourth DRB. If the fifth data and the sixth data belong to different DRBs, for example, the fifth data belongs to a fifth DRB, and the sixth data belongs to a sixth DRB, the DRB may be the fifth DRB, or may be the sixth DRB.

It should be noted that the PDCP entity in FIG. 23 is described as follows: If the fifth data and the sixth data belong to the same DRB, for example, the fourth DRB, the PDCP entity in FIG. 23 is a PDCP entity corresponding to the fourth DRB. If the fifth data and the sixth data belong to different DRBs, for example, the fifth data belongs to a fifth DRB, and the sixth data belongs to a sixth DRB, the PDCP entity in FIG. 23 may be a PDCP entity corresponding to the fifth DRB, or may be a PDCP entity corresponding to the sixth DRB.

For another example, the fourth entity sends the fifth information to the MAC entity by using control plane signaling. Correspondingly, the MAC entity receives the fifth information from the fourth entity by using the control plane signaling.

Alternatively, the fourth entity may send the fifth information to the MAC entity in another manner. How the MAC entity obtains the fifth information is not limited in this application.

S2032: The MAC entity of the terminal device determines the sixth duration based on the fifth information.

For example, the sixth duration is determined based on the fifth information, or the sixth duration is determined based on the fifth information and the sixth information. The sixth information indicates a moment at which the sixth data is discarded. For details, refer to the descriptions of S2012. Details are not described again.

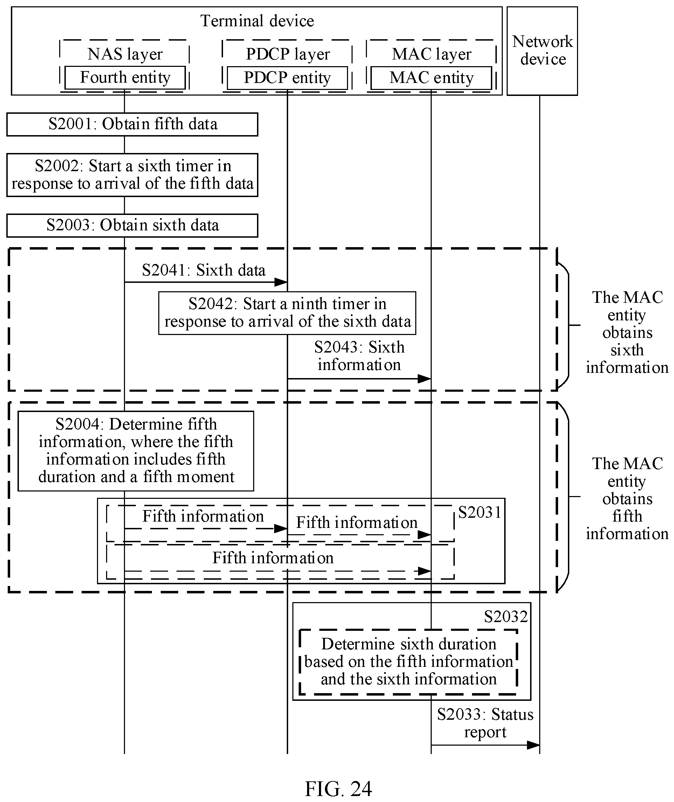

It should be noted that, in Embodiment 5, the sixth information indicates the moment at which the sixth data is discarded. The sixth information in S2012 may be RRC signaling, and the sixth information in S2032 may be determined based on a ninth timer (for example, a packet discarding timer). For details, refer to descriptions in FIG. 24. Details are not described herein.

Further, in the case 2, the terminal device may further perform S2033:
S2033: The MAC entity of the terminal device sends the status report. The status report includes delay information of the sixth data, the delay information of the sixth data is determined based on the sixth duration, and/or triggering of the status report is determined based on the sixth duration.

In one aspect, in terms of content of the status report, for example, the delay information of the sixth data is a remaining transmission delay budget, and the remaining transmission delay budget is determined based on the sixth duration. For example, a start moment of the remaining transmission delay budget is a sending moment of the status report, for example, a sending moment of initial transmission. An end moment of the remaining transmission delay budget is the end moment of the sixth duration.

In another aspect, in terms of triggering of the status report, for example, the delay information of the sixth data is a remaining transmission delay budget, and the remaining transmission delay budget is determined based on the sixth duration. For example, a start moment of the remaining transmission delay budget is a current system moment. An end moment of the remaining transmission delay budget is the end moment of the sixth duration.

The following provides possible alternative descriptions:
In a possible alternative description, using the sixth timer (for example, the synchronization timer) as an example, the status report includes delay information of the sixth data, and the delay information of the sixth data is determined based on the sixth timer (for example, the synchronization timer).

For example, the delay information of the sixth data is a remaining transmission delay budget, and the remaining transmission delay budget is determined based on the sixth timer (for example, the synchronization timer). For example, a start moment of the remaining transmission delay budget is a sending moment of the status report, for example, a sending moment of initial transmission. An end moment of the remaining transmission delay budget is the end moment of the sixth timer (for example, the synchronization timer).

In this case, it may also be understood that triggering of the status report is determined based on the sixth timer (for example, the synchronization timer).

In another possible alternative description, using the sixth timer (for example, the synchronization timer) and the ninth timer (for example, the packet discarding timer) as an example, the status report includes delay information of the sixth data, and the delay information of the sixth data is determined based on the sixth timer (for example, the synchronization timer) and the ninth timer (for example, the packet discarding timer).

For example, the delay information of the sixth data is a remaining transmission delay budget, and the remaining transmission delay budget is determined based on the sixth timer (for example, the synchronization timer) and the ninth timer (for example, the packet discarding timer). For example, a start moment of the remaining transmission delay budget is a sending moment of the status report, for example, a sending moment of initial transmission. An end moment of the remaining transmission delay budget is an earlier moment of the end moment of the sixth timer (for example, the synchronization timer) and an end moment of the ninth timer (for example, the packet discarding timer).

In this case, it may also be understood that triggering of the status report is determined based on the sixth timer (for example, the synchronization timer) and the ninth timer (for example, the packet discarding timer).

For details about the sixth timer (for example, the synchronization timer), refer to the descriptions in 2002.

The ninth timer (for example, the packet discarding timer) is described as follows:
As shown in FIG. 24, for the fourth entity, after obtaining the sixth data, the fourth entity performs the following operations:
S2041: The fourth entity sends the sixth data to the PDCP entity. Correspondingly, the PDCP entity receives the sixth data from the fourth entity.
S2042: The PDCP entity starts a ninth timer in response to receiving of the sixth data.

For example, when the PDCP entity receives the sixth data, the PDCP entity starts the ninth timer.

In this application, starting the ninth timer may be understood as starting or restarting the ninth timer.

The ninth timer is described as follows:
For example, the ninth timer may be a packet discarding timer. Certainly, the ninth timer may have another name. In this application, the ninth timer is used as an example for description, and should not be construed as a limitation on this application.

A start moment of the ninth timer is described as follows:
For example, the start moment of the ninth timer is a receiving moment of the sixth data.

An end moment of the ninth timer is described as follows:
For example, the end moment of the ninth timer is indicated by higher layer signaling (for example, RRC signaling).

S2043: The PDCP entity sends the sixth information to the MAC entity. Correspondingly, the MAC entity receives the sixth information from the PDCP entity.

The sixth information indicates a moment at which the sixth data is discarded.

For example, the sixth information is determined based on the ninth timer. For example, the sixth information indicates the end moment of the ninth timer.

It should be noted that, in this application, the PDCP entity that performs S2041 to S2043 may be understood as the PDCP entity corresponding to the sixth data. Specifically, if the fifth data and the sixth data belong to a same DRB, for example, a fourth DRB, the PDCP entity in FIG. 24 is a PDCP entity corresponding to the fourth DRB. If the fifth data and the sixth data belong to different DRBs, for example, the fifth data belongs to a fifth DRB, and the sixth data belongs to a sixth DRB, the PDCP entity in FIG. 24 is a PDCP corresponding to the fifth DRB.

It may be understood that, in the foregoing embodiments, methods and/or steps implemented by the first entity of the terminal device may be implemented by a component (for example, a processor, a chip, a chip system, a circuit, a logic module, or software) that can be used in the first entity; or methods and/or steps implemented by the second entity of the terminal device may be implemented by a component (for example, a processor, a chip system, a circuit, a logic module, or software) that can be used in the second entity. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used.

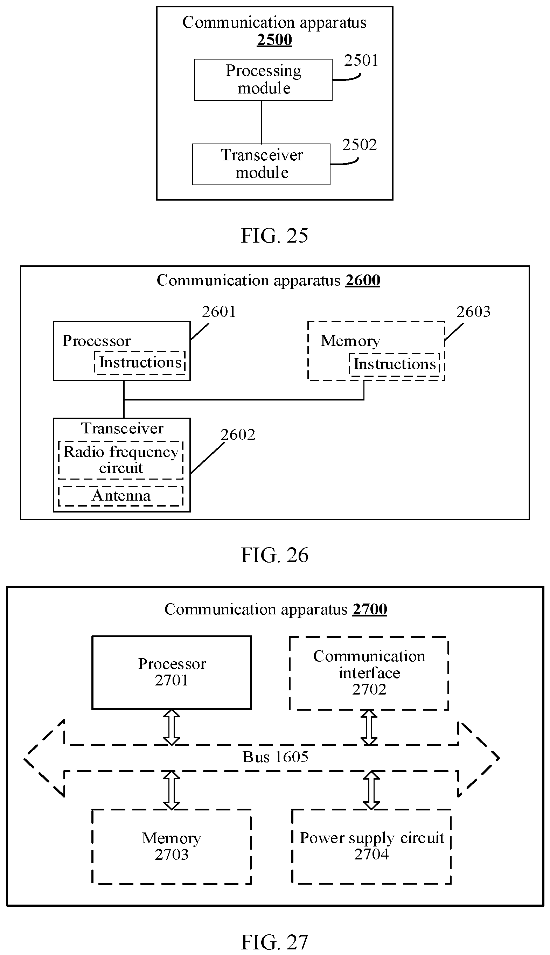

FIG. 25 is a diagram of a structure of a communication apparatus 2500. The communication apparatus 2500 includes a processing module 2501 and a transceiver module 2502. The communication apparatus 2500 may be configured to implement a function of the first entity of the terminal device. Alternatively, the communication apparatus 2500 may be configured to implement a function of the second entity of the terminal device.

In some embodiments, the communication apparatus 2500 may further include a storage module (which is not shown in FIG. 25), configured to store program instructions and data.

In some embodiments, the transceiver module 2502 may also be referred to as a transceiver unit, configured to implement a sending function and/or a receiving function. The transceiver module 2502 may include a transceiver circuit, a transceiver machine, a transceiver, or a communication interface.

In some embodiments, the transceiver module 2502 may include a receiving module and a sending module, which are respectively configured to perform receiving and sending (such as receiving and/or sending) steps performed by the first entity or the second entity of the terminal device in the foregoing method embodiments, and/or configured to support another process of the technology described in this specification; and the processing module 2501 may be configured to perform processing (such as determining) steps performed by the first entity or the second entity in the foregoing method embodiments, and/or configured to support another process of the technology described in this specification.

All related content of the steps in the foregoing method embodiments may be cited in function descriptions of the corresponding functional modules. Details are not described herein again.

Optionally, in this application, that the transceiver module receives/sends information may also be understood as that the processing module receives/sends information via the transceiver module. That the processing module receives/sends information via the transceiver module may also be understood as that the processing module controls the transceiver module to receive/send information. Alternatively, that the processing module sends information through the transceiver module may be understood as that the processing module outputs information to the transceiver module, and the transceiver module sends the information; and that the processing module receives information through the transceiver module may be understood as that the transceiver module receives information and inputs the information to the processing module.

In this application, the communication apparatus 2500 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 2500 in FIG. 25 is a chip or a chip system, a function/an implementation process of the transceiver module 2502 may be implemented by an input/output interface (or a communication interface) of the chip or the chip system, and a function/an implementation process of the processing module 2501 may be implemented by a processor (or a processing circuit) of the chip or the chip system.

The communication apparatus 2500 provided in embodiments can perform the foregoing methods. Therefore, for technical effects that can be achieved by the communication apparatus 2500, refer to the foregoing method embodiments. Details are not described herein again.

In a possible product form, the first entity or the second entity of the terminal device in embodiments of this application may alternatively be implemented by the following: one or more field programmable gate arrays (field programmable gate array, FPGA), a programmable logic device (programmable logic device, PLD), a controller, a state machine, gate logic, a discrete hardware component, any other appropriate circuit, or any combination of circuits that can perform the functions described in this application.

In another possible product form, entities of the terminal device in embodiments of this application, such as the first entity to the fifth entity, may be implemented by a general bus architecture.

For ease of description, FIG. 26 is a diagram of a structure of a communication apparatus 2600 according to an embodiment of this application. The communication apparatus 2600 includes a processor 2601 and a transceiver 2602. The communication apparatus 2600 may be one of the first entity to the fifth entity of the terminal device, or a chip or a chip system thereof.

FIG. 26 shows only main components of the communication apparatus 2600. In addition to the processor 2601 and the transceiver 2602, the communication apparatus 2600 may further include a memory 2603 and an input/output apparatus (not shown in the figure).

Optionally, the processor 2601 is mainly configured to: process a communication protocol and communication data, control the entire communication apparatus to execute a software program and process data of the software program. The memory 2603 is mainly configured to store the software program and data. The transceiver 2602 may include a radio frequency circuit and an antenna. The radio frequency circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

Optionally, the processor 2601, the transceiver 2602, and the memory 2603 may be connected through a communication bus.

After the communication apparatus is powered on, the processor 2601 may read the software program in the memory 2603, interpret and execute instructions of the software program, and process data of the software program. When data needs to be sent wirelessly, the processor 2601 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 2601. The processor 2601 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

In some embodiments, in terms of hardware implementation, a person skilled in the art may figure out that the communication apparatus 2500 may use a form of the communication apparatus 2600 shown in FIG. 26.

In an example, functions/implementation processes of the processing module 2501 in FIG. 25 may be implemented by the processor 2601 in the communication apparatus 2600 shown in FIG. 26 by invoking the computer-executable instructions stored in the memory 2603. Functions/implementation processes of the transceiver module 2502 in FIG. 25 may be implemented by the transceiver 2602 in the communication apparatus 2600 shown in FIG. 26.

In still another possible product form, any one of the first entity to the fifth entity of the terminal device in this application may use a composition structure shown in FIG. 27, or include a component shown in FIG. 27. FIG. 27 is a diagram of composition of a communication apparatus 2700 according to this application.

As shown in FIG. 27, the communication apparatus 2700 includes at least one processor 2701. Optionally, the communication apparatus further includes a communication interface 2702.

When related program instructions are executed in the at least one processor 2701, the apparatus 2700 may be caused to implement the method provided in any one of the foregoing embodiments and any possible design thereof. Alternatively, the processor 2701 is configured to implement the method provided in any one of the foregoing embodiments and any possible design thereof by using a logic circuit or by executing code instructions.

The communication interface 2702 may be configured to receive program instructions and transmit the program instructions to the processor. Alternatively, the communication interface 2702 may be configured to perform communication interaction between the communication apparatus 2700 and another communication device, for example, exchange control signaling and/or service data. For example, the communication interface 2702 may be configured to receive a signal from an apparatus other than the communication apparatus 2700 and transmit the signal to the processor 2701, or send a signal from the processor 2701 to a communication apparatus other than the communication apparatus 2700.

Optionally, the communication interface 2702 may be code and/or data read/write interface circuit, or the communication interface 2702 may be a signal transmission interface circuit between a communication processor and a transceiver, or may be a pin of a chip.

Optionally, the communication apparatus 2700 may further include at least one memory 2703, and the memory 2703 may be configured to store required related program instructions and/or data. It should be noted that the memory 2703 may be independent of the processor 2701, or may be integrated with the processor 2701. The memory 2703 may be located inside the communication apparatus 2700, or may be located outside the communication apparatus 2700. This is not limited.

Optionally, the communication apparatus 2700 may further include a power supply circuit 2704, and the power supply circuit 2704 may be configured to supply power to the processor 2701. The power supply circuit 2704 may be located in a same chip as the processor 2701, or may be located in a chip other than a chip in which the processor 2701 is located.

Optionally, the communication apparatus 2700 may further include a bus 2705, and parts of the communication apparatus 2700 may be interconnected through the bus 2705.

In some embodiments, in terms of hardware implementation, a person skilled in the art may figure out that the communication apparatus 2500 shown in FIG. 25 may use a form of the communication apparatus 2700 shown in FIG. 27.

In an example, functions/implementation processes of the processing module 2501 in FIG. 25 may be implemented by the processor 2701 in the communication apparatus 2700 shown in FIG. 27 by invoking the computer-executable instructions stored in the memory 2703. Functions/implementation processes of the transceiver module 2502 in FIG. 25 may be implemented by the communication interface 2702 in the communication apparatus 2700 shown in FIG. 27.

It should be noted that the structure shown in FIG. 27 does not constitute a specific limitation on the first entity or the second entity. For example, in some other embodiments of this application, any one of the first entity to the fifth entity may include more or fewer components than those shown in the figure, or combine some components, or split some components, or have different component arrangements. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in embodiments of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete device. This is not specifically limited in embodiments of this application.

This application further provides a computer-readable storage medium. The computer-readable storage medium stores computer programs or instructions. When the computer programs or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the claims of this application and their equivalent technologies.

## Claims

1. A communication method, wherein the method comprises:
receiving first information from a first data radio bearer DRB, wherein the first information is related to first data, and the first data belongs to the first DRB; and
determining first duration based on the first information, wherein the first duration is duration in which transmission of second data is expected to be completed, the second data belongs to a second DRB, and the first duration is used to determine delay information of a status report, and/or the first duration is used to trigger sending of the status report.

2. The method according to claim 1, wherein
the first information indicates second duration or a first moment;
a start moment of the second duration is a moment at which the first data arrives at a packet data convergence protocol PDCP entity corresponding to the first DRB, and the first moment is an end moment of the second duration; and
the second duration is used to determine the first duration.

3. The method according to claim 2, wherein
determining the first duration based on the first information comprises:
determining duration of a first timer based on the first information, wherein a start moment of the first timer is a second moment, the second moment is a moment at which the second data arrives at a PDCP entity corresponding to the second DRB, and an end moment of the first timer is the first moment; and
determining the first duration based on the duration of the first timer, wherein a start moment of the first duration is the second moment, and an end moment of the first duration is the end moment of the first timer.

4. The method according to claim 2, wherein the method further comprises:
starting a second timer in response to receiving of the first information; and
determining the first duration based on the first information comprises:
determining the first duration based on a value of the second timer, wherein
an end moment of the second timer is the first moment; and
a start moment of the first duration is a second moment, the second moment is a moment at which the second data arrives at a PDCP entity corresponding to the second DRB, and an end moment of the first duration is the end moment of the second timer.

5. The method according to claim 2, wherein determining the first duration based on the first information comprises: determining the first duration based on the first information and second information, wherein the second information indicates a moment at which the second data is discarded.

6. The method according to claim 5, wherein the second information is from a network device.

7. The method according to claim 5 or 6, wherein
a start moment of the first duration is a second moment, and the second moment is a moment at which the second data arrives at a PDCP entity corresponding to the second DRB; and
when the first moment is earlier than the discard moment, an end moment of the first duration is the first moment; or
when the discard moment is earlier than or equal to the first moment, an end moment of the first duration is the discard moment.

8. The method according to claim 5 or 6, wherein
determining the first duration based on the first information and the second information comprises:
determining duration of a first timer based on the first information and the second information, wherein a start moment of the first timer is a second moment, and the second moment is a moment at which the second data arrives at a PDCP entity corresponding to the second DRB; and when the first moment is earlier than the discard moment, an end moment of the first timer is the first moment; or when the discard moment is earlier than or equal to the first moment, an end moment of the first timer is the discard moment; and
determining the first duration based on the duration of the first timer, wherein a start moment of the first duration is the second moment, and an end moment of the first duration is the end moment of the first timer.

9. The method according to claim 5 or 6, wherein the method further comprises:
starting a second timer (a synchronization timer of the second data) in response to receiving of the first information; and
determining the first duration based on the first information and the second information comprises:
determining the first duration based on a value of a first timer and a value of the second timer; or determining the first duration based on an end moment of a first timer and an end moment of the second timer, wherein
a start moment of the first timer is a second moment, the second moment is a moment at which the second data arrives at a PDCP entity corresponding to the second DRB, and the end moment of the first timer is the discard moment;
the end moment of the second timer is the first moment; and
a start moment of the first duration is the second moment; and when the first moment is earlier than the discard moment, an end moment of the first duration is the end moment of the second timer; or when the discard moment is earlier than or equal to the first moment, an end moment of the first duration is the end moment of the first timer.

10. The method according to claim 4 or 9, wherein
a start moment of the second timer is a receiving moment of the first information.

11. The method according to claim 3, 8, or 9, wherein the first timer is a packet discarding timer.

12. The method according to any one of claims 1 to 11, wherein when the first duration is used to determine the delay information of the status report, the method further comprises:
sending the status report through a medium access control MAC entity, wherein the MAC entity is configured to process the second data.

13. The method according to claim 12, wherein
the delay information of the status report comprises a remaining transmission delay budget, and the remaining transmission delay budget is determined based on the first duration.

14. The method according to claim 13, wherein
a start moment of the remaining transmission delay budget is a sending moment of the status report; and
an end moment of the remaining transmission delay budget is the end moment of the first duration.

15. The method according to any one of claims 1 to 14, wherein the method further comprises:
receiving a first threshold from the network device; and
that the first duration is used to trigger sending of the status report comprises: when the remaining transmission delay budget determined based on the first duration is less than or equal to the first threshold, the first duration is used to trigger sending of the status report, wherein the remaining transmission delay budget determined based on the first duration is a remaining transmission delay budget of the first data.

16. The method according to any one of claims 1 to 11, wherein
the method is performed by a first entity; and the first entity is the PDCP entity corresponding to the second DRB, or the first entity is the MAC entity that processes the second data.

17. A communication method, wherein the method comprises:
sending first information, wherein
the first information is related to first data, and the first data belongs to a first data radio bearer DRB; and
the first information is used to determine first duration, the first duration is duration in which transmission of second data is expected to be completed, and the second data belongs to a second DRB.

18. The method according to claim 17, wherein
the first information indicates second duration or a first moment;
a start moment of the second duration is a moment at which the first data arrives at a packet data convergence protocol PDCP entity corresponding to the first DRB, and the first moment is an end moment of the second duration; and
the second duration is used to determine the first duration.

19. The method according to claim 18, wherein the method further comprises:
starting a third timer in response to receiving of the first data, wherein
duration of the third timer is the second duration, or an end moment of the third timer is the first moment.

20. The method according to claim 19, wherein a start moment of the third timer is a moment at which the first data arrives at the PDCP entity corresponding to the first DRB.

21. The method according to claim 18, wherein the method further comprises:
receiving first indication information, wherein
the first indication information indicates to start or restart a third timer; and
duration of the third timer is the second duration, or an end moment of the third timer is the first moment.

22. The method according to claim 21, wherein sending the first information comprises: sending the first information based on the first indication information.

23. The method according to any one of claims 19 to 22, wherein the method further comprises:
receiving configuration information, wherein the configuration information is used to configure the duration of the third timer to the second duration.

24. The method according to any one of claims 17 to 20, wherein
the method is performed by a second entity, and the second entity is the PDCP entity corresponding to the first DRB.

25. The method according to any one of claims 17 to 24, wherein the first DRB and the second DRB are a same DRB.

26. A communication method, wherein the method comprises:
obtaining third information, wherein the third information is related to third data, and the third data belongs to a third data radio bearer DRB; and
determining fourth duration based on the third information, wherein the fourth duration is duration in which transmission of fourth data is expected to be completed, the fourth data belongs to the third DRB, and the fourth duration is used to determine delay information of a status report, and/or the fourth duration is used to trigger sending of the status report.

27. The method according to claim 26, wherein
the third information indicates third duration or a third moment;
a start moment of the third duration is a moment at which the third data arrives at a packet data convergence protocol PDCP entity corresponding to the third DRB, and the third moment is an end moment of the third duration; and
the third duration is used to determine the fourth duration.

28. The method according to claim 27, wherein
determining the fourth duration based on the third information comprises:
determining duration of a fifth timer based on the third information, wherein a start moment of the fifth timer is a fourth moment, the fourth moment is a moment at which the fourth data arrives at the PDCP entity corresponding to the third DRB, and an end moment of the fifth timer is the third moment; and
determining the fourth duration based on the duration of the fifth timer, wherein a start moment of the fourth duration is the fourth moment, and an end moment of the fourth duration is the end moment of the fifth timer.

29. The method according to claim 27, wherein determining the fourth duration based on the third information comprises: determining the fourth duration based on the third information and fourth information, wherein the fourth information indicates a moment at which the fourth data is discarded.

30. The method according to claim 29, wherein
a start moment of the fourth duration is a fourth moment, and the fourth moment is a moment at which the fourth data arrives at the PDCP entity corresponding to the third DRB; and
when the third moment is earlier than the moment at which the fourth data is discarded, an end moment of the fourth duration is the third moment; or
when the moment at which the fourth data is discarded is earlier than or equal to the third moment, an end moment of the fourth duration is the moment at which the fourth data is discarded.

31. The method according to claim 29 or 30, wherein
determining the fourth duration based on the third information and the fourth information comprises:
determining duration of a fifth timer based on the third information and the fourth information, wherein a start moment of the fifth timer is the fourth moment, and the fourth moment is the moment at which the fourth data arrives at the PDCP entity corresponding to the third DRB; and when the third moment is earlier than the moment at which the fourth data is discarded, an end moment of the fifth timer is the third moment; or when the moment at which the fourth data is discarded is earlier than or equal to the third moment, an end moment of the fifth timer is the moment at which the fourth data is discarded; and
determining the fourth duration based on the duration of the fifth timer, wherein the start moment of the fourth duration is the fourth moment, and the end moment of the fourth duration is the end moment of the fifth timer.

32. The method according to claim 28 or 31, wherein the fifth timer is a packet discarding timer.

33. The method according to any one of claims 27 to 32, wherein
obtaining the third information comprises:
starting a fourth timer in response to receiving of the third data; and
determining the third information based on the fourth timer, wherein duration of the fourth timer is the third duration, or an end moment of the fourth timer is the third moment.

34. The method according to claim 33, wherein a start moment of the fourth timer is the moment at which the third data arrives at the PDCP entity corresponding to the third DRB.

35. A communication method, wherein the method comprises:
obtaining second indication information, wherein the second indication information indicates fourth duration, the fourth duration is determined based on third information, the third information is related to third data, the third data belongs to a third data radio bearer DRB, and the fourth duration is duration in which transmission of fourth data is expected to be completed; and
determining delay information of a status report based on the fourth duration, and/or triggering sending of the status report based on the fourth duration.

36. The method according to claim 35, wherein
the delay information of the status report comprises a remaining transmission delay budget, and the remaining transmission delay budget is determined based on the fourth duration.

37. The method according to claim 36, wherein
a start moment of the remaining transmission delay budget is a sending moment of the status report; and
an end moment of the remaining transmission delay budget is an end moment of the fourth duration.

38. The method according to any one of claims 35 to 37, wherein the fourth data belongs to the third DRB, or a DRB to which the fourth data belongs is different from the third DRB.

39. The method according to any one of claims 35 to 38, wherein the method further comprises:
receiving a first threshold from a network device; and
triggering sending of the status report based on the fourth duration comprises:
determining the remaining transmission delay budget based on the fourth duration, and when the remaining transmission delay budget is less than or equal to the first threshold, triggering sending of the status report, wherein the remaining transmission delay budget is a remaining transmission delay budget of the fourth data.

40. A communication method, wherein the method comprises:
receiving third information, wherein the third information is related to third data, and the third data belongs to a third data radio bearer DRB;
determining fourth duration based on the third information, wherein the fourth duration is duration in which transmission of fourth data is expected to be completed; and
determining delay information of a status report based on the fourth duration, and/or triggering sending of the status report based on the fourth duration.

41. The method according to claim 40, wherein
the third information indicates third duration or a third moment;
a start moment of the third duration is a moment at which the third data arrives at a packet data convergence protocol PDCP entity corresponding to the third DRB, and the third moment is an end moment of the third duration; and
the third duration is used to determine the fourth duration.

42. The method according to claim 41, wherein determining the fourth duration based on the third information comprises: determining the fourth duration based on the third information and fourth information, wherein the fourth information indicates a moment at which the fourth data is discarded.

43. The method according to claim 42, wherein
a start moment of the fourth duration is a fourth moment, and the fourth moment is a moment at which the fourth data arrives at the PDCP entity corresponding to the third DRB; and
when the third moment is earlier than the moment at which the fourth data is discarded, an end moment of the fourth duration is the third moment; or
when the moment at which the fourth data is discarded is earlier than or equal to the third moment, an end moment of the fourth duration is the moment at which the fourth data is discarded.

44. The method according to claim 42 or 43, wherein the third information is determined based on a fourth timer, wherein duration of the fourth timer is the third duration, or an end moment of the fourth timer is the third moment.

45. The method according to claim 44, wherein a start moment of the fourth timer is the moment at which the third data arrives at the PDCP entity corresponding to the third DRB.

46. The method according to any one of claims 40 to 45, wherein
the delay information of the status report comprises a remaining transmission delay budget, and the remaining transmission delay budget is determined based on the fourth duration.

47. The method according to claim 46, wherein
a start moment of the remaining transmission delay budget is a sending moment of the status report; and
an end moment of the remaining transmission delay budget is the end moment of the fourth duration.

48. The method according to any one of claims 40 to 47, wherein the method further comprises:
receiving a first threshold from a network device; and
triggering sending of the status report based on the fourth duration comprises:
determining the remaining transmission delay budget based on the fourth duration, and when the remaining transmission delay budget is less than or equal to the first threshold, triggering sending of the status report, wherein the remaining transmission delay budget is a remaining transmission delay budget of the fourth data.

49. The method according to any one of claims 40 to 48, wherein the fourth data belongs to the third DRB, or a DRB to which the fourth data belongs is different from the third DRB.

50. The method according to any one of claims 26 to 49, wherein
the third information comprises fifth information, the third data comprises fifth data, the fourth data comprises sixth data, and the fourth duration comprises sixth duration.

51. A communication apparatus, comprising a processor and a memory, wherein the processor is coupled to the memory, the memory stores program instructions, and when the program instructions stored in the memory are executed by the processor, the method according to any one of claims 1 to 16, the method according to any one of claims 17 to 25, the method according to any one of claims 26 to 34, the method according to any one of claims 35 to 39, or the method according to any one of claims 40 to 50 is implemented.

52. A chip, comprising a processor and a memory coupled to the processor, wherein the memory stores a computer program, and when the processor executes the computer program, the method according to any one of claims 1 to 16, the method according to any one of claims 17 to 25, the method according to any one of claims 26 to 34, the method according to any one of claims 35 to 39, or the method according to any one of claims 40 to 50 is implemented.

53. A computer-readable storage medium, storing a computer program or instructions, wherein when the computer program or the instructions are executed, the method according to any one of claims 1 to 16, the method according to any one of claims 17 to 25, the method according to any one of claims 26 to 34, the method according to any one of claims 35 to 39, or the method according to any one of claims 40 to 50 is implemented.
